(19) Europäisches Patentamt / European Patent Office / Office européen des brevets

(11) **EP 4 289 284 A1**

(12) **EUROPEAN PATENT APPLICATION**
published in accordance with Art. 153(4) EPC

(43) Date of publication:
**13.12.2023 Bulletin 2023/50**

(21) Application number: **22763267.6**

(22) Date of filing: **01.03.2022**

(51) International Patent Classification (IPC):
**A23L 5/00** (2016.01)   **A23L 7/109** (2016.01)

(52) Cooperative Patent Classification (CPC):
**A23L 5/00; A23L 7/109**

(86) International application number:
**PCT/JP2022/008646**

(87) International publication number:
**WO 2022/186212 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.03.2021   JP 2021031884**

(71) Applicant: **Mizkan Holdings Co., Ltd.**
**Handa-shi, Aichi 475-8585 (JP)**

(72) Inventor: **TANGE, Yusuke**
**Handa-shi, Aichi 475-8585 (JP)**

(74) Representative: **Hasegawa, Kan**
**Patentanwaltskanzlei Hasegawa**
**Untere Hauptstraße 56**
**85354 Freising (DE)**

(54) **METHOD FOR PRODUCING STARCH-CONTAINING SOLID COMPOSITION FOR HEAT-COOKING**

(57) The present invention provides a method that makes it possible to easily produce, with general-purpose equipment, and without the need for specialized production equipment having high-temperature/high-pressure resistance, a starch-containing solid composition for heat-cooking, which is unlikely to crack over time when stored at normal temperatures, and the internal components of which are unlikely to seep out after heat-cooking. This method utilizes an extruder that comprises: a screw that is turned by a motor; a barrel that surrounds the outer periphery of the screw; a feeder that is attached to the base side of the barrel and that is for loading a food material; and a die part that is attached to the tip side of the barrel and that is for discharging the food material after kneading while shaping the food material. The screw has, in order from the base side to the tip side, at least a flight section and a kneading section. The length of the flight section is not less than 50% of the entire length of the screw. The length of the kneading section is less than 50% of the entire length of the screw. The method produces a solid composition via the following stages (i)-(iii). (i) A stage for preparing a composition that satisfies the following conditions (1)-(6). (1) Dietary fiber content is not less than 3.0 mass% in terms of wet mass. (2) Starch content is not less than 10.0 mass% in terms of wet mass. (3) Protein content is not less than 3.0 mass% in terms of wet mass. (4) Dry mass basis moisture content is not less than 25 mass%. (5) The degree of gelatinization of the starch is not less than 40 mass%. (6) The specific surface area per unit volume after ultrasonic treatment is not less than 0.10 m2/mL. (ii) A stage for conveying the composition of stage (i) with the flight section of the screw. (iii) A stage for kneading the composition, after conveyance by the flight section in stage (ii), with the kneading section of the screw, at an average temperature of less than 100°C, and with an applied pressure of not less than 1.0 MPa.

EP 4 289 284 A1

**Description**

**TECHNICAL FIELD**

The present invention relates to a method for producing a starch-containing solid composition for heat cooking.

**BACKGROUND ART**

Solid compositions such as noodles for cooking containing starch have been known in the past. However, these compositions have the problem that as time passes during storage at room temperature, cracks tend to occur inside the composition, and ingredients inside the composition tend to leak out after cooking.

As a means to solve this problem, Patent Literature 1 discloses a method for producing a solid composition for heat cooking that does not bind easily even after cooking for a long time by processing raw materials containing pulse under high-temperature and high-pressure conditions.

Although this method is an excellent technology, there is room for improvement in that it requires strong kneading of the composition under high-temperature conditions of 100°C or higher, and in order to prevent swelling in the dough composition during strong kneading under such high temperatures, special manufacturing equipment is required that is highly sealed and can withstand not only high temperatures but also high-pressure conditions.

**LIST OF CITATIONS**

**Patent Literature**

[Patent Literature 1] WO2020/166713 A

**SUMMARY OF INVENTION**

**PROBLEM TO BE SOLVED BY THE INVENTION**

The present invention was made in view of these problems. Accordingly, an objective of the present invention is to provide a method for easily producing, easily and without using special manufacturing equipment with high temperature and pressure resistance, a starch-containing solid composition for heat cooking that is less likely to crack over time during storage at room temperature and less likely to leak components inside the composition after heat cooking.

**MEANS TO SOLVE THE PROBLEM**

Through intensive efforts in view of various plant starches and their processing conditions, the present inventors have conceived of using an extruder with a screw that has a flight section and a kneading section from the base side to the tip side, the ratio of the length of the flight section to the total length being 50% or more, and preparing a composition having a predetermined makeup and having a degree of gelatinization and a specific surface area each being a predetermined value or more, conveying the prepared composition by the flight section of the extruder screw, and then kneading the composition by the kneading section of the extruder screw under an average temperature of less than 100°C and under a pressure higher than a predetermined value. The present inventors have also found that this method enables the formation of a strong continuous starch structure despite kneading under low-temperature conditions of less than 100°C, and makes it possible to produce a solid composition containing starch for cooking that is less likely to crack during storage at room temperature and less likely to leach components inside the composition after heat cooking, thereby completing the invention.

Specifically, aspects of the present invention include the following.

[Aspect 1] A method for producing a starch-containing solid composition for heat cooking using an extruder comprising: a screw to be rotated by a motor; a barrel surrounding the circumference of the screw; a feeder, attached to the base side of the barrel, for injecting a food material; and a die section, attached to the tip side of the barrel, for molding and discharging a kneaded food material,

wherein the screw includes, from the base side to the tip side, at least a flight section and a kneading section, wherein with respect to the total length of the screw, the ratio of the length of the flight section is 50% or more, or 55% or more, or 60% or more, or 65% or more, while the upper limit is not restricted, but may be typically less than 100%, or 99% or less, or 98% or less, and the ratio of the length of the kneader section is less than 50%, or 45% or less, or 40% or less, while the lower limit is not restricted, but may be typically more than 0%, 1% or more, 2% or more, or 4% or more, or 6% or more, or 8% or more, or 10% or more, the method comprising the steps of:

(i) preparing a composition with

(1) a dietary fiber content of in terms of wet mass basis 3.0 mass % or more, or 4.0 mass % or more, or 5.0 mass % or more, or 6.0 mass % or more, or 7.0 mass % or more, or 8.0 mass % or more, or 9.0 mass % or more, or 10 mass % or more, or although not restricted, e.g., typically 40 mass % or less, or 30 mass % or less,

(2) a starch content of in terms of wet mass basis 10.0 mass % or more, or 15 mass % or more, or 20 mass % or more, or 25 mass % or more, or 30 mass % or more, or 35 mass % or more, or 40 mass % or more, or 45 mass % or more, or 50 mass % or more, while the upper limit may be, although is not restricted to, e.g., typically 80 mass % or less, or 75 mass % or less, or 70 mass % or less,

(3) a protein content of in terms of wet mass basis 3.0 mass % or more, or 4.0 mass % or more, or 5.0 mass % or more, or 6.0 mass % or more, or 7.0 mass % or more, or 8.0 mass % or more, or 9.0 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more, while the upper limit may be, although is not restricted to, e.g., typically 40 mass % or less, or 30 mass % or less,

(4) a dry mass basis moisture content of 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, while the upper limit may be, although is not restricted to, e.g., typically 200 mass % or less, or 175 mass % or less, or 150 mass % or less,

(5) a degree of gelatinization of starch of 40 mass % or more, or 50 mass % or more, or 60 mass % or more, or 70 mass % or more, or 80 mass % or more, or 90 mass % or more, while the upper limit may be, although is not restricted to, typically 100 mass % or less, and

(6) a specific surface area per unit volume after ultrasonication of 0. 10m$^2$/mL or more, or 0.15m$^2$/mL or more, or 0.20m$^2$/mL or more, or 0.25m$^2$/mL or more, especially 0.30m$^2$/mL or more, while the upper limit may be, although is not restricted to, typically 2.5m$^2$/mL or less, or 2.2m$^2$/mL or less, or 2.0m$^2$/mL or less;

(ii) conveying the composition from step (i) by the flight section of the screw step, optionally the ratio of the length of the flight section to the total length of the flight section in step (ii) may be 50% or more, or 60% or more, or 70% or more, or 80% or more, or 90% or more, while the upper limit may be, although is not restricted to, typically 100%, or 100% or less; and

(iii) kneading the composition conveyed by the flight section from step (ii) by the kneader section of the screw at an average temperature of less than 100°C, or 99°C or less, or 98°C or less, or 97°C or less, or 96°C or less, or 95°C or less, while the lower limit may be, although is not restricted to, typically 40°C or more, particularly 45°C or more, or 50°C or more, or 55°C or more, and a pressurized condition of 1.0 MPa or more.

[Aspect 2] The method according to Aspect 1, wherein the kneader section is located at a position near the tip side end point of the screw.

[Aspect 3] The method according to Aspect 1 or 2, wherein the kneading at step (iii) is carried out under a condition with a specific mechanical energy (SME) value of 300kJ/kg or more, or 320kJ/kg or more, or 330kJ/kg or more, or 340kJ/kg or more or 350kJ/kg or more, or 360kJ/kg or more, or 370kJ/kg or more, or 380kJ/kg or more, or 390kJ/kg or more, or 400kJ/kg or more, while the upper limit may be, although is not restricted to, typically 5000kJ/kg or less, or 4000kJ/kg or less, or 3000kJ/kg or less, or 2000kJ/kg or less.

[Aspect 4] The method according to any one of Aspects 1 to 3, further comprising the step of:

(iv) lowering the degree of gelatinization in the composition after the kneading at step

(iii) by 6 mass % or more, or 7 mass % or more, or 8 mass % or more, or 9 mass % or more, particularly 10 mass % or more lowering, or 15 mass % or more lowering, or 20 mass % or more, while the upper limit may be, although is not restricted to, typically 90 mass % or less, or 80 mass % or less, or 70 mass % or less.

[Aspect 5] The method according to Aspect 4, wherein the lowering of the degree of gelatinization at step (iv) is carried out by treating a composition with a dry mass basis moisture content of 25 mass % or more, optionally with a composition temperature of 80°C or less, or 70°C or less, or 60°C or less, or 50°C or less, or 40°C or less, or 30°C or less, or 20°C or less, or 10°C or less, while the lower limit of the temperature may be, although is not restricted to, typically more than 0°C, or 4°C or more and an ambient humidity (RH%) of 60 RH% or more, or 70 RH% or more, or 80RH%, while the upper limit may be, although is not restricted to, typically 100 RH% or less, for a treatment time of 0.1 hour or more, or 0.2 hours or more, or 0.3 hours or more, or 0.4 hours or more, or 0.5 hours or more, or 0.6 hours or more, or 0.7 hours or more, or 0.8 hours or more, or 0.9 hours or more, or 1.0 hours or more, while the upper limit may be, although is not restricted to, typically 20 hours or less, or 15 hours or less, or 10 hours or less.

[Aspect 6] The method according to any one of Aspects 1 to 5, further comprising the step of:

(v) drying the composition after the kneading at step (iii) until the lowering ratio before and after the treatment defined by {(the dry mass basis moisture content in the composition before the drying treatment) - (the dry mass basis moisture content in the composition after the drying treatment) }/(the dry mass basis moisture content in the composition before the drying treatment) becomes 5% or more, or 10% or more, or 15% or more, or 20% or more, or 25% or more, or 30% or more, or 35% or more, or 40% or more, or 45% or more, especially 50% or more, while the upper limit may be, although is not restricted to, e.g., typically 100% or less, or 95% or less.

[Aspect 7] The method according to any one of Aspects 1 to 6, wherein the starch contained in the composition from step (i) is derived from an edible plant that have been pre-treated to a maximum temperature reached of 100°C or more, or 110°C or more, or 120°C or more, while the upper limit may be, although is not restricted to, typically 200°C or less, or 180°C or less, under water-containing conditions with a dry mass basis moisture content of 25 mass % or more.

[Aspect 8] The method according to any one of Aspects 1 to 7, wherein when the composition from step (i) is subjected to [Treatment A] followed by ultrasonication, the resulting particle diameter distribution $d_{90}$ is 450μm or less, or 400μm or less, or 350μm or less, or 300μm or less, or 250μm or less, or 200μm or less, or 150μm or less, or 100μm or less, or 90μm or less, or 80μm or less, or 70μm or less, or 60μm or less, or 50μm or less, while the lower limit may be, although is not restricted to, typically 1μm or more, more preferably 3μm or more.

[Treatment A] 6 mass % aqueous suspension of the composition is treated with 0.4 volume % of protease and 0.02 mass % of α-amylase at 20°C for 3 days.

[Aspect 9] The method according to any one of Aspects 1 to 8, wherein when the composition from step (i) is subjected to isothermal treatment at 90°C for 15 minutes in 40-fold mass of water and then to [Procedure a] below, and the resulting product is subjected to measurement under [Condition A] below to obtain a molecular weight distribution curve in an interval with molecular weight logarithms of 5.0 or more but less than 8.0 (hereinafter referred to as "MWDC$_{5.0-8.0}$"), the ratio of the area under the curve in an interval with molecular weight logarithms of 5.0 or more but less than 6.5 to the area under the entire curve (hereinafter referred to as "AUC1") is 70% or less, or 65% or less, or less than 65%, or 60% or less, while the lower limit may be, although is not restricted to, typically 10% or more, or 15% or more.

[Procedure a] 2.5 mass % aqueous dispersion liquid of the composition is crushed and subjected to proteolytic enzyme treatment, and an ethanol-insoluble and dimethyl sulfoxide-soluble component is obtained.

[Condition A] The treated product from the [Procedure a] above is dissolved into 1M aqueous solution of sodium hydroxide at a concentration of 0.10 mass % and allowed to stand at 37 °C for 30 minutes, then combined with an equal mass of water and an equal mass of eluent, and subjected to filtration with a 5-μm filter, and 5mL of the filtrate is subjected to gel filtration chromatography to thereby obtain a molecular weight distribution.

[Aspect 10] The method according to Aspect 9, wherein in the molecular weight distribution curve (MWDC$_{5.0-8.0}$) of the composition from step (i), the ratio of the area under the curve in an interval with molecular weight logarithms of 6.5 or more but less than 8.0 to the area under the entire curve (hereinafter referred to as "AUC2") is 0% or more, or 35% or more, or 40% or more, or 45% or more, while the upper limit may be, although is not restricted to, typically 90% or less, or 85% or less.

[Aspect 11] The method according to Aspect 9 or 10, wherein when the composition from step (i) is subjected to the [Procedure a] above, and the resulting product is subjected to measurement under the [Condition A] above to obtain a molecular weight distribution curve in an interval with molecular weight logarithms of 6.5 or more but less than 9.5 (hereinafter referred to as "MWDC$_{6.5-9.5}$"), the ratio of the area under the curve in an interval with molecular weight logarithms of 6.5 or more but less than 8.0 to the area under the entire curve (hereinafter referred to as "AUC3") is 30% or more, or 35% or more, particularly 40% or more, or 50% or more, or 60% or more, or 70% or more, or 80% or more, while the upper limit may be, although is not restricted to, typically 100% or less, or 98% or less.

[Aspect 12] The method according to any one of Aspects 9 to 11, wherein when the composition from step (i) is subjected to the [Procedure a] above, and the resulting product is subjected to measurement under the [Condition A] above to obtain a molecular weight distribution curve in an interval with molecular weight logarithms of 3.5 or more but less than 6.5 (hereinafter referred to as "MWDC$_{3.5-6.5}$"), the ratio of the area under the curve in an interval with molecular weight logarithms of 3.5 or more but less than 5.0 to the area under the entire curve (hereinafter referred to as "AUC4") is 10% or more, or 15% or more, or 20% or more, or 25% or more, or 30% or more, or 35% or more, or 40% or more, while the upper limit may be, although is not restricted to, e.g., typically 70% or less, or 60% or less, or 50% or less, or 45% or less.

[Aspect 13] The method according to any one of Aspects 1 to 12, wherein forced exhaust is carried out at any step prior to extrusion at the die section, or prior to the flight section, or prior to the feeder, or prior to injection of a raw material.

[Aspect 14] The method according to any one of Aspects 1 to 13, wherein the composition from step (i) satisfies the requirement(s) (a) and/or (b) below.

(a) When 6 mass % suspension of a crushed product of the composition is observed, the number of starch grain structures observed is 300/mm$^2$ or less, or 250/mm$^2$ or less, or 200/mm$^2$ or less, or 150/mm$^2$ or less, or 100/mm$^2$ or less, or 50/mm$^2$ or less, or 30/mm$^2$ or less, or 10/mm$^2$ or less, or 0/mm$^2$.

(b) When 14 mass % of composition crushed product water slurry is subjected to measurement with a rapid visco-analyzer with elevating the temperature from 50°C to 140°C at a rate of 12.5°C/min, the peak temperature of gelatinization obtained is less than 120°C, or 115°C or less, or 110°C or less, or 105°C or less, or 100°C or less, or 95°C or less, or 90°C or less, or 85°C or less, or 80°C or less, while the lower limit may be, although is not restricted to, typically more than 50°C, or 55°C or more, or 60°C or more.

[Aspect 15] The method according to any one of Aspects 1 to 14, wherein the degree of gelatinization of starch in the composition after the lowering of the degree of gelatinization at step (iv) is 99 mass % or less, or 98 mass % or less, or 95 mass % or less, or 90 mass % or less, or 85 mass % or less, or 80 mass % or less, or 75 mass % or less, or 70 mass % or less, while the lower limit may be, although is not limited to, typically 5 mass % or more, particularly 10 mass % or more, or 15 mass % or more, or 20 mass % or more, or 25 mass % or more, or 30 mass % or more, or 35 mass % or more, or 40 mass % or more, or 45 mass % or more, especially 50 mass % or more.

[Aspect 16] The method according to any one of Aspects 1 to 15, wherein the composition comprises an edible plant.

[Aspect 17] The method according to Aspect 16, wherein the ratio of the starch content contained in the edible plant to total starch content in the composition is 30 mass % or more, or 40 mass % or more, or 50 mass % or more, or 60 mass % or more, or 70 mass % or more, or 80 mass % or more, or 90 mass % or more, while the upper limit is not restricted and may typically be 100 mass % or less, in terms of dry mass basis.

[Aspect 18] The method according to Aspect 16 or 17, wherein the edible plant is pulse and/or cereal.

[Aspect 19] The method according to Aspect 18, wherein the pulse is one or more species of pulse selected from Pisum, Phaseolus, Cajanus, Vigna, Vicia, Cicer, Glycine and Lens species.

[Aspect 20] The method according to Aspect 18, wherein the cereal is one or more species of cereal selected from awa (foxtail millet), hie (Japanese millet), kibi (common millet), sorghum, rye, oat, hatomugi (job's tear), corn, buckwheat, amaranthus, and quinoa.

[Aspect 21] The method according to any one of Aspects 18 to 20, wherein the produced composition contains pulse and/or cereal at a ratio of 10 mass % or more or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, while the upper limit may be, although is not restricted to, 100 mass % or less, or 95 mass % or less, in terms of dry mass basis.

[Aspect 22] The method according to any one of Aspects 1 to 21, wherein the produced composition is a non-swollen product, optionally the density of the composition may be 1.0g/cm$^3$ or more, or 1.1g/cm$^3$ or more, or 1.2g/cm$^3$ or more, while the upper limit may be, although is not restricted to, typically less than 3.0g/cm$^3$, or less than 2.0g/cm$^3$.

[Aspect 23] The method according to any one of Aspects 1 to 22, wherein the degree of unevenness of the flow channel cross-section in the die section is 0.1 or more.

[Aspect 24] The method according to any one of Aspects 1 to 23, further comprising the step of:

(vi) after at least step (iii), crushing the resulting composition to prepare a crushed composition.

[Aspect 25] The method according to Aspect 24, further comprising the step of:

(vii) after step (vi), agglomerating the resulting crushed composition to prepare a crushed composition agglomerate.

[Aspect 26] A starch-containing food crushed product for use in preparation of the composition from step (i) of the method according to any one of Aspects 1 to 25, comprising:

(1) a dietary fiber content of in terms of wet mass basis 3.0 mass % or more, or 4.0 mass % or more, or 5.0 mass % or more, or 6.0 mass % or more, or 7.0 mass % or more, or 8.0 mass % or more, or 9.0 mass % or more, or 10 mass % or more, or although not restricted, e.g., typically 40 mass % or less, or 30 mass % or less;

(2) a starch content of in terms of wet mass basis 10.0 mass % or more, or 15 mass % or more, or 20 mass % or more, or 25 mass % or more, or 30 mass % or more, or 35 mass % or more, or 40 mass % or more, or 45 mass % or more, or 50 mass % or more, while the upper limit may be, although is not restricted to, e.g., typically 80 mass % or less, or 75 mass % or less, or 70 mass % or less;

(3) a protein content of in terms of wet mass basis 3.0 mass % or more, or 4.0 mass % or more, or 5.0 mass % or more, or 6.0 mass % or more, or 7.0 mass % or more, or 8.0 mass % or more, or 9.0 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more, while the upper limit may be, although is not restricted to, e.g., typically 40 mass % or less, or 30 mass % or less;

(4) a dry mass basis moisture content of less than 25 mass %, or less than 20 mass %, or less than 15 mass %, or less than 10 mass %, while the lower limit may be, although is not restricted to, e.g., 0.5 mass % or more, or 1 mass % or more, or 2 mass % or more;

(5) a degree of gelatinization of starch of 40 mass % or more, or 50 mass % or more, or 60 mass % or more, or 70 mass % or more, or 80 mass % or more, or 90 mass % or more, while the upper limit may be, although is not restricted to, typically 100 mass % or less; and

(6) a specific surface area per unit volume after ultrasonication of 0. $10m^2$/mL or more, or $0.15m^2$/mL or more, or $0.20m^2$/mL or more, or $0.25m^2$/mL or more, especially $0.30m^2$/mL or more, while the upper limit may be, although is not restricted to, typically $2.5m^2$/mL or less, or $2.2m^2$/mL or less, or $2.0m^2$/mL or less.

[Aspect 27] The starch-containing food crushed product according to Aspect 26, which may especially be a crushed product of pulse and/or crushed product of cereal, wherein the pulse is one or more species of pulse selected from Pisum, Phaseolus, Cajanus, Vigna, Vicia, Cicer, Glycine and Lens species.

[Aspect 28] The starch-containing food crushed product according to Aspect 26 or 27, wherein the cereal is one or more species of cereal selected from awa (foxtail millet), hie (Japanese millet), kibi (common millet), sorghum, rye, oat, hatomugi (job's tear), corn, buckwheat, amaranthus, and quinoa.

## EFFECT OF THE INVENTION

The present invention makes it possible to easily produce, easily and without using special manufacturing equipment with high temperature and pressure resistance, a starch-containing solid composition for heat cooking that is less likely to crack over time during storage at room temperature and less likely to leak components inside the composition after heat cooking.

## BRIEF EXPLANATION OF FIGURES

[Figure 1] Figure 1 is a schematic cross-sectional view of an example configuration of an extruder used in the production method according to Embodiment A of the present invention.

[Figure 2] Figure 2 is a schematic side view of an example configuration of a screw used in an extruder according to Embodiment A shown in Figure 1.

[Figure 3] Figure 3 is a schematic cross-sectional view of an example configuration of an extruder used in the production method according to Embodiment B of the present invention.

[Figure 4] Figure 4 is a schematic side view of an example configuration of a screw used in an extruder according to Embodiment B shown in Figure 3.

## DESCRIPTION OF EMBODIMENTS

The present invention will now be described based on specific embodiments. These embodiments should not be construed to limit the scope of the present invention. All references, including patent publications, unexamined patent publications, and non-patent publications cited in this specification, can be incorporated by reference in their entirety for all purposes.

An embodiment of the present invention relates to a method for producing a starch-containing solid composition for heat cooking with specific properties (hereinafter also referred to as "the starch-containing solid composition of the present invention" or "the starch-containing solid paste composition of the present invention" or "the composition of the present invention") using a specific extruder (hereinafter also referred to as "the production method of the present invention"). The following description will be made first on the features of the specific extruder for use in the production method of the present invention (hereinafter also referred to as "the extruder of the present invention"), and then on the features of the production method of the present invention using the extruder of the present invention.

s

[I. Extruder]

(Configuration of the extruder)

Typical extruders include uniaxial extruders and biaxial extruders, of which uniaxial extruders may preferably be used in the production method of the present invention. Apparatuses generally referred to as extruders (especially those referred to as "extruders" or "single screw extruders" English-speaking countries) encompass those that merely have a mixer or kneader function, but such an extrusion apparatus is not preferred because it cannot provide strong kneading that is one of the features of the production method of the present invention, making it difficult to form the characteristic composition structure that is to be created by the production method of the present invention.

The extruder of the present invention includes: a screw to be rotated by a motor; a barrel surrounding the circumference of the screw; a feeder, attached to the base side of the barrel, for injecting a food material; and a die section attached to the tip side of the barrel. The screw has a flight section and a kneading section from the base side to the tip side (i.e., toward the extrusion direction).

According to the prior art described in the aforementioned Patent Literature 1, since most of the stages using the extruder are carried out under high temperature and/or high pressure, it is necessary to have sufficient temperature and pressure resistance. However, the production method of the present invention is carried out at a relatively low temperature of less than 100°C, and the required pressure conditions, as well as for each of the aforementioned elements comprising the extruder of the present invention described above, must have sufficient temperature and pressure resistance, depending on their function and the temperature and pressure required for the stage in which they are used.

Examples of configurations of the extruder for use in the production method of the present invention will be described in detail below using schematic figures. However, these figures are merely examples of extruders that can be used for the production method of the present invention from the viewpoint of facilitating the understanding of the invention. The extruder that can be used for the production method of the present invention is in no way restricted by these figures. In addition, the scales and aspect ratios, etc., in these figures are also specified simply for the sake of convenience of explanation and for the limitations of the paper. The scales and aspect ratios of the extruder that can be used in the production method of the present invention are not limited in any way to those shown in these figures.

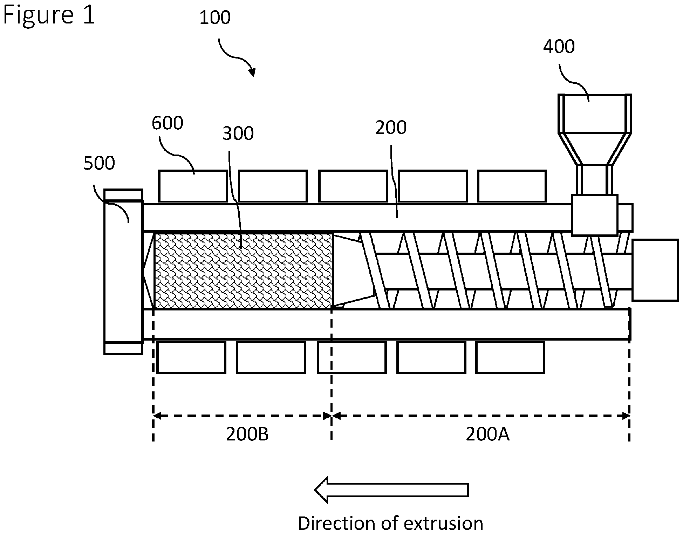

Figure 1 is a cross-sectional view schematically showing an illustrative configuration of an extruder according to an embodiment (hereinafter also referred to as "Embodiment A" as appropriate) for use in the production method of the present invention. The extruder 100 according to Embodiment A shown in Figure 1 is an extruder having a configuration for use in the production method of the invention, and includes a barrel 200, which has an elongated cylindrical form, and a screw 300, which is arranged inside the barrel 200 and has an elongated uniaxial form, as well as a feeder 400, a die section 500, and a temperature control mechanism (a heater and/or a cooler) 600.

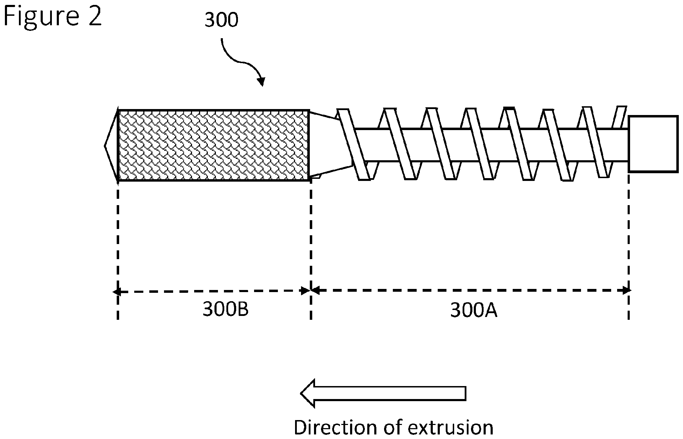

Figure 2 is a side view schematically showing an illustrative configuration of a screw 300 for use in the extruder 100 according to Embodiment A shown in Figure 1. The screw 300 has a base side end point and a tip side end point, and the base side end point is connected to the rotary shaft of a motor (not shown) and is configured to be driven by rotation. From its base side (motor side) to its tip side (opposite side) (i.e., in the extrusion direction indicated by the white arrow in the figure), the screw has a flight section 300A and a kneading section 300B. The circumference of the flight section 300A is provided with spiral convex structures (flights or flight structures), while the circumference of the kneading section 300B is provided with known structures for kneading (e.g., a mixing section with slotted screw threads as described below).

In the extruder 100 according to Embodiment A shown in Figure 1, when the screw 300 is arranged inside the barrel 200, the barrel 200 can be divided into two regions 200A and 200B, which correspond to the flight section 300A and the kneading section 300B of the screw 300, respectively. These two regions 200A and 200B of the barrel 200 herein may also be referred to as flight section 200A and kneading section 200B, in accordance with the names of the corresponding two sections of the screw 300. In addition, when the corresponding sections of the barrel 200 and the screw 300 are referred to without distinction, they may collectively be referred to as, e.g., the flight section 200A,300A and the kneading section 200B,300B.

The feeder 400 in the extruder 100 according to Embodiment A is located near the base side of the flight section 200A of the barrel 200, and is configured so that the food material to be kneaded can be fed into the barrel 200 (into the space between the barrel 200 and the screw 300) through the feeder 400.

The die section 500 in the extruder 100 according to Embodiment A is attached to the tip end of the barrel 200, and is configured to allow the composition kneaded by the screw 300 to be discharged from its flow channels while molding.

The temperature control mechanism (heater and/or cooler) 600 in the extruder 100 according to Embodiment A is an optionally installed component. The temperature control mechanism 600 is attached to a part or all of the circumference of the flight section 200A and/or the kneading section 200B of the barrel 200, and is configured to heat the barrel 200 so that the temperature of the composition in the barrel 200 (the space between the barrel 200 and the screw 300) can be adjusted on a site-by-site basis. As described below, from the viewpoint of the effect of the invention, the conveying of the composition by the flight section 200A and the kneading of the composition by the kneading section 200B may be both carried out at a relatively low temperature of less than 100°C. However, in the case where the temperature of the composition becomes too high (for example, if a composition heated to 100°C or more is used as a raw material, or if the temperature of the composition becomes too high due to frictional heat or compressive heat generated during kneading), or in the case where the temperature of the composition decreases too much during conveying, it may be desired to adjust the temperature by heating or cooling to a desired temperature range of less than 100°C. This temperature control mechanism 600 is used for temperature control in such cases. In the present invention, when the kneading of the composition by the kneading section 200B should be carried out with maintaining the temperature of the composition at a predetermined value or higher (e.g., the composition temperature at at least the majority of the kneading section is 40°C or more, or 50°C or more, or 60°C or more, or 70°C or more, or 80°C or more, or 90°C or more), it may be preferable to install a heater as the temperature control mechanism 600 in 200A and/or 200B in order to prevent the composition temperature from dropping, and more preferable to configure the kneading section such that the composition is maintained at the predetermined value or higher along a predetermined length or more of the kneading section (e.g., along 50% or more, or 60% or more, or 70% or more, or 80% or more, or 90% or more, or 100% of the entire length of the kneader section). It may be more preferable that the temperature control mechanism 600 installed in at least 200B is a heater, and especially preferable that the temperature control devices 600 installed in 200A and 200B are both heaters.

When the extruder 100 according to Embodiment A is used, each raw material of the composition is injected via the feeder 400 into the barrel 200 from the base side (i.e., into the space between the barrel 200 and the screw 300), and the screw 300 is driven in a predetermined direction inside the barrel 200. The dough composition composed of these raw materials is thereby kneaded while being conveyed from the base side towards the tip side as the screw 300 rotates, and the kneaded composition is molded and discharged by the die section 500 via its flow channels.

s

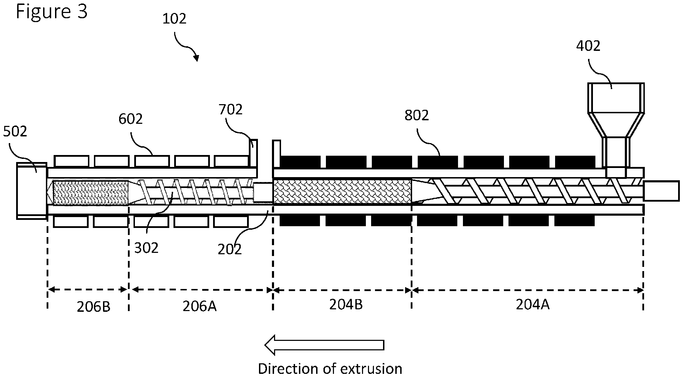

Figure 3 is a cross-sectional view schematically showing an illustrative configuration of an extruder according to another embodiment (hereinafter also referred to as "Embodiment B" as appropriate) for use in the production method of the present invention. The extruder 102 according to Embodiment B shown in Figure 3 has a similar configuration to the extruder 100 according to Embodiment A shown in Figure 1, except that the first half of the barrel (204A, 204B) is equipped with a configuration for subjecting pulse and/or cereal, which are the raw materials for the composition prepared at step (i) below, to pre-heating treatment under high temperature and high pressure conditions with a composition temperature of 100°C or higher in advance. The extruder 102 has a barrel 202 having an elongated cylindrical shape, a tandem-type screw 302 located in the barrel 202, a feeder 402 located at each designated position of the barrel 202, a die section 502, a heater 802, an optional vent section 702, and an optional temperature control device (heater and/or cooler to adjust to the composition temperature range described below) 602.

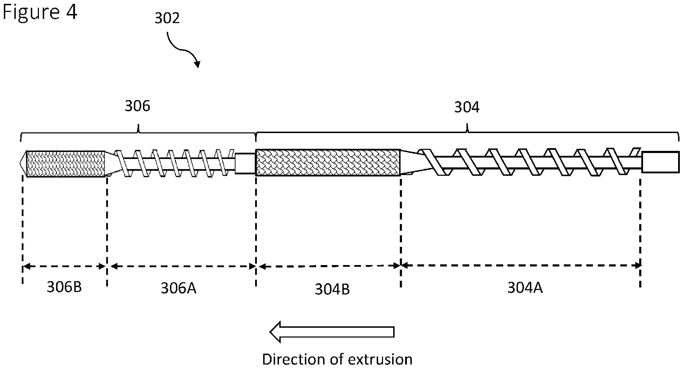

Figure 4 is a schematic side view of an example configuration of the tandem-type screw 302 used in an extruder according to Embodiment B shown in Figure 3. The tandem-type screw 302 has a start point on the base side and an end point on the tip side, the base side start point being connected to the rotary shaft of a motor (not shown) to drive the motor, and the heating screw 304 and kneading screw 306 are connected in tandem in a direction from the base side (motor side) to the tip side (opposite side) (that is, toward the extrusion direction indicated by the white arrow in the figure). The "tandem" type configuration herein refers to a configuration in which given structures are connected in series from upstream to downstream of the production flow. The "tandem" type configurations herein include, e.g., the following structures: as the configuration shown in Figure 3, a configuration in which two types of screws with different functions (e.g., a screw for heating, which performs pretreatment, and a screw for kneading, which has the configuration according to the present invention) are connected in series, and the composition processed in the first half is fed directly to the second half; and a configuration in which two independent extruders (a first-stage extruder that performs heating treatment as a pretreatment and a second-stage extruder having the configuration according to the present invention) are connected in series, such that the composition heated and treated in the first-stage extruder is fed directly to the second-stage extruder via direct transfer, conveyor transfer, pneumatic transfer, etc., within a certain period of time from the completion of the first-stage treatment to the start of the second-stage treatment (e.g., within a period of 0 minutes or more 60 minutes or less, the upper limit being, e.g., 60 minutes or less, or 30 minutes or less, or 10 minutes or less, or 5 minutes or less, while the lower limit may be, although is not restricted to, 0 minutes or more, or 0.1 minutes or more).

The heating screw 304 has the function of preheating the pulse and/or cereal that are used as raw materials for the composition prepared at step (i) below under high-temperature and high-pressure conditions. Its configuration is not particularly restricted as long as such a function can be achieved. Figure 4 shows a screw 304 having a flight section 304A and a heating section 304B arranged in this order from the base side (motor side) to the tip side (opposite side) (i.e., toward the extrusion direction), but possible configurations are not limited to this illustrated configuration.

The kneading screw 306 has a flight section 306A and a kneading section 306B arranged in this order from the base side (motor side) to the tip side (opposite side) (i.e., toward the extrusion direction). The configuration and functions of the screw for kneading 306 and its flight section 306A and kneading section 306B are the same as those of the screw 300 and its flight section 300A and kneading section 300B in Embodiment A shown in Figures 1 and 2.

In the extruder 102 according to Embodiment B shown in Figure 3, when the tandem-type screw 302 is arranged inside the barrel 202, the barrel 202 can be divided into four regions 204A, 204B, 206A, and 206B, which correspond to the flight section 304A and the heater section 304B of the screw for heating 304 and the flight section 306A and the kneader section 306B of the screw for kneading 306, respectively. These four regions 204A, 204B, 206A, and 206B of the barrel 202 herein may also be referred to as flight section 304A, heater section 304B, flight section 306A, and kneader section 306B, respectively, in accordance with the names of the corresponding four sections of the tandem-type screw 302. In addition, when the corresponding sections of the barrel 202 and the screw 302 are referred to without distinction, they may collectively be referred to as, e.g., the flight section 204A,304A, the heater section 204B,304B, the flight section 206A,306A, and the kneader section 206A,206B.

The main part of the barrel 202 of the extruder 102 according to Embodiment B is sharply divided into the flight section 204A and the heating section 204B in the first stage and the flight section 206A and the heating section 206B in the latter stage. The flight section 204A and the heating section 204B in the first stage cooperate with the flight section 304A and the heating section 304B of the heating screw 304 to convey the raw materials, such as pulse and/or cereal, at the flight sections 204A and 304A, and to heat and mix them under high-temperature (usually 100°C or higher) and high-pressure conditions at the heating sections 204B and 304B. In order to perform such heating and kneading processing under high-temperature (usually 100°C or higher) and high-pressure conditions, the flight section 204A and the heating section 204B in the first stage of the barrel 202 are configured to withstand such high-temperature and high-pressure conditions, and a temperature control mechanism 602 may optionally be arranged around them. The temperature control mechanism 602 is attached to a part or all of the circumference of the flight section 202A and/or the kneading section 202B of the barrel 202, and is configured to heat the barrel 202 so that the temperature of the composition in the barrel 202 (in the space between the barrel 202 and the screw 302) can be adjusted on a site-by-site basis. On the other hand, the flight section 206A and the kneading section 206B in the latter stage cooperate with the flight section 306A and the kneading section 306B of the kneading screw 306 to convey the composition of pulse and/or cereal, etc., after the high-temperature and high-pressure heating treatment, which is supplied from the heating sections 204B and 304B in the previous stage, by the flight section 206A and 306A and to knead it by the kneading section 206B and 306B. The function and configuration of the flight section 206A and the kneading section 206B of the barrel 202 are basically the same as the flight section 200A and the kneading section 200B of the barrel 200 of the extruder in Embodiment A. However, a vent section 702 may optionally be provided between the heating section 204B and the flight section 206A to rapidly reduce the pressure and temperature of the heated and pressurized composition of pulse and/or cereal, etc., supplied from the heating section 204B, 304B in the first stage. In addition, a temperature control mechanism 602 for regulating the composition temperature may optionally be provided to a part or all of the circumference of the flight section 206A and/or the kneading section 206B. This configuration makes it possible to carry out the conveying of the composition by the flight section 206A and the kneading of the composition by the kneader section 206B under conditions with relatively low temperatures (e.g., less than 100°C, while the lower limit may be, although is not limited to, typically more than 0°C, or 40°C or more, or 50°C or more, more preferably 60°C or more, or 70°C or more, or 80°C or more, especially 90°C or more) and low pressures. For example, when using a tandem-type screw, it is preferable to install a vent section 702 that serves as a temperature control mechanism (cooler) between the heating section 204B in the first-half stage and the flight section 206A in the second-half stage to lower the composition temperature, while using the temperature control mechanism 602 in the second half as a heater to inhibits temperature drop of the compositions.

The feeder 402 in the extruder 102 according to Embodiment B is, like the feeder 400 in the extruder 100 according to Embodiment A, attached to the base side start point of the barrel 202 and is configured to allow raw materials such as pulse and/or cereal to be fed into the barrel 202 (into the space between the barrel 202 and the tandem-type screw 302).

The die section 502 in the extruder 102 according to Embodiment B is, like the die section 500 in the extruder 100 according to Embodiment A, attached to the tip side end point of the barrel 202 and is configured to allow the composition kneaded by the tandem-type screw 302 to discharge from its flow channels with being molded.

The heater 802 in the extruder 102 according to Embodiment B is attached to a part or all of the circumference of the flight section 204A and the heater section 204B of the barrel 202, and is configured to heat the flight section 204A and the heater section 204B so that the temperature of the composition in the flight section 204A and the heater section 204B of the barrel 202 (the space between the flight section 204A and the heater section 204B and the flight section 304A and the heater section 304B of the screw for heating 304) can be adjusted on a site-by-site basis. With this configuration, the raw materials such as pulse and/or cereal are conveyed by the flight section 204A,304A, and then subjected to the heating treatment at high-temperature (of typically 100°C or more, or 110°C or more, or 120°C or more, while the upper limit may be, although is not limited to, typically less than 300°C, or less than 200°C) and high-pressure conditions by the heater section 204B,304B. In particular, in the present invention, it is preferable to carry out kneading of the composition by the heating section 204B during the period when the composition temperature is a predetermined value (specifically, the temperature of the composition in at least a majority of the kneading section may be 100°C or more, or 110°C or more, or 120°C or more, while the upper limit may be, although is not limited to, typically less than 300°C, or less than 200°C). In addition, it is preferable to maintain the composition temperature at the predetermined value or more along a predetermined ratio or more of the length of the kneading section (specifically, it may be within the range of, e.g., between 50% and 100% of the length of the kneading section, and more specifically the lower limit thereof may be 50% or more, or 60% or more, or 70% or more, or 80% or more, or 90% or more, or 100%).

The vent section 702 of the extruder 102 according to Embodiment B may optionally be attached to the barrel 202 between the heater section 204B and the flight section 206A, and is configured to carry out forced exhaust of pulse and/or cereal supplied from the heater section 204B,304B at the earlier stage. This allows the pressure and temperature of raw materials such as pulse powder and/or cereal powder that have been subjected to high-temperature and high-pressure heating treatment at a composition temperature of 100°C or higher in the grinding section 204B, 304B to be rapidly reduced, and the process after conveying the composition in the flight section 206A, 306A n the next stage to be conducted at a relatively low temperature (e.g., a composition temperature of less than 100°C, while the lower limit may be, although is not limited to, typically more than 0°C, or 40°C or more, or 50°C or more, more preferably 60°C or more, or 70°C or more, or 80°C or more, especially 90°C or more) and under a relatively low pressure.

The temperature control mechanism 602 in the extruder 102 according to Embodiment B may optionally be attached to a part or all of the circumference of the flight section 206A and the kneader section 206B, and is configured to adjust the composition temperature at the flight section 206A and the kneader section 206B to within a predetermined range so that the composition temperature in the flight section 206A and the kneader section 206B of the barrel 202 (in the space between the flight section 206A and the kneader section 206B and the flight section 306A and the heater section 306B of the screw for kneading 306) can be adjusted on a site-by-site basis. This configuration allows the raw materials such as pulse and/or cereal after the heating to be conveyed by the flight section 206A,306A at a relatively low temperature (e.g., less than 100°C, while the lower limit may be, although is not limited to, typically more than 0°C, or 40°C or more, or 50°C or more, more preferably 60°C or more, or 70°C or more, or 80°C or more, especially 90°C or more) and under a relatively low pressure, and then kneaded by the kneader section 206B,306B at a relatively low temperature (less than 100°C, while the lower limit may be, although is not limited to, typically more than 0°C, or 40°C or more, or 50°C or more, more preferably 60°C or more, or 70°C or more, or 80°C or more, especially 90°C or more) and under a relatively low pressure.

When the extruder 102 according to Embodiment B is used, raw materials for the composition before the heating treatment, including pulse and/or cereal, are each injected via the feeder 402 on the base side into the barrel 202 (into the space between the barrel 202 and the tandem-type screw 302), while the tandem-type screw 302 is rotationally driven in the barrel 202 in a predetermined direction. As a result, the raw materials such as pulse and/or cereal injected via the feeder 402 are driven from the base side to the tip as the side screw 300 rotates, and conveyed by the flight section 204A,304A with optionally being heated by the heater 802, and then subjected to the heating treatment at the heater section 204B,304B under high-temperature (e.g., typically 100°C or more, while the upper limit may be, although is not limited to, typically less than 300°C, or less than 200°C) and high-pressure conditions. The pressure and temperature of the raw materials such as pulse and/or cereal and other ingredients that have undergone the heating treatment are then rapidly reduced at the vent section 702, which may optionally be provided between the heating section 204B and the flight section 206A. Next, the raw materials such as pulse and/or cereal and other ingredients after the heating treatment are then conveyed by the flight sections 206A,306A at a relatively low temperature (e.g., less than 100°C, while the lower limit may be, although is not limited to, typically more than 0°C, or 40°C or more, or 50°C or more, more preferably 60°C or more, or 70°C or more, or 80°C or more, especially 90°C or more) and under a low pressure, and then kneaded by the kneading sections 206B, 306B at a relatively low temperature (e.g., less than 100°C, while the lower limit may be, although is not limited to, typically more than 0°C, or 40°C or more, or 50°C or more, more preferably 60°C or more, or 70°C or more, or 80°C or more, especially 90°C or more) and under a low pressure, while the composition temperature is adjusted to within a predetermined range by the optionally-installed temperature control mechanism 602. The composition after the kneading is discharged at the die section 500 via its flow channels while being molded. In this regard, it is preferable to use the temperature control mechanism 602 installed around the flight section 206A as a cooler so that the temperature of the composition is quickly reduced to less than 100°C.

In addition, if the kneading is carried out while the composition temperature at the kneader section 206B is a predetermined value or more (specifically, if the composition temperature is 40°C or more, or 50°C or more, more preferably 60°C or more, or 70°C or more, or 80°C or more, especially 90°C or more along more than half of the length of the kneader section 206B), it is preferable to use the temperature control mechanism 602 installed at 206A or 206B as a heater, since this serves to prevent the lowering of the composition temperature. Specifically, it is more preferable that at least the temperature control mechanism 602 installed at 206A is a heater, and it is especially preferable that both the temperature control mechanisms 602 installed at 206A and 206B are heaters.

It should be noted again that the extruder 100 according to Embodiment A and the extruder 102 according to Embodiment B are only examples of the extruder of the present invention, and any extruder of any configuration can be used as long as it is capable of implementing the production method of the present invention while meeting the desired conditions as described below. For example, in the case where the raw materials for the composition such as pulse and/or cereal are subjected to a heating treatment under high-temperature and high-pressure conditions prior to steps (i) to (iii) below, it is possible to use a single unit extruder 302 employing a tandem type screw 302, in which the screw for heating and the screw for kneading are connected in tandem, as the extruder 102 according to Embodiment B as shown in Figures 3 and 4. Alternatively, two independent extruders may be connected in tandem, and pulse and/or cereal may be first subjected to a heating treatment by the first extruder under high-temperature and high-pressure conditions and then fed directly to the second extruder, so that the production method of the present invention is carried out by the second extruder in the extruder at the latter stage.

The configuration and operation of the extruder will be described in more detail below.

(Screw)

As described above, the screw to be used in the extruder of the present invention is an elongated screw having a base side start point and a tip side end point, with the base end connected to the rotary shaft of a motor to drive the rotation.

The shape of the screw to be used in the extruder of the present invention is not limited, but may preferably be a flight screw or a flight-based screw. The term "flight screw" herein refers to a screw composed of a cylindrical base shaft with spiral ridges (flights) formed on a part or all of its circumference surface such that the ridges define screw threads while the remaining areas on the circumference surface other than the ridges define thread grooves. Alternatively, the flight screw may have a structure with an uneven groove bottom shape, specifically a wave shape where the groove bottom of each flight is uneven along the groove width, or may be a sub-flight type screw with main flights and sub flights.

Specifically, the screw used in the present invention has at least a flight section and a kneading section arranged in this order from its base side (motor side) to its tip side (opposite side). The flight section has a configuration in which screw flights are formed.

The diameter (D) of the screw to be used in the present invention is not restricted, but may preferably be within the range of 25 mm or more 300 mm or less. More specifically, the diameter (D) of the screw may be typically 25 mm or more, or 30 mm or more, or 35 mm or more, or 40 mm or more, or 45 mm or more. The upper limit may preferably be, although is not restricted to, typically 300 mm or less, or 200mm or less, or 150 mm or less. The diameter of the screw herein refers to a value obtained by setting a virtual cutting plane to cut the screw perpendicular to its axis of rotation, connecting any two points on the screw circumference on the virtual cutting plane to determine the length of the longest line segment (longest line segment length), determining the longest line segment lengths at multiple points along the entire screw length including the threaded area, and calculating the arithmetic mean of the longest line segment lengths. Incidentally, the average value herein (also referred to simply as the average or arithmetic average value) refers to an arithmetic average value unless otherwise specified.

The total length (L) of the screw to be used in the present invention is not restricted, but may preferably be typically 1000 mm or more, particularly 1100 mm or more, or 1200 mm or more, or 1300 mm or more, especially 1400 mm or more. The upper limit is also not particularly restricted, but may preferably be 5000 mm or less, particularly 4000 mm or less, or 3000 mm or less. The "total length of the screw" herein refers to, unless otherwise specified, the length of the portion of the screw where the composition temperature inside the extruder is continuously below 100°C (the lower limit of which is not particularly restricted, but usually above 0°C). Therefore, if the configuration of a screw is such that all of its internal temperatures are adjusted to less than 100°C and only each step of the production method of the present invention is implemented therein (e.g., in the case of the extruder 100 according to Embodiment A shown in Figures 1 and 2 above), the total length of the extruder (in the case of Figures 1 and 2, the total length of the extruder 100) is generally identical to the total length of the screw (in the case of Figures 1 and 2, the length of screw 300, that is, the total length of the flight section 300A and the knead section 300B). On the other hand, in the case of a configuration in which, e.g., the high-temperature, high-pressure heating of the raw materials such as pulse and/or cereal is performed by processing at a high temperature of 100°C or higher in the first stage, and the internal temperature is adjusted to less than 100°C to perform each step of the production method of the present invention in the latter step (e.g., in the case of the extruder 102 according to Embodiment B shown in Figures 3 and 4 above, or in the case where two independent extruders are connected together in tandem), the screw length of the later section, in which the internal temperature has been adjusted to, and is continuously maintained at, below 100°C (in the case of Figures 3 and 4, the length of the kneading screw 306 (i.e., the total length of the flight section 306A and the kneading section 306B), or if two independent extruders are used in tandem, the total length of the screw of the extruder in the later section for implementing each step of the production method of the present invention) corresponds to the "total length of screw" defined herein. The "continuous" herein refers to the state where the composition temperature inside the extruder is below 100°C for 90% or more (more preferably 95% or more, or substantially 100% or 100%) of the total length of the section, although it is acceptable if the composition temperature is locally above 100°C in some parts inside the section. It should be naturally noted that even if a screw feeder is provided for the feeder, the length of the screw feeder is not included in the total screw length because the screw is not continuous with the flight section of the extruder. The "length" of the screw, the flight section, or the kneading section herein refers to the length in the extrusion direction, unless otherwise indicated.

The ratio of the length to the diameter (L/D) of the screw to be used in the present invention is not restricted, but may preferably be within the range of 5 or more but 50 or less. More specifically, the LID ratio may preferably be typically 5 or more, or 6 or more, or 7 or more, or 8 or more. When the LID ratio of the screw is adjusted to these lower limits or higher, the resulting composition tends to exhibit a smooth surface on a consistent basis with less flouriness to be felt on eating. On the other hand, the upper limit of the LID ratio of the screw is also not particularly restricted, but may preferably be typically 50 or less, or 30 or less, or 26 or less, or 24 or less, or 22 or less, or 20 or less, or 18 or less. In particularly, it may be especially preferable to use a screw having a LID ratio satisfying these preferred range, since this may serve to increase the productivity. The "LID ratio" of a screw herein refers to the ratio of the total length of the screw (i.e., the length of the part of the extruder where the temperature of the composition inside the extruder is continuously below 100°C) (L) to the diameter of the screw (D).

(Flight section)

In the screw of the extruder used in the present invention, the flight section refers to a section with screw flights on its circumferential surface that is located on the base side (motor side) with respect to the kneading section. In the production method of the present invention, the flight section has the function of conveying the composition to the tip side as the screw rotates while increasing the pressure at the kneading section. The flight structure in which the composition is conveyed to the tip side as the screw rotates may be referred to herein as the "forward flight," while the flight structure in which the composition is conveyed to the base side as the screw rotates herein may be referred to herein as the "reverse flight." In addition, a part of the flight section with the forward flight may be referred to as the "forward flight section," and a part of the flight section with the reverse flight as the "reverse flight section."

In the screw to be used in the present invention, the length of the flight section account for a certain percentage of the total length of the screw. Specifically, the lower limit of the ratio of the length of the flight section to the total length of the screw may be typically 50% or more, while the upper limit of the ratio may be, although is not limited to, less than 100%. More specifically, the lower limit is usually 50% or more, among which 55% or more, or 60% or more, or 65% or more is preferred. Using a screw in which the ratio of the length of the flight section to the total length of the screw is equal to or higher than the lower limits mentioned above is preferable because the pressure during the subsequent kneading step is stabilized, and also because the starch grain structures in the composition can be sufficiently broken and integrated into a starch matrix without kneading at high temperatures, thereby resulting in a composition that is resistant to cracking (cracks inside the composition) even after storage at room temperature (the "room temperature" herein refers to 20°C unless otherwise specified) for a certain period of time (e.g., 3 days or more, or 10 days or more, or 30 days or more). On the other hand, the upper limit of the ratio of the length of the flight section to the total length of the screw may be, although is not limited to, typically less than 100%, or less than 99%, or less than 98%, or less than 95%, or less than 90%, depending on the combination with other parts.

The flight section in the present invention may be located at any position relative to the total length of the screw. For example, a part of the flight section may be located in the middle of the kneading section or at the tip side of the screw. However, from the viewpoint of increasing pressure during kneading, a certain percentage or more of the flight section may preferably be located upstream of a majority of the kneading section. Specifically, it may be preferred that the total length of a part of the flight section located upstream (i.e., on the base side) of a majority (specifically, 50% or more, or 75% or more, or 90% or more, or 100%) of the kneading section is equal to or higher than a certain percentage of the total length of the flight section, as this will increase the pressure of the dough to be pressed into the kneading section and stabilize the pressure in the kneading section. Specifically, although the lower limit thereof is not restricted, the total length of the flight length located upstream of a majority of the kneading section may be, for example, within the range of 50% or more but 100% or less of the total length of the flight section. More specifically, the lower limit may usually be 50% or more, or 60% or more, or 70% or more, or 80% or more, or 90% or more. On the other hand, the upper limit may be, although is not restricted to, typically 100%, or 100% or less. The flight section used in the conveying at step (ii) described below may have a configuration that satisfies the above requirements. s

(Kneader section)

In the screw to be used in the present invention, the kneading section may have, without limitation, any known structure for kneading (specific examples include Maddock mixing section, Egan mixing section, blister ring mixing section, pin mixing section, Dulmage mixing section, Saxton mixing section, pineapple-type mixing section, mixing section having a screw with groove holes (will be explained later), cavity transfer mixing section, and any combinations thereof).

One or more narrow-shaped structures (structures that block the flow of dough and create an elongational flow on the screw) may also be provided on the screw. The " narrow-shaped structure" herein refers to a structure that divides the space between the screw and the inner wall of the barrel generally into a space at the base side and a space at the tip side, and creates a stretching flow in the dough passing through the narrow-shaped structure when the dough fills the divided space at the base side to elevate the dough internal pressure by a predetermined percentage or more. An example of a narrow-type structure may be a relatively raised structure provided on the screw surface (also referred to as a convex structure), a structure in which the cross-sectional area of the flow channel is relatively reduced from the base side to the tip side in any given flow channel, or a combination of these structures. In the case of the convex structure, it is preferable to provide a convex structure on the screw surface in the dough flow channel of the kneading section that rises to the vicinity of the barrel inner wall (specifically, 80% or more of the distance from the screw center to the barrel inner wall) to thereby divide the space between the screw and the barrel inner wall into a space at the base side and at the tip side. It is also desirable for two or more narrow-shaped structures to be arranged generally in tandem, as this will create a complex stretching flow and enhance the effect of the present invention. Specifically, the number of narrow-shaped structures arranged in series may be typically 1 or more, or 2 or more, or 3 or more, or 4 or more, or 5 or more, or 10 or more. The upper limit may be, although is not restricted to, typically 50 or less. Furthermore, in the cases where two or more narrow-shaped structures are arranged generally in tandem, it is preferred that one or more convex structures are included.

The kneading section to be used in the present invention screw has the function to break up and knead the composition flow by heating the composition with a heater so as to decompose the starch grains by high-temperature strong kneading under pressurized conditions.

The form of the kneading section is not particularly restricted, but it may be preferable that no Dulmage screw structure or barrier-type screw structure, which has a lot of grooves, is formed on the circumferential surface of the kneading section, or if any, the proportion of the area with such a structure is limited. Specifically, the ratio of the length of an area with a Dulmage screw structure or barrier-type screw structure to the total length of the kneading section may preferably be typically 10 % or less, particularly 5 % or less, especially substantially 0% (i.e., substantially no such structure is formed).

The screw to be used in the present invention has a configuration in which the length of the kneading section accounts for less than a certain percentage of the total screw length. Specifically, the upper limit of the ratio of the length of the kneading section to the total length of the screw may typically be less than 50%. The lower limit may be, although is not limited to, typically more than 0%. More specifically, the lower limit may preferably be less than 50%, or 45% or less, or 40% or less. It is preferable to make this ratio equal to or less than the aforementioned upper limit, as this allows the length ratio of the flight section to be relatively large, which in turn provides the aforementioned advantages of extended transport time at the flight section. On the other hand, the lower limit of the ratio of the length of the kneading section to the total length of the screw may preferably be typically more than 0%, or 1% or more, or 2% or more, or 4% or more, or 6% or more, or 8% or more, or 10% or more. It is preferable to set this percentage above the lower limit mentioned above because it enables sufficient kneading of the composition and also stabilizes the pressure during kneading.

According to the present invention, there may be another section of a limited length (e.g., a second flight section, etc.) interposed between the kneading section and the tip side end point of the screw, as long as the pressure during the kneading at step (iii), described below, equals to or exceeds a certain value. However, it is preferred that the kneading section be located adjacent to the tip side end point of the screw.


(Barrel)


The barrel is a cylindrical structure that surrounds the outer circumference of the screw. The structure of the barrel to be used in the present invention is not restricted. However, rather than a tapered barrel in which the inner diameters decrease towards the direction of extrusion, it may be preferable to use a barrel having generally the same inlet and outlet inner diameters (more preferably, the same inlet and outlet inner diameter), since it is easier to clean and of a better quality for food production.

In the conventional method involving processing the composition at high temperatures of 100°C or more, use of a barrel with grooves on its inner wall may cause disadvantages such as scorching of the composition. However, according to the present invention, since the composition is processed at low temperatures of less than 100°C, scorching of the composition is less likely to occur. Accordingly, a barrel with grooves on its inner wall can be used. Specifically, the ratio of the length of a barrel structure with grooves to the total length of the barrel may be within the range of more than 30% but 100% or less. More specifically, the ratio of the length of a barrel structure with grooves may preferably be typically more than 30%, or more than 35%, or more than 40%, or more than 45%, or more than 50%. In particular, the ratio of the length of a barrel structure with grooves to the total length of the kneading section of the barrel may preferably be typically more than 30%, or more than 35%, or more than 40%, or more than 45%, or more than 50%. The upper limit may be, although not restricted, typically 100% or less.

It is also preferable to adopt a screw having a kneading section with a screw structure with groove holes, more preferably a structure derived from a forward flight section by removing or deforming a part of the forward flight section. When a screw structure with groove holes is adopted, the shape of the deformed and/or removed parts of the forward flight section may preferably form a passage-like structure that penetrates the forward flight section. The cross-section of the passage-like structure may preferably have a U- or V-shaped shape. In addition, the angle formed by the passage-like structure penetrating the forward flight section to the axis of rotation of the screw (average penetrating angle) may preferably be smaller than the angle formed by the curve connecting the thread top points of the forward flight structure to the axis of rotation of the screw (helix angle). In other words, the passage-like structure connecting the forward flight section may preferably be formed at an angle closer to parallel (to the axis of rotation of the screw) than the helix angle. Specifically, the "helix angle" of a forward flight structure refers to the arithmetic average of the acute angles formed by the directions connecting the screw thread tops on the screw surface and the direction of the axis of rotation on the screw surface. The helix angle of the forward flight structure can be determined by, for example, measuring the angle between the forward flight structure and the axis of rotation on the screw surface every 30° rotation of the screw around the rotating axis and calculating the arithmetic average from all measurements when the screw is rotated 360°. On the other hand, the "average penetrating angle" of a passage-like structure can be calculated as the arithmetic average of the acute angles formed by the directions connecting the deepest parts of the passage-like structure and the direction of the axis of rotation. Specifically, the passage-like structure penetrating the forward flight section may preferably be a structure diagonally penetrating the forward flight structure (i.e., an angle closer to parallel to the axis of rotation of the screw). More specifically, the average penetrating angle of the passage-like structure is usually more than 20%, and especially more than 30%, and usually less than 80%, and especially less than 70%, of the helix angle of the forward flight structure. In addition, the ratio of the total length of the deformed and/or removed parts to the total length of the ridges of the forward flight in the screw structure with groove holes may preferably be 50% or less.

(Flow retarding structure)

According to the present invention, it may be preferable to provide a flow retarding structure at the kneader section. The reason for this is thought to be that by adopting a structure that increases the flow distance of the contents, such as the slotted screw structure as described above, the starch in the composition may be homogenized by a sufficient kneading process, resulting in a structure that makes the starch in the composition homogeneous, whereby the ingredients inside the composition may become less likely to leak out after heat cooking. The "flow retarding structure" herein refers to a structure that reduces the flow rate of the contents at the kneading section relative to the flow rate of the contents at the flight section immediately before the kneading section. Examples include: a structure that reduces the flow rate by relatively increasing the screw groove depth or pitch width in the flow retardant structure section; a structure that reduces the flow rate by increasing the barrel inner diameter near the flow retarding structure relative to the previous barrel inner diameter; and a structure in which a hole is drilled in a part of the forward flight section, or a part of the forward flight section is missing or deformed as a flow retarding structure (also referred to as a slotted screw structure). Adopting such structures make it possible to reduce the flow rate generated by screw rotation and lowers the flow rate compared to that at the forward flight structure. In particular, the use of a slotted screw structure as a flow retarding structure may be preferred because it combines the functions of kneading and flow retarding. Alternatively, the entire kneading section may be configured to be a flow retarding structure by installing the flow retarding structure to a part of the kneading section. More specifically, the flow retarding structure may be placed adjacent to a known kneading structure at a position near the tip side end point or near the base side start point of the kneading structure.

The flow retarding ratio to be achieved by the flow retarding structure (i.e., the ratio of the flow rate at the flow retarding structure to the flow rate at the flight section upstream of the flow retarding structure) may be within the range of 0% or more but less than 100%. More specifically, the ratio may be less than 100%, but may preferably be typically 97% or less, or 95% or less, or 93% or less, or 90% or less, while the lower limit may be, although is not limited to, typically 10% or more, or 20% or more. In particular, the kneading section may preferably exhibit a flow retardation ratio satisfying the aforementioned range, as the resulting structure will combine the function of the kneading section and the function of the flow retarding structure.

(Feeder)

The feeder is attached to a position in the first half of the flight of the barrel and is configured such that the food material to be kneaded can be fed into the barrel (into the space between the barrel and the screw) through this feeder. The feeder is not particularly limited, and may be a forced injection type feeder, which has a screw or the like inside a mechanism for forcibly feeding the composition material, or a natural drop type feeder, which supplies the composition material by natural drop.

(Die section)

The die section is a die mounted on the tip end of the barrel in the extrusion direction for continuously molding the composition at the extrusion outlet, typically with one or more (the upper limit may be, although is not limited to, typically 1000 or less) flow paths that run through from inside to outside the barrel. The structure and shape of the die section to be used in the present invention is not restricted and may be selected as appropriate. Examples of the die shapes include, although not limited to, round, square, triangular, star, oval, crescent, half-moon, cross, and fylfot, as well as any combinations thereof (e.g., a Celtic cross-shaped die hole, which is a combination of a Greek cross shape and a circle shape arranged such that the intersection of the cross is on the center of the circle, and that the circle has a radius of three-fourth or less of the distance from the center to each tip of the cross). For example, a composition with a circular (circular) cross-sectional shape will become a composition with a cylindrical shape after extrusion, a composition with a quadrangle (especially square) cross-sectional shape will become a composition with a square columnar shape after extrusion, and a composition with any other cross-sectional shape will become a columnar composition with that shape as the bottom surface after extrusion.

However, the die section to be used in the present invention may preferably be characterized in that when the die section is cut perpendicular to the extrusion direction, the average degree of unevenness in the cross-sections of each flow channel satisfies a predetermined limit or larger. The "degree of unevenness" of a cross-section of a flow channel herein refers to, when the die section is cut perpendicular to the extrusion direction, a parameter indicating the degree of unevenness of the shape of a flow channel cross-section (corresponding to the outer edge of the cavity) on a virtual cut plane (assuming that the flow channel of the die section is cut into a circular section). This degree of unevenness can be calculated as {(the length of the perimeter when the convex apexes of convexity with an angle of less than 180° in the flow channel cross-section are connected with the shortest distance)/(the contour length of the flow channel cross-section)}, and is smaller for a more uneven cross-section. The average degree of unevenness of each flow channel cross-section can be determined by, e.g., assuming multiple cross-sections of the die section orthogonal to the axis of rotation at 1 mm intervals along the axis of rotation of the screw, measuring the degree of unevenness in each vertical section, and calculating the arithmetic average of the measured values.

Specifically, the degree of unevenness of the flow channel cross-section of the die section may be within the range of 0.1 or more but 1.0 or less from the viewpoint of industrial productivity. More specifically, the degree of unevenness may preferably be 0.1 or more, especially 0.2 or more, or 0.3 or more. More specifically, a cross shape or a variation thereof can be adopted as the shape of the flow channel cross-section. Since the aging process proceeds smoothly when the degree of unevenness is equal to or lower than a predetermined value, the upper limit may preferably be, although is not particularly limited to, typically less than 1.0, or less than 0.9, or less than 0.8, or less than 0.7.

The die section to be used in the present invention may also preferably be characterized in that the average circularity in the cross-section of the flow channel satisfies a predetermined limit or less. The circularity of a flow channel herein refers to a parameter that decreases as the shape of the cross-section of the flow channel moves away from a perfect circle, and can be calculated as {(the perimeter of a perfect circle with the same area as the cross-section of the flow channel)/(the contour length of the cross-section of the flow channel)}. The more complex the shape of the cross-section, the smaller the circularity of the cross-section.

The direction of extrusion of the composition in the die section is also optional and not restricted. For example, it can be horizontal, vertical, or in-between directions.

(Vent section and Forced exhaust mechanism)

The extruder used in the present invention may further have a vent section for venting. The vent section may have a structure that reduces the pressure inside the barrel to atmospheric pressure by being opened under atmospheric pressure, or it may have a forced exhaust mechanism therein.

The extruder used in the present invention may also have a forced exhaust mechanism. If a forced exhaust mechanism is provided, its position is not limited and can be provided at any stage, as long as it is before the extrusion by the die section. The forced exhaust mechanism may be selected from known vacuum pumps and the like, e.g., liquid-sealed pumps (water-sealed pumps). Any forced exhaust mechanism (e.g., vacuum pump) can be used as long as it is capable of forcibly volatilizing some of the water in the composition to the extent that the composition temperature in the vent section is reduced to a certain degree. For example, the forced exhaust mechanism (e.g. vacuum pump, etc.) may preferably have the capacity to reduce the temperature by at least 1°C, more preferably by at least 2°C, at the vent section. The mechanism employed (e.g., vacuum pumps, etc.) can be any mechanism as long as it is capable of removing gas from the composition or raw material and reducing air bubbles contained in the starch matrix of the dough. The suction capacity (also referred to as suction pressure or suction gas pressure) of the forced exhaust mechanism may be within the range of 0.04 MPa or higher but 1 MPa or lower. Specifically, the suction capacity may preferably be 0.06 MPa or higher, more preferably 0.08 MPa or higher. The upper limit is not particularly restricted, but may preferably be typically1 MPa or lower, or 0.1 MPa or lower, or 0.09 MPa or lower, since the pump is so strong it may also suck the dough. In an extruder producing swellings, it is in principle difficult to employ such a configuration as in the present invention, as the internal pressure of the extruder must in principle be increased to at least atmospheric pressure while the composition temperature is maintained above 100 °C. Conventional extruders for producing swollen foods do not usually employ such a configuration as in the present invention, since such an extruder is in principle required to extrude the composition under atmospheric pressure or elevated pressure with maintaining the composition temperature at 100 °C or higher.

When an extruder with a vent and/or forced exhaust mechanism is used in the present invention, the location of the vent and/or forced exhaust mechanism is not limited, as long as it is possible to properly exhaust the material, and can be installed at any location prior to the extrusion at the die section. Specifically, forced exhaust may be performed in advance by a forced exhaust mechanism before feeding the material, or a forced exhaust mechanism may be installed in the feed section so that forced exhaust is performed when the composition material is fed. Alternatively, by using an extruder having a vent section at any position of the barrel, for example, in the middle of the flight section, between the flight section and the kneading section, in the middle of the kneading section, or immediately after the kneading section, it is possible to vent the inside of the barrel during the conveying of the composition at the flight section, immediately after the conveying of the composition at the flight section and immediately before the kneading of the composition at the kneading section, during the kneading of the composition at the kneading section, or immediately after the kneading of the composition at the kneading section and immediately before the extrusion of the composition at the die section, respectively. Since the pressure in the kneading section is reduced, it is preferable to install a forced exhaust mechanism before the kneading section, and it is even more preferable to install a forced exhaust mechanism before the flight section, and it is especially preferable to install a forced exhaust mechanism at the feeder or before the feeding of raw materials.

(Temperature control mechanism (heater and cooler))

In the present invention, a temperature control mechanism (heater and/or cooler) may be provided at some or all sections of the barrel to allow the temperature inside the barrel to be adjusted. For example, a heater (heating facility) may be provided around the barrel and configured to heat the barrel so that the temperature inside the barrel (the space between the barrel and the screw) can be adjusted. The configuration and arrangement of the heaters are not limited. As an example, if the configuration is such that only each step of the production method of the present invention is carried out with adjusting all of its internal temperatures to less than 100°C (the lower limit may be, although is not limited to, typically more than 0°C, or 40°C or more, or 50°C or more, more preferably 60°C or more, or 70°C or more, or 80°C or more, especially 90°C or more) (e.g., the extruder 100 according to Embodiment A shown in Figures 1 and 2 above), the temperature of the composition in the space between the barrel and the screw can be adjusted to a relatively low temperature (less than 100°C) for each site by heating the barrel in each site with a heater installed in part or all of the barrel. This makes it possible to convey raw materials such as pulse and/or cereal at a desired relatively low temperature (less than 100°C, while the lower limit may be, although is not limited to, typically more than 0°C, or 40°C or more, or 50°C or more, more preferably 60°C or more, or 70°C or more, or 80°C or more, especially 90°C or more) at the flight section, and then knead them at a desired relatively low temperature (less than 100°C, while the lower limit may be, although is not limited to, typically more than 0°C, or 40°C or more, or 50°C or more, more preferably 60°C or more, or 70°C or more, or 80°C or more, especially 90°C or more) at the kneading section. In such a configuration example, the heater may preferably be configured and arranged such that the flight and kneading sections of the barrel can be individually heated and adjusted to a predetermined temperature and, more preferably, such that for each of the flight and kneading sections of the barrel, a plurality of areas along the axial direction can be individually heated and adjusted to a predetermined temperature.

As another example of installing a heater, if the extruder is configured to perform each stage of the manufacturing method of the present invention by heating the pulses and/or miscellaneous grains, etc. that will be the raw materials at high temperature and high pressure by processing them at a temperature of 100°C or higher in the first stage, and adjusting the internal temperature to less than 100°C in the latter step (e.g., in the case of the extruder 102 according to Embodiment B shown in Figures 3 and 4 above, or in the case where two independent extruders are connected in tandem), the barrel can be heated site by site with a heater installed in part or all of the barrel in the first stage where high-temperature, high-pressure heating of raw materials such as pulse and/or cereal in the first stage is performed, such that the temperature of the composition in the space between the barrel and the screw can be adjusted to the desired temperature, including high temperature (100°C or higher), for each site. This makes it possible to heat-treat raw materials such as pulse and/or cereal at a desired high temperature (100°C or higher, while the upper limit may be, although is not restricted to, typically less than 300°C, or less than 200°C) in the first stage of the extruder, convey them at a relatively low temperature (less than 100°C, while the lower limit may be, although is not limited to, typically more than 0°C, or 40°C or more, or 50°C or more, more preferably 60°C or more, or 70°C or more, or 80°C or more, especially 90°C or more) in the latter stage flight section, and knead them at a relatively low temperature (less than 100°C, while the lower limit may be, although is not limited to, typically more than 0°C, or 40°C or more, or 50°C or more, more preferably 60°C or more, or 70°C or more, or 80°C or more, especially 90°C or more) in the kneading section. In such a configuration example, the heater may preferably be configured and arranged such that the flight and kneading sections of the barrel can be individually heated and adjusted to a predetermined temperature, and more preferably such that for each of the flight and kneading sections of the barrel, a plurality of areas along the axial direction can be individually heated and adjusted to a predetermined temperature.

On the other hand, in the case of the latter configuration where raw materials such as pulse and/or cereal are subjected to pre-heating at high temperatures and pressures by processing them under high temperatures of 100°C or higher (the upper limit may be, although is not limited to, typically less than 300°C, or less than 200°C) in the first stage of the extruder, and then the internal temperature is adjusted to less than 100°C to perform each step of the production method of the present invention in the latter stage, (e.g., in the case of the extruder 102 according to Embodiment B shown in Figures 3 and 4 above, or in the case where two independent extruders are connected in tandem), a cooler (cooling facility) may be installed in some or all sections of the barrel in the latter stage to cool the barrel and allow the temperature of the composition in the space between the barrel and the screw to be adjusted to a desired temperature that is relatively low (less than 100°C, while the lower limit may be, although is not limited to, typically more than 0°C) for each site. This makes it possible to cool the heat-treated pulse grain powder and other compositions fed from the first stage of the extruder rapidly and convey it at a relatively low temperature (less than 100°C) at the second flight section, and then to knead them at a relatively low temperature (less than 100°C) at the kneading section. Alternatively, the extruder may also be configured with a vent section that serves as a temperature control mechanism (cooler) or a forced exhaust mechanism (vacuum device) in the barrel after kneading treatment at a temperature of 100°C or higher, and the composition is opened under atmospheric pressure or negative pressure to quickly cool the composition to below 100°C (the lower limit may be, although is not limited to, typically more than 0°C) using heat of vaporization. Alternatively, when a composition that has been heated to 100°C or higher is used, a cooler (e.g., vent section) may be installed near the base side start point of the flight section to quickly adjust the temperature of the composition to below 100°C (the lower limit may be, although is not limited to, typically more than 0°C), and then a heater can be installed in the subsequent flight section (and in the kneading section) to maintain the composition temperature within a certain range (e.g., more than 50°C but less than 100°C, or more than 70°C but less than 100°C).

Various heaters and coolers for extruders are well known to those skilled in the art. Examples of heaters include: a jacket system or direct heat system (air jacket system), in which a heater such as an electric heating wire or steam pipe is installed around the area of the barrel to be heated so that the heater can acts on the barrel indirectly; and a steam heating system, in which heated steam or the like is blown directly on the composition in the barrel. Preferable among these is a system that can exert heat indirectly (e.g., jacket system) from the viewpoint of retaining the matrix structure in the composition. When a jacket system is employed, it may be preferable to use electric heating wires, which can quickly adjust the temperature and are advantageous for forming matrix structures. Examples of coolers include: a jacket system, in which cooling equipment such as cooling water pipes is installed on the circumferential surface of the barrel corresponding to the cooler installation area mentioned above so as to act indirectly; a system of making gas or liquid act directly on the composition in the barrel or in the flow channel of the die section or on the composition extruded from the die section (e.g., by injecting water in a liquid state, misty water, air at room temperature, cooled air or inert gas such as liquid nitrogen); and a system of cooling the composition using heat of vaporization by opening the composition under atmospheric pressure or negative pressure through a vent. Preferred among these is a system that can act indirectly (e.g., a jacket system) from the viewpoint of maintaining the desired matrix structure in the composition. When the jacket system is adopted, it may be preferable to use cooling water piping, which allows rapid temperature adjustment and is advantageous for the formation of the desired matrix structure.

s

The heating capacity and heating temperature of the optional heater and the cooling capacity and cooling temperature of the optional cooler are not limited, and may be set and adjusted as appropriate, depending on the configuration of the extruder to be achieved and the target temperature of the composition at each desired step (e.g., each step of the production method of the present invention, as well as heat treatment of raw materials such as pulse and/or cereal at high temperatures and under high pressures, which may optionally be carried out prior to the production method of the present invention). The target temperatures for each of these step will be described below.


[II. Starch-containing solid composition for heat cooking]

The constitution and properties of the starch-containing solid compositions for cooking produced by the production method of the present invention are as follows.

(1) Summary of the composition:

*Definitions of terms:

The term "heat cooking" herein generally refers to a cooking method of raising the temperature of food by applying heat to the food directly using fire or microwaves or indirectly through a medium such as water or air. Generally, it refers to cooking at a temperature of about 70°C or higher, typically from 80°C to 180°C, for example, over a period of time between 1 minute and 60 minutes. Examples of heat cooking include baking, boiling, stir-frying, and steaming. The composition in the present invention has the characteristic of not losing their shape when heat-cooked in the liquid. The composition according to the present invention may preferably be prepared to be heat-cooked in a water-based liquid (i.e., contain water at a 50% or more) (e.g., cooked in water at a temperature of 90°C or above and optionally 120°C or below for a period of 1 minute or more but 60 minutes or less before consumption). Accordingly, the compositions of the present invention may particularly preferably be a composition for heat cooking in liquid, which are to be consumed after being heat-cooked in liquid.

The term "solid " herein refers to a state where a supporting structure, e.g., starch, has a strong continuous structure and has shape-retaining properties to the extent that it can retain its shape after being cooked (especially after being cooked in water at 90°C for one minute). A solid composition may be in any state without restriction as long as the food materials are partially or completely integrated with water, and may be in a sol state, in a gel state, or in a solid state. It may also be a composition with plastic properties such as fresh pasta, or a dried composition without plastic properties such as dried pasta.

The solid composition of the present invention may be a solid paste composition. The term "paste composition" herein refers to a food composition produced by kneading food ingredients of edible plant origin, and encompasses kneaded products and pasta (including those not made from wheat).

*Characteristics of the composition:

One of the characteristics of the composition obtained by the production method of the present invention is that it is resistant to cracking and leakage of ingredients inside the composition after cooking, even after a certain period of time during storage at room temperature, even though it can be easily manufactured using general-purpose equipment without using special manufacturing equipment with high temperature and pressure resistance. Incidentally, the room temperature herein refers to 20°C unless otherwise specified.

Conventional solid compositions for cooking that contain starch have the problem that cracks easily occur inside the composition as time passes during storage at room temperature, and ingredients inside the composition easily leak out after cooking.

In contrast, the present inventors have developed a method for producing a starch-containing solid composition for heat cooking that does not easily collapse in shape during heat cooking by processing raw materials containing micronized pulse under high-temperature and high-pressure conditions (Patent Literature 1). However, this method requires strong kneading of the composition under high temperature conditions of 100°C or higher. Accordingly, there is room for improvement in that it requires special manufacturing equipment that is highly sealed and can withstand not only high temperatures but also high pressure conditions in order to prevent swelling caused by water vapor in the dough composition during strong kneading under such high temperatures.

In contrast, the production method of the present invention described below can be easily implemented with general-purpose equipment without using special manufacturing equipment with high temperature and pressure resistance, yet can produce a solid composition with excellent effects, i.e., cracks are less likely to occur during storage at room temperature, and ingredients inside the composition are less likely to leak out after cooking. The reason for this is not clear, but is assumed to be as follows. The use of raw materials that have undergone high-temperature treatment in advance can suppress the processing temperature in the subsequent process, and arranging the kneading section near the tip of the die where pressure increases in the extruder promotes the matrix formation of the starch in the raw materials, which results in a desirable quality that prevents cracking during storage at room temperature and prevents leakage of ingredients from the interior of the composition after cooking.
s

*Embodiments of the composition:

The composition of the present invention may preferably be a starch-containing composition for cooking that is used for cooking in liquid (especially in water), a cooking environment in which the ingredients of the composition are particularly susceptible to leaching. The starch-containing solid composition for heat cooking may preferably be a composition in the form of, e.g., noodles or noodle-like strings or strips such as pasta, since the composition of the present invention has the property of retaining its edible shape even after heat cooked in water for eating (e.g., more than 5 minutes in water at a temperature of 90°C or higher).

Examples of the composition of the present invention include, although not limited to: pasta, Chinese noodles, udon (Japanese wheat-flour noodles), inaniwa udon, kishimen, houtou, suiton, hiyamugi, somen (variations of udon), soba (Japanese buckwheat-flour noodles), soba gaki (Japanese buckwheat-flour paste), bee-hun (rice vermicelli), pho, reimen (Korean cold noodles), vermicelli, oatmeal, couscous, kiritanpo (variation of Japanese rice cake in an elongate shape), tteok, and gyoza skins.

Examples of pastas include long pasta and short pasta.

The term "long pasta" is typically a generic term referring to long, thin pasta, but may also be used herein in a broader meaning encompassing udon and soba noodles. Specific examples include, although not limited to, spaghetti (diameter: 1.6 mm to 1.7 mm), spaghettini (diameter: 1.4 mm to 1.5 mm), vermicelli (diameter: 2.0 mm to 2.2 mm), cappellini (diameter: 0.8 mm to 1.0 mm), linguini (short diameter: about 1 mm, long diameter: about 3 mm), tagliatelle or fettuccine (short diameter: about 1 mm, long diameter: about 3 mm), and other types of pasta. diameter: about 1 mm, long diameter: about 3 mm), tagliatelle or fettuccine (flat noodles of about 7 mm to 8 mm in width), pappardelle (flat noodles of about 10 mm to 30 mm in width), etc. Long pasta is a product that typically has a large contact area between noodles and therefore tends to lose its surface smoothness and adhere to each other. Accordingly, making the composition of the present invention into the form of pasta may be useful and desirable.

The term "short pasta" is typically a general term referring to short pasta, but may also be used herein in a broader meaning encompassing product once shaped in long pasta and then processed into smaller sizes, such as fregola (granular pasta) and couscous. Examples include, although not limited to, macaroni (cylindrical shape with a diameter of about 3 to 5 mm), penne (cylindrical shape with both ends cut diagonally like the tip of a pen), farfalle (shaped like a butterfly), conchiglie (shaped like a seashell), and orecchiette (dome-shaped like an ear), etc.

*Composition in a dry state:

If the composition of the present invention is a dry composition in a dry state with a moisture content of less than 25 mass% on a dry weight basis, the dry composition may be prone to cracking during storage at room temperature. In this case, the composition of the present invention may preferably be a dry composition due to its usefulness. In particular, it may be preferable to perform the water retention treatment described below when producing the composition in a dry state, because the resulting composition may be less likely to crack inside the composition after a certain period of time (e.g., 3 days or more) during storage at room temperature, and the ingredients inside the composition may be less likely to leak out after cooking.

The "dry" state herein refers to a state in which the moisture content is less than 25 mass % on a dry weight basis. The water content in a composition can be measured by subjecting the dried powder to the decompression heating and drying method described below.

*Composition made into an elongated form:

The composition of the present invention may be made in any shape that conventional starch-containing solid compositions have, particularly as a composition into an elongate form such as long pasta.

The composition of the present invention made into such an elongated form may preferably have a diameter of, although not limited to, within the range of 0.1 mm or more but 20 mm or less. More specifically, the upper limit may preferably be typically 20 mm or less, preferably 10 mm or less, more preferably 5 mm or less, still preferably 3 mm or less, still more preferably 2 mm or less, while the lower limit may be, although is not limited to, typically 0.1 mm or more, or 0.3 mm or more. The "diameter" of a starch-containing solid composition herein refers to the length of the longest diagonal line of a cut surface of the composition when cut perpendicular to its longitudinal direction (the maximum length of line segments connecting any two points on the contour of the cross-section), and means its diameter if the cut surface is circular (hereinafter also referred to as round or circle-shaped), its major axis if the cut surface is oval (hereinafter also referred to as elliptical or oval-shaped), or its diagonal if the cut surface is rectangular (e.g., in the case of a composition formed into a plate).

(2) Constitution of the composition:

The materials for the composition of the present invention is not particularly restricted, but may preferably include at least one edible plant. The types of the edible plant is not particularly restricted, but may preferably include at least one dried edible plant, i.e., an edible plant with a dry mass basis moisture content of less than 25%, preferably less than 20%, more preferably less than 15%, while the lower limit may be, although is not restricted to, typically 0 mass % or more, and a moisture content activity of 0.85 or less, preferably 0.80 or less, more preferably 0.75 or less, while the lower limit may be, although is not restricted to, typically 0.10 or more. The edible plant to be used may preferably be micronized and powdered. Examples of specific edible plants may preferably contain at least one species of pulse and/or cereal. Embodiments of using pulse and/or cereal as a raw material will be explained in details later. However, the materials for the composition of the present invention are not restricted to these examples, but the composition may also contain other edible plants than pulse and/or cereal and/or other raw materials, as long as the various properties explained below are satisfied. Details of pulse and/or cereal and edible plants as raw materials for the composition of the present invention will be explained in detail later.

*Dietary fiber:

The composition of the present invention contains dietary fiber (preferably, although not restricted, insoluble dietary fiber). The term "dietary fiber" used herein refers to indigestible ingredients in food that cannot be digested by human digestive enzymes, and the term "insoluble dietary fiber" used herein refers to dietary fiber insoluble in water. The dietary fiber content ("total dietary fiber content," which is the sum of soluble and insoluble dietary fiber content), "soluble dietary fiber content," and "insoluble dietary fiber content" may be measured in accordance with the Japan Standard Tables for Food Composition 2015 (7th revised edition) using the Prosky variant method. The composition of the present invention is useful because it does not result in a composition with a bland texture even when the dietary fiber (e.g., insoluble dietary fiber) content is high. Although the reason for this is not known, it is possible that the high-temperature, high-pressure, strong kneading treatment improves the texture of dietary fiber (e.g., insoluble dietary fiber) by causing the dietary fiber in the composition to interact with starch and protein to form a network structure.

The lower limit of the dietary fiber (preferably, although not restricted, insoluble dietary fiber) content in the composition of the present invention may preferably be within the range of 2.0 mass % or more but 50 mass % or less in terms of dry mass basis. More specifically, the lower limit may be typically 2.0 mass % or more, particularly 3 mass % or more, particularly 4 mass % or more, particularly 5 mass % or more, or 6 mass % or more, or 7 mass % or more, or 8 mass % or more, or 9 mass % or more, particularly 10 mass % or more, in terms of dry mass basis. It is especially preferable to set the content of insoluble dietary fiber among the dietary fiber to the aforementioned lower limit or more, the composition of the present invention is more likely to have a structure in which the insoluble dietary fiber is homogeneously dispersed in the matrix-like starch in an appropriate size and the starch is distributed in a matrix-like manner, which in turn improves the rubbery texture of the product. The "dry mass" used herein refers to a mass obtained by calculating the moisture content from the aforementioned "moisture content (dry mass basis moisture content)" and subtracting the calculated moisture content from the overall mass of the composition, etc. The "dry mass basis" used herein refers to a content ratio of each component calculated with the dry mass of the composition as the denominator and the content of each component as the numerator. On the other hand, the upper limit of the content may be, although is not restricted to, from the viewpoint of industrial production efficiency, typically 50 mass % or less, particularly 40 mass % or less, or 30 mass % or less, in terms of dry mass basis.

It is preferred that the above provisions for dietary fiber are also satisfied for the soluble dietary fiber content and/or the insoluble dietary fiber content. Specifically, the soluble dietary fiber content and/or the insoluble dietary fiber content in the composition of the present invention in terms of dry mass basis may be within the range of 2.0 mass % or more but 50 mass % or less. More specifically the lower limit may preferably be typically 2.0 mass % or more, particularly 3 mass % or more, or 4 mass % or more, or 5 mass % or more, or 6 mass % or more, or 7 mass % or more, or 8 mass % or more, or 9 mass % or more, especially 10 mass % or more. The upper limit may be, although is not restricted to, in terms of dry mass basis, typically 50 mass % or less, particularly 40 mass % or less, or 30 mass % or less.

The origin of the dietary fiber (preferably, although not restricted, insoluble dietary fiber) ingredient contained in the composition of the present invention is not particularly limited, and may be either those derived from various naturally-occurring materials containing the ingredient or those synthesized. When those derived from naturally-occurring materials are used, the ingredient contained in various materials may be isolated, purified, and used, or alternatively, such materials containing the ingredient may be used as such. Examples of insoluble dietary fibers that can be used include those derived from general species of cereal (including specific species of cereal), those derived from pulse (beans), those derived from potatoes, those derived from vegetables, those derived from nuts, and those derived from fruits. Preferable among them are those derived from cereals and those derived from pulse (beans) from the viewpoint of the texture of the composition, more preferably those derived from pulse (beans) and or grains (including cereals). When dietary fiber derived from pulse is used, it is preferable to use those derived from pea, most preferably those derived from yellow pea. When pulse containing dietary fiber is used, it may be used either with or without its seed skin, but pulse with seed skin may preferably be used since it has a higher content of dietary fiber.

Preferred examples of cereal-derived dietary fiber include those derived from oats. Dietary fibers derived from cereals may be used with or without bran. However, but it is preferable to use cereals with bran because they contain more dietary fiber. Furthermore, it is preferable that the total amount of pulse-derived dietary fiber and cereal-derived dietary fiber satisfies the above ranges.

Also, raw material cereals containing both insoluble dietary fiber and soluble dietary fiber, such as oats (in which about 30% of dietary fiber is soluble fiber), may be used. Specifically, the ratio of the content of the soluble dietary fiber in terms of dry mass basis to the content of the dietary fiber in terms of dry mass basis in the total composition may be within the range of 5 mass % or more but 70 mass % or less. More specifically, the lower limit may preferably be 5 mass % or more, or 10 mass % or more, or 15 mass % or more, or 20 mass % or more, or 25 mass % or more, or 30 mass % or more. The upper limit may be, although is not restricted to, typically 70 mass % or less, or 65 mass % or less, or 60 mass % or less. When producing the composition, the soluble dietary fiber-containing food materials (specifically cereals, more specifically oats) may satisfy the above ranges, or alternatively, the composition prepared at step (i) of the production method of the present invention may satisfy the above ranges.

The dietary fiber (or insoluble dietary fiber) contained in the composition of the present invention may be either in the form of an isolated pure product or, more preferably, in the form of being contained in edible plant (preferably pulse and/or cereal). Specifically, the ratio of the dietary fiber content as contained in edible plants (preferably pulse and/or cereal) to the total dietary fiber content in the entire composition (or the ratio of the insoluble dietary fiber content as contained in edible plants (preferably pulse and/or cereal) to the total dietary fiber content) may preferably be within the range of 50 mass % or more but 100% or less in terms of dry mass basis. More specifically, the ratio may preferably be typically 50 mass % or more, or 60 mass % or more, or 70 mass % or more, or 80 mass % or more, or 90 mass % or more, particularly 100 mass %.

The constitution of the dietary fiber (or insoluble dietary fiber) contained in the composition of the present invention is not particularly restricted. However, the ratio of lignin (especially acid-soluble lignin) to the total insoluble dietary fiber content (especially to the total insoluble dietary fiber) may preferably satisfy the aforementioned limits or more, since this will make it easier to obtain a more pronounced texture improvement effect. Specifically, the ratio of the lignin content (especially the acid-soluble lignin content) to the total dietary fiber content to the total insoluble dietary fiber content may preferably be within the range of 50 mass % or more but 100% or less in terms of dry mass basis. More specifically, the ratio may preferably be typically 5 mass % or more, particularly 10 mass % or more, or 30 mass % or more, in terms of dry mass basis.

The composition of the present invention may preferably be characterized in that the particle size of the dietary fiber (e.g., insoluble dietary fiber) contained therein satisfies a certain size or less. If the particle size of the insoluble dietary fiber is too large, the composition may become shaggy and undesirable in texture. The reason for this is not known, but it is estimated that coarse insoluble dietary fiber inhibits the formation of matrix structures such as starch, making it difficult for the effects of the invention to be realized. It is highly likely that the insoluble fiber size in randomly crushed pulse powder or cereal powder is more than 450 $\mu$m (because the insoluble fiber in pulse or cereal is usually rod-shaped, and the laser diffraction particle size distribution measurement according to the invention tends to yield larger values). In particular, when food ingredients containing hard tissues, such as pulse with seed coat or cereal with bran, are used as raw materials, the insoluble dietary fiber in the seed coat is coarse and is less easily crushed than the edible portion. Therefore, when such food ingredients are used in the present invention, it may be preferable to use one that has undergone a specific crushing process in advance so that the insoluble dietary fiber contained therein is within a specific size range. The upper limit may be, although is not restricted to, typically 2000$\mu$m or less.

According to the present invention, the particle size of the dietary fiber (e.g., insoluble dietary fiber) in the composition is evaluated by a method including treating the aqueous suspension of the composition with protease and amylase, and subjecting the composition after the starch- and protein-degradation treatment, in which starch and protein are degraded by enzymes, to the ultrasonication, and then to the measurement using a laser diffraction particle size analyzer to determine the particle size distribution. Specifically, 6 mass % aqueous suspension of the composition is treated with 0.4 volume % of protease and 0.02 mass % of $\alpha$-amylase at 20°C for 3 days (also referred to as "[Procedure b]") to carry out the starch- and protein-digestion treatment, and the enzyme-treated composition is subjected to the measurement for the particle diameter distribution after ultrasonication.

Specifically, the composition of the present invention may preferably be characterized in that the particle size $d_{90}$ in the particle size distribution of dietary fiber (e.g., insoluble dietary fiber) measured by the above procedure is within the range of for example 1$\mu$m or more 450$\mu$m less than. More specifically, the upper limit may preferably be typically less than 450 $\mu$m, or 400$\mu$m or less, or 350$\mu$m or less, or 300$\mu$m or less, or 250$\mu$m or less, or 200$\mu$m or less, or 150$\mu$m or less, or 100$\mu$m or less, or 80$\mu$m or less, or 60$\mu$m or less, especially 50$\mu$m or less. On the other hand, the lower limit of the particle diameter $d_{90}$ of the insoluble dietary fiber may preferably be, although is not particularly limited to, typically 1 $\mu$m or more, or 3 $\mu$m or more.

Likewise, the composition of the present invention may preferably be characterized in that the particle size $d_{50}$ in the particle size distribution of dietary fiber (e.g., insoluble dietary fiber) measured by the above procedure is within the range of for example 1$\mu$m or more 450$\mu$m less than. More specifically, the upper limit may preferably be typically less than 450 $\mu$m, or 400$\mu$m or less, or 350$\mu$m or less, or 300$\mu$m or less, or 250$\mu$m or less, or 200$\mu$m or less, or 150$\mu$m or less, or 100$\mu$m or less, or 80$\mu$m or less, or 60$\mu$m or less, especially 50$\mu$m or less. On the other hand, the lower limit of the particle diameter $d_{50}$ of the insoluble dietary fiber may preferably be, although is not particularly limited to, typically

1 $\mu$m or more, or 3 $\mu$m or more.

A more specific procedure for measuring the particle size distribution of dietary fiber (e.g., insoluble dietary fiber) in a composition is as follows. 300 mg of the composition is placed in a plastic tube with 5 mL of water, allowed to swell at 20°C for about 1 hour, and then processed using a small Hiscotron (Microtech Nichion homogenizer NS-310E3) until a porridge-like consistency is obtained (about 15 seconds at 1000 rpm) to prepare a 6 mass % water suspension of the composition. 2.5 mL of the treated sample is then divided and combined with 10 $\mu$L of protease (Proteinase K, Takara Bio) and 0.5 mg of $\alpha$-amylase ($\alpha$-Amylase from Bacillus subtilis, Sigma), and allowed to react at 20°C for 3 days. After the reaction, the resulting protease- and amylase-treated composition is subjected to sonication, and then to measurement for particle size distribution. The particle size distribution of protease- and amylase-treated compositions after ultrasonic treatment can be measured using a laser diffraction particle size analyzer in the same manner as the specific surface area per unit volume described below.

The term "particle size $d_{90}$" (or the term "particle size $d_{50}$") herein refers to, when the particle size distribution of the object is measured on a volume basis and divided into two parts at a certain particle size, the particle size at which the ratio between the cumulative value of the particle frequency % on the larger side to that on the smaller side are 10:90 (or 50:50). The "ultrasonic treatment" herein refers to a treatment with ultrasonic waves of 40 kHz frequency at an output of 40 W for 3 minutes, unless otherwise specified.

* Starch:

The composition of the present invention contains starch. Specifically, the composition of the present invention may contain starch in a predetermined amount or more, since this feature makes it easier to prevent cracks from forming inside the composition even after storage at room temperature for a certain period of time (for example 3 days or more, more preferably 30 days or more, while the upper limit may be, although is not restricted to, typically 10 years or less), and also makes it easier to prevent the ingredients inside the composition from leaking out after heat cooking. Although the reason for this is not certain, it is possible that the strong kneading treatment under high-temperature and high-pressure conditions causes the relatively large molecular weight fraction of starch in the composition to form a homogenized matrix structure, which results in the aforementioned effects.

Specifically, the starch content in the composition of the present invention may be within the range of 20 mass % or more but 85 mass % or less. More specifically, the lower limit may be typically 20 mass % or more in terms of dry mass basis. the lower limit may preferably be 25 mass % or more, or 30 mass % or more, or 35 mass % or more, or 40 mass % or more, or 45 mass % or more, especially 50 mass % or more. On the other hand, the upper limit for the starch content in the composition of the present invention may be, although is not limited to, for example in terms of dry mass basis 85 mass % or less, particularly 80 mass % or less, or 70 mass % or less, or 60 mass % or less.

The origin of the starch in the composition of the present invention is not particularly restricted. Examples include plant-derived starch and animal-derived starch, but plant-derived starch may be preferred. Specifically, the ratio of starch derived from edible plant (preferably pulse and/or cereal) to the total starch content of the composition may preferably be within the range of 30 mass % or more but 100 mass % or less in terms of dry mass basis. More specifically, the ratio may preferably be typically 30 mass % or more, particularly 40 mass % or more, or 50 mass % or more, or 60 mass % or more, or 70 mass % or more, or 80 mass % or more, or 90 mass % or more, especially 100 mass %. The upper limit is not particularly restricted, and may be typically 100 mass % or less. The pulse-derived starch may preferably be derived from pea, most preferably from yellow pea. Preferable examples of starch derived from cereals include oats-derived starch. It is preferable that the total of pulse-derived starch and cereal-derived starch satisfy the above ranges. The details of pulse and cereal are described below.

The starch to be incorporated in the composition of the present invention may be either an isolated and pure starch or, more preferably, in the form of starch-containing edible plant (preferably pulse and/or cereal). Specifically, the ratio of starch contained in edible plant (preferably pulse and/or cereal) to the total starch content in the composition may be within the range of 30 mass % or more 100 mass % or less in terms of dry mass basis. More specifically, the ratio may preferably be typically 30 mass % or more, particularly 40 mass % or more, or 50 mass % or more, or 60 mass % or more, or 70 mass % or more, or 80 mass % or more, or 90 mass % or more. The upper limit is not particularly restricted, and may be 100 mass %, or typically 100 mass % or less.

In the present invention, the starch content in a composition is determined according to the Japan Standard Tables for Food Composition 2015 (7th revised edition) and using the method of AOAC 996.11, by a method in which soluble carbohydrates (glucose, maltose, maltodextrin, etc.) that affect the measured value are removed via extraction treatment with 80% ethanol.

*Starch grain structures:

The composition of the present invention may preferably be characterized in that the number of starch grain structures satisfies a predetermined value or less, since the resulting composition may be less likely to crack inside the composition after a certain period of time (e.g., 3 days or more) during storage at room temperature, and the ingredients inside the composition may be less likely to leak out after heat cooking. Although the principle behind this is unknown, it is estimated that since the composition is subjected to the high-temperature, high-pressure, and strong kneading conditions described below while the starch grain structures are broken down, the starch diffuses throughout the composition in a matrix-like structure, which enable the amylopectin in the starch to easily develop elasticity during water retention.

The starch grain structures recited in (a) above are iodine-stained structures with circular shapes of about 1 to 50 $\mu$m in diameter in a planar image, and can be observed, for example, by preparing 6 mass % aqueous suspension of crushed product of the composition and observing the suspension under magnified view. Specifically, 6 mass % suspension of the composition powder is prepared by sieving crushed product of the composition through a sieve with 150 $\mu$m apertures, and 3 mg of the 150-$\mu$m pass composition powder is suspended in 50 $\mu$L of water. This suspension is then placed on a slide to obtain a prepared slide, which is observed under a phase contrast microscope with polarized light or under an optical microscope with iodine staining. The magnification factor is not restricted, but may be 100 times or 200 times. When the distribution of starch grain structures on the prepared slide is uniform, the percentage of starch grain structures in the entire prepared slide can be estimated by observing a representative field of view. On the other hand, when the distribution of starch grain structures on the prepared slide is found to be biased, a finite number of fields of view (e.g., two or more, e.g., five or ten) can be observed, and the observation results can be added together to obtain a measurement for the entire preparation.

Specifically, the composition of the present invention may preferably satisfy the requirement(s) (a) and/or (b) below, both of which relate to the starch grain structures in the composition.

(a) When 6% suspension of a crushed product of the dough composition is observed, the number of starch grain structures observed is 300/mm$^2$ or less.
(b) When 14 mass % of composition crushed product water slurry is subjected to measurement with a rapid visco-analyzer with elevating the temperature from 50°C to 140°C at a rate of 12.5°C/min, the peak temperature of gelatinization obtained is less than 120°C.

With regard to the requirement (a), the composition of the present invention may preferably be characterized in that the number of starch grain structures observed under predetermined conditions is within the range of 0/mm$^2$ or more but 300/mm$^2$ or less. More specifically, the number of starch grain structures in the composition of the present invention may preferably be typically 300/mm$^2$ or less, or 250/mm$^2$ or less, or 200/mm$^2$ or less, or 150/mm$^2$ or less, or 100/mm$^2$ or less, or 50/mm$^2$ or less, or 30/mm$^2$ or less, or 10/mm$^2$ or less, especially 0/mm$^2$.

With regard to the requirement (b), the composition of the present invention may preferably be characterized in that the peak temperature of gelatinization in the composition measured by rapid visco-analyzer (RVA) under specific conditions is within the range of 50°C or more but less than 120°C. More specifically, the upper limit may preferably be typically less than 120°C, or 115°C or less, or 110°C or less, or 105°C or less, or 100°C or less, or 95°C or less, or 90°C or less, or 85°C or less, or 80°C or less. On the other hand, while the lower limit may be, although is not restricted to, typically 50°C or more, or 55°C or more, or 60°C or more. The rapid visco-analyzer (RVA) and its measurement conditions will be described later.

The terms "crushed product of a composition," "composition crushed product," or "crushed composition" used herein all refer to, unless otherwise specified, a composition that has been crushed to such an extent that the particle diameter $d_{50}$ and/or $d_{90}$ (preferably both $d_{50}$ and $d_{90}$) after ultrasonication, as measured by a laser diffraction particle size distribution analyzer, is about 1000 $\mu$m or less, while the lower limit of the particle diameter $d_{50}$ and/or $d_{90}$ (preferably both particle diameters $d_{50}$ and $d_{90}$) after ultrasonication is not particularly limited, but is usually 1 $\mu$m or more.

*Degree of gelatinization of starch:

The degree of gelatinization of starch in the composition of the present invention may preferably be a predetermined value or more, since the resulting composition of the present invention may not easily cause cracking inside the composition during storage at room temperature even after a certain period of time (e.g., 3 days or more), and that the ingredients inside the resulting composition may not easily leak out after cooking. Specifically, the degree of gelatinization of starch in the composition of the present invention may preferably be within the range of 30 mass % or more but 100 mass % or less. More specifically, the ratio may preferably be typically 30 mass % or more, particularly 40 mass % or more, or 50 mass % or more, or 60 mass % or more, especially 70 mass % or more. The upper limit for the degree of gelatinization is not restricted, but if it is too high, the starch may decompose and the composition may become sticky and of undesirable quality. Accordingly, the upper limit for the degree of gelatinization may preferably be typically 100 mass % or less, or 99 mass % or less, or 95 mass % or less, or 90 mass % or less.

In the present invention, the degree of gelatinization of a composition is measured as the ratio of the gelatinized starch content to the total starch content using the glucoamylase second method, which is a partial modification of the Central Analytical Laboratory of Customs (following the method by Japan Food Research Laboratories: https://www.jffl.or.jp/storage/file/221.pdf).

*Protein:

The composition of the present invention contains protein. Specifically, the composition of the present invention may contain protein in a predetermined amount or more, since this feature makes it easier to prevent cracks from forming inside the composition even after storage at room temperature for a certain period of time (for example 3 days or more), and also makes it easier to prevent the ingredients inside the composition from leaking out after heat cooking. Although the reason for this is not certain, it is possible that the strong kneading treatment under high-temperature and high-pressure conditions causes starch to spread in the composition to form a matrix-like structure, in which agglomerate structures, which are thought to consist mainly of protein, develop to favorable shapes and sizes, while dietary fiber assists the development of such agglomerate structures, thereby creating a structure completely different from previously-known protein networks, including gluten.

Specifically, the protein content in the composition of the present invention in terms of dry mass basis may be within the range of 3.0 mass % or more 85 mass % or less. More specifically, the lower limit may be typically 3.0 mass % or more, preferably 4.0 mass % or more, or 5.0 mass % or more, or 6.0 mass % or more, or 7.0 mass % or more, or 8.0 mass % or more, or 9.0 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more, or 19 mass % or more, or 20 mass % or more, or 21 mass % or more, especially 22 mass % or more. On the other hand, the upper limit for the protein content in the composition of the present invention in terms of dry mass basis may be, although is not limited to, 85 mass % or less, or 80 mass % or less, or 75 mass % or less, or 70 mass % or less, or 65 mass % or less, or 60 mass % or less, or 50 mass % or less, or 40 mass % or less, or 35 mass % or less. It may be preferable that the content of protein derived from plant (e.g., pulse and/or cereal) satisfies these ranges.

The origin of the protein in the composition of the present invention is not particularly restricted. Examples include plant-derived protein and animal-derived protein, of which plant-derived protein may be preferred. Specifically, the ratio of protein derived from plant (preferably pulse and/or cereal) to the total protein content of the composition may preferably be within the range of 50 mass % or more but 100 mass % or less in terms of dry mass basis. More specifically, the ratio may preferably be typically 50 mass % or more, or 60 mass % or more, or 70 mass % or more, or 80 mass % or more, or 90 mass % or more, especially 100 mass %. The upper limit is not particularly restricted, and may be typically 100 mass % or less. Examples of plant-derived protein that can be used include those derived from general species of cereal (including specific species of cereal), those derived from pulse (beans), those derived from potatoes, those derived from vegetables, those derived from nuts, and those derived from fruits, among which pulse-derived protein is preferred. The pulse-derived protein may preferably be derived from pea, most preferably from yellow pea. Preferable examples of protein derived from cereals include oats-derived protein. It is preferable that the total of pulse-derived protein and cereal-derived protein satisfy the above ranges.

The protein to be incorporated in the composition of the present invention may be either an isolated and pure protein or, more preferably, in the form of protein-containing edible plant (preferably pulse and/or cereal). Specifically, the ratio of protein contained in edible plant (preferably pulse and/or cereal) to the total protein content in the composition may be within the range of 50 mass % or more 100 mass % or less in terms of dry mass basis. More specifically, the ratio may preferably be typically 50 mass % or more, or 60 mass % or more, or 70 mass % or more, or 80 mass % or more, or 90 mass % or more. The upper limit is not particularly restricted, and may be 100 mass %, or typically 100 mass % or less.

The composition of the present invention may preferably be characterized in that 50 mass % or more but 100 mass % or less of each of the protein and starch contents in terms of dry mass basis is derived from pulse and/or cereal. More specifically, 50 mass % or more, or 60 mass % or more, or 70 mass % or more, or 80 mass % or more, or 90 mass % or more, especially 100 mass % of each of the protein and starch contents in terms of dry mass basis is derived from pulse and/or cereal, more preferably from the same species of pulse and/or cereal, still more preferably from the same individual(s) of pulse and/or cereal. In addition, 50 mass % or more, or 60 mass % or more, or 70 mass % or more, or 80 mass % or more, or 90 mass % or more, especially 100 mass % of each of the protein and starch contents in terms of dry mass basis are contained in the composition in the form of edible plant.

The protein content in a composition herein can be measured in accordance with the Japan Standard Tables for Food Composition 2015 (7th revised edition) by, e.g., quantifying the total amount of nitrogen according to the combustion method (improved Dumas method) specified in the Food Labeling Law ("About Food Labeling Standards" (Consumer Food Indication No. 139 dated March 30, 2015))," and then multiplying the total amount of nitrogen with the "nitrogen-protein conversion factor."

*Total oil and fat content:

The total oil and fat content in the composition of the present invention may preferably be, although is not limited to, within the range of 0.01 mass % or more but less than 17 mass % in terms of dry mass basis. More specifically, the upper limit may preferably be typically less than 17 mass %, or less than 15 mass %, or less than 13 mass %, or less than 10 mass %, or less than 8 mass %, or less than 7 mass %, or less than 6 mass %, or less than 5 mass %, or less than 4 mass %, or less than 3 mass %, or less than 2 mass %, or less than 1 mass %, especially less than 0.8 mass %, in terms of dry mass basis. On the other hand, the lower limit of the total oil and fat content may preferably be, although not particularly limited to, typically 0.01 mass % or more, in terms of dry mass basis. The total oil and fat content in a solid paste composition can be measured by a method, e.g., according to the Japan Standard Tables for Food Composition 2015 (7th revised edition), using the Soxhlet extraction method with diethyl ether.

The origin of the oil and fat in the composition of the present invention is not particularly restricted. Examples include plant-derived oil and fat and animal-derived oil and fat, of which plant-derived oil and fat may be preferred. Specifically, the ratio of oil and fat derived from plant (preferably pulse and/or cereal) to the total oil and fat content of the composition may preferably be within the range of 50 mass % or more but 100 mass % or less in terms of dry mass basis. More specifically, the ratio may preferably be typically 50 mass % or more, or 60 mass % or more, or 70 mass % or more, or 80 mass % or more, or 90 mass % or more, especially 100 mass %. The upper limit is not particularly restricted, and may be typically 100 mass % or less. Examples of plant-derived oil and fat that can be used include those derived from general species of cereal (including specific species of cereal), those derived from pulse (beans), those derived from potatoes, those derived from vegetables, those derived from nuts, and those derived from fruits, among which pulse-derived oil and fat is preferred. The pulse-derived oil and fat may preferably be derived from pea, most preferably from yellow pea. Preferable examples of oil and fat derived from cereals include oats-derived oil and fat. It is preferable that the total of pulse-derived oil and fat and cereal-derived oil and fat satisfy the above ranges.

The oil and fat to be incorporated in the composition of the present invention may be either an isolated and pure oil and fat or, more preferably, in the form of protein-containing edible plant (preferably pulse and/or cereal). Specifically, the ratio of oil and fat contained in edible plant (preferably pulse and/or cereal) to the total oil and fat content in the composition may be within the range of 50 mass % or more 100 mass % or less in terms of dry mass basis. More specifically, the ratio may preferably be typically 50 mass % or more, or 60 mass % or more, or 70 mass % or more, or 80 mass % or more, or 90 mass % or more. The upper limit is not particularly restricted, and may be 100 mass %, or typically 100 mass % or less.

The composition of the present invention may preferably be characterized in that 50 mass % or more but 100 mass % or less of the oil and fat content in terms of dry mass basis is derived from pulse and/or cereal. More specifically, 50 mass % or more, or 60 mass % or more, or 70 mass % or more, or 80 mass % or more, or 90 mass % or more, especially 100 mass % of the oil and fat content in terms of dry mass basis is derived from pulse and/or cereal, more preferably from the same species of pulse and/or cereal, still more preferably from the same individual(s) of pulse and/or cereal. In addition, 50 mass % or more, or 60 mass % or more, or 70 mass % or more, or 80 mass % or more, or 90 mass % or more, especially 100 mass % of the oil and fat content in terms of dry mass basis are contained in the composition in the form of edible plant.

*Dry mass basis moisture content:

The dry mass basis moisture content in the composition of the present invention may preferably be a predetermined value or less, since this feature makes it easier to prevent cracks from forming inside the composition even after storage at room temperature for a certain period of time (for example 3 days or more), and also makes it easier to prevent the ingredients inside the composition from leaking out after heat cooking. Specifically, the dry mass basis moisture content in the composition of the present invention may be, although not limited to, within the range of 0.5 mass % or more but 60 mass % or less. More specifically, the content may preferably be 60 mass % or less, or 55 mass % or less, particularly 50 mass % or less, or 45 mass % or less, or 40 mass % or less, or 35 mass % or less, or 30 mass % or less, or 25 mass % or less, or 20 mass % or less, or 15 mass % or less. On the other hand, the lower limit of the dry mass basis moisture content in the composition of the present invention may be, although not limited to, from the viewpoint of industrial production efficiency, 0.5 mass % or more, or 1 mass % or more, or 2 mass % or more. The dry mass basis moisture content of the composition of the present invention may be either derived from various ingredients of the composition or derived from further added water. If the dry mass basis moisture content in the dough composition before processing is high, a process such as drying can be employed to adjust the dry mass basis moisture content to within the aforementioned range.

The "dry mass basis water content" herein refers to the ratio of the total amount of water in the composition of the present invention which either originates from the raw materials or was added externally to the total amount of solids in the solid paste composition of the present invention. The value can be measured by a method, for example, according to the Japan Standard Tables for Food Composition 2015 (7th revised edition), by heating to 90°C using the decompression heating and drying method. Specifically, an appropriate amount of sample ($W_1$) is put in a pre-weighed weighing vessel ($W_0$) and weighed, the weighing vessel with the lid removed or opened is placed in a reduced pressure electric constant temperature dryer adjusted to a predetermined temperature (more specifically, 90°C) at normal pressure, the door is closed, and the vacuum pump is operated to dry the sample at a predetermined reduced pressure for a predetermined period of time. The vacuum pump is then stopped, dry air is sent to bring the pressure back to normal, the weighing vessel is removed, the lid is put on, the vessel is left to cool in a desiccator, and the mass is then weighed. The method of drying, cooling, and weighing ($W_2$) is repeated until a constant amount is reached, and the water content (water content based on dry weight) (mass %) is determined using the following formula.

[Formula 1]

$$\text{Dry basis water content (g/100g)} = (W_1 - W_2) / (W_2 - W_0) \times 100$$

In the formula, $W_0$ is the mass (g) of the pre-weighed weighing vessel, $W_1$ is the mass (g) of the weighing vessel with the sample before drying, and $W_2$ is the mass (g) of the weighing vessel with the sample after drying.

*Raw materials:

The raw materials for the compositions of the present invention are not particularly restricted, as long as the various ingredient compositions and properties specified in the present invention can be achieved. However, it may be preferable to use one or more edible plants as raw materials, and it is more preferable to use at least pulse and/or cereal as edible plants. The form of the edible plants used as raw materials is not restricted, but can be, for example, in powder form.

*Pulse:

When pulse is used as edible plant in the composition of the present invention, preferable examples of pulse species that can be used include, although not limited to, one or more selected from Pisum, Phaseolus, Cajanus, Vigna, Vicia, Cicer, Glycine, and Lens species. Specific examples of pulse species include, although not limited to: peas (in particular, yellow peas, white peas, and green peas, which are immature seeds), kidney beans, red kidney beans, white kidney beans, black beans, pinto beans, toramame (a variation of kidney beans: concord paul), lima beans, scarlet runner beans, pigeon peas, mung beans, cowpeas, azuki beans, broad beans (vicia faba), soybeans (especially edamame, which are immature seeds of soybeans harvested with their pods in their immature state and characterized by the green appearance of the beans), chickpeas, lentils, blue peas, scarlet runner beans, peanuts, lupin beans, glass peas, locust beans (carob), twisted cluster beans, African locust beans, coffee beans, cacao beans, and Mexican jumping beans. Other classifications of foodstuffs not exemplified can be naturally understood by those skilled in the art who deal with the foodstuffs or processed products of the foodstuffs. Specifically, this can be clearly understood by referring to the food group classifications (p. 249, Table 1) in the Japan Standard Tables for Food Composition 2015 (7th revised edition), which are also widely used in everyday aspects of life in the general household. These pulse species may be used either any one singly or in any combination of two or more. In the case of food materials of which some edible parts (e.g., peas, green peas) are treated as vegetables, it is possible to determine whether the whole plant (e.g., soybeans, peas) combined with the inedible parts (e.g., pods) corresponds to pulse.

When pulse is used for the composition of the present invention, it may be preferable to use mature pulse rather than immature pulse seeds (e.g. green peas, which are immature pea seeds, or edamame, which are immature soybean seeds). For the same reason, it may be preferable to use pulse which is in a state where the dry mass basis moisture content is a predetermined value or less as they mature. Specifically, the dry mass basis moisture content in the pulse to be used for the composition of the present invention may preferably be within the range of 0.01 mass % or more but less than 15 mass %. More specifically, the ratio may preferably be typically less than 15 mass %, particularly less than 13 mass %, furthermore but less than 11 mass %, or less than 10 mass %. On the other hand, the lower limit of the dry mass basis moisture content of the pulse may be, although not particularly limited to, typically 0.01 mass % or more.

When pulse is used in the composition of the present invention, the content of pulse in the composition of the present invention may be, although is not limited to, within the range of 10 mass % or more but 100 mass % or less in terms of dry mass basis. More specifically, the pulse content may preferably be 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more. The upper limit may preferably be, although is not limited to, 100 mass % or less, more preferably 95 mass % or less. These requirements for pulse may be satisfied at step (i).

When pulse is used for the composition of the present invention, it may be preferable to use pulse in the form of powder. Specifically, it is preferred to use pulse powder which, when measured in the same manner as the specific surface area per unit volume described below, has a particle diameter $d_{90}$ and/or $d_{50}$ which each satisfy a predetermined upper limit or less. Specifically, the particle diameter $d_{90}$ of the pulse powder after ultrasonication may preferably be within the range of 0.3pm or more but less than 500μm. More specifically, it may preferably be less than 500 μm, more preferably 450 μm or less, particularly 400 μm or less, or 350 μm or less, or 300 μm or less, or 250 μm or less, or 200 μm or less, or 150 μm or less, or 100 μm or less, or 90 μm or less, or 80 μm or less, or 70 μm or less, or 60 μm or less, or 50 μm or less. Likewise, the particle diameter $d_{50}$ of the pulse powder after ultrasonication may preferably be less than 500 μm, more preferably 450 μm or less, particularly 400 μm or less, or 350 μm or less, or 300 μm or less, or 250 μm or less, or 200 μm or less, or 150 μm or less, or 100 μm or less, or 90 μm or less, or 80 μm or less, or 70 μm or less, or 60 μm or less, or 50 μm or less, while the lower limit of each of the particle diameters $d_{90}$ and $d_{50}$ after ultrasonication may be, although not particularly limited to, typically 0.3 μm or more, or 1 μm or more, or 5 μm or more, or 10 μm or more. Especially if the composition has a certain size or more during extrusion, the composition tends to pulsate during molding, which deteriorates productivity and may result in an uneven composition surface. Therefore, it may be preferable to use powdered pulse with a certain size or less.

[Cereal]

The term "cereal" used herein refers to grains species but excluding rice, wheat and barley, which are main cereal species, and the concept of cereal includes so-called pseudo-cereals other than those belonging to Poaceae family (Acanthaceae, Ascomycota). When cereal is used in the composition of the present invention, preferable examples of pulse species that can be used include, although not limited to, one or more selected from Poaceae, Chenopodiaceae, and Amaranthaceae species, more preferably from Poaceae species. Specific examples include, although not limited to, awa (foxtail millet), hie (Japanese millet), kibi (common millet), sorghum, rye, oats, hatomugi (job's tear), corn, buckwheat, amaranthus, and quinoa. It is particularly desirable to use one or more of oats, amaranthus and quinoa. Cereal may preferably be substantially gluten-free (specifically, with a gluten content of less than 10 ppm by mass), more preferably gluten-free.

The content ratio of cereal in the food composition of the present invention in terms of dry mass basis may be within the range of 10 mass % or more but 100 mass % or less. More specifically, it may preferably be 10 mass % or more, more preferably 15 mass % or more, still more preferably 20 mass % or more, even more preferably 25 mass % or more, more preferably 30 mass % or more, still more preferably 35 mass % or more, still more preferably 40 mass % or more, still more preferably 45 mass % or more, still more preferably 50 mass % or more, still more preferably 55 mass % or more, still more preferably 60 mass % or more. The upper limit may preferably be, although is not limited to, 100 mass % or less, more preferably 95 mass % or less. These requirements for cereal may be satisfied at step (i).

In the case of a food composition containing both pulse and cereal, the total content of pulse and cereal may preferably satisfy these ranges. Specifically, the total content ratio of pulse and cereal in the food composition of the present invention in terms of dry mass basis may be within the range of 10 mass % or more 100 mass % or less. More specifically, it may preferably be 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more. The upper limit may be, although is not limited to, for example 100 mass % or less, or 95 mass % or less. These requirements for pulse and cereal may be satisfied at step (i).

* Other Food Ingredients:

The composition of the present invention may further contain any one or more food ingredients. Examples of such food ingredients include plant ingredients (vegetables, potatoes, mushrooms, fruits, algae, grains (especially rice, wheat, and barley, which are grains not included in cereals), seeds, etc.), animal ingredients (seafood, meat, eggs, milk, etc.), and microbial food products. The amount of these food ingredients can be set appropriately as long as they do not undermine the purpose of the present invention.

* Seasonings and food additives:

The composition of the present invention may contain any one or more seasonings, food additives, etc., or the contents of these seasonings may be limited as explained above. Examples of seasonings and food additives include:

soy sauce, miso (Japanese fermented soybean paste), alcohols, sugars (e.g., glucose, sucrose, fructose, glucose-fructose liquid sugar, glucose-fructose liquid sugar, etc.), sugar alcohols (e.g., xylitol, erythritol, maltitol, etc.), artificial sweeteners (e.g., sucralose, aspartame, saccharin, acesulfame K, etc.), minerals (e.g., calcium, potassium, sodium, iron, zinc, magnesium, etc., and their salts), flavoring agents, pH adjusters (e.g., sodium hydroxide, potassium hydroxide, lactic acid, citric acid, tartaric acid, malic acid and acetic acid), cyclodextrins, antioxidants (e.g., vitamin E, vitamin C, tea extract, green coffee bean extract, chlorogenic acid, spice extract, caffeic acid, rosemary extract, vitamin C palmitate, rutin, quercetin, peach extract, sesame extract, etc.), emulsifiers (e.g., glycerin fatty acid esters, acetic acid monoglycerides, lactic acid monoglycerides, citric acid monoglycerides, diacetyl tartaric acid monoglycerides, succinic acid monoglycerides, polyglycerin fatty acid esters, polyglycerin condensed linosylate esters, chiraya extracts, soybean saponins, chia seed saponins, sucrose fatty acid esters, lecithin, etc.), colorants, thickening stabilizers, etc.

However, in view of the recent increase in nature consciousness, the composition of the present invention may preferably be characterized in that it does not contain at least one, preferably two, more preferably three, of the so-called emulsifiers, colorants, and thickening stabilizer (e.g., those listed in the "Table of food additive substance names for labeling" section of the "Pocket Book of Food Additives Labeling (2011 edition)" as "colorants," "thickening stabilizers," and "emulsifiers").

In particular, the composition of the present invention may preferably not contain a gelling agent, since the composition can be given elasticity without any gelling agent while being prevented from having excessive elasticity. The composition of the present invention may preferably not contain an emulsifier, from the viewpoint of making the natural tastes of the ingredients easily perceptible. In addition, the composition of the present invention may preferably not contain any food additives (e.g., e.g., those listed in the "Table of food additive substance names for labeling" section of the "Pocket Book of Food Additives Labeling (2011 edition) used for food additive applications). From the perspective of making it easier to perceive the sweetness of the food itself, the composition of the present invention may preferably not contain added sugars (especially purified sugars such as glucose, sucrose, fructose, glucose fructose liquid sugar, fructose dextrose liquid sugar, etc.).

The composition of the present invention may preferably be characterized in that it contains little, or no, amount of sodium chloride. Conventional starch-containing solid paste compositions for heat cooking (especially those containing gluten in a network structure) retain compositional elasticity by containing sodium chloride, but have problems in terms of affecting the taste and resulting in excessive salt intake. These challenges were particularly pronounced in compositions in the dry state (e.g. dried udon noodles, dried hiyamugi noodles, etc.), where more than 3 mass% sodium chloride is usually used to maintain compositional elasticity. On the other hand, the composition of the present invention is preferable because it exhibits reduced elasticity loss and has a good quality even with a very limited amount of, or without the addition of, sodium chloride. The invention is also preferred for specific types of solid paste compositions for heat cooking such as pasta, udon noodles and bread, which normally have adhesion and elasticity due to the network structure gluten and sodium chloride, as the invention can be applied to produce a composition of good quality without the addition of sodium chloride. Specifically, the sodium chloride content in the composition of the present invention may preferably be within the range of 0 mass % or more but 3 mass % or less in terms of dry mass basis. More specifically, the upper limit may be typically 3 mass % or less, particularly 2 mass % or less, or 1 mass % or less, or 0.7 mass % or less, particularly 0.5 mass % or less, while the lower limit of the sodium chloride content in the composition of the present invention is not particularly restricted, and may be 0 mass %. In the present invention, the sodium chloride content in a starch-containing solid paste composition may be determined, for example, according to the "Salt equivalent" section in the Japan Standard Tables for Food Composition 2015 (7th revised edition), by measuring the amount of sodium using the atomic absorption method and multiplying the measured amount by 2.54.

* Smooth tissue part in the frozen section of the composition:

According to an embodiment of the present invention, the composition of the present invention may preferably be characterized in that when the frozen sections obtained by freezing and sectioning in the procedure described above are observed, it has a smooth tissue part with an average thickness of a predetermined value or more, along a predetermined percentage or more of the periphery of the composition on the cut surface. This physical property is desirable since the composition of the present invention satisfying this feature tends to prevent its components from leaking out during heat cooking. Although the reason for this is not clear, it is estimated that when there is a structure along the periphery of the composition that can be cut relatively smoothly compared to the interior of the composition, this structure is observed as a smooth tissue part when the composition is cryosectioned.

The "smooth tissue part" herein refers to a layer structure with an average thickness of a predetermined value or more, observed along the periphery of the frozen composition section image, and having a lighter color and less uneven appearance than the non-smooth portion. The "average thickness" of the smooth tissue part herein refers to the average value of the width of the smooth tissue part in the direction perpendicular to the periphery of the composition on the cut surface, when measured along the periphery of the composition.

Specifically, the smooth tissue part may preferably be formed along 30% or more, or 40% or more, or 50% or more, particularly 60% or more, more particularly 70% or more, still particularly 80% or more, or 90% or more, especially 100% (i.e., along the entire periphery of the composition on the cut plane) of the periphery of the composition on the cut plane. The smooth tissue part may also have an average thickness of typically 18 $\mu$m or more, or 20 $\mu$m or more, particularly 25 $\mu$m or more, more particularly 30 $\mu$m or more. The upper limit may preferably be, although is not restricted to, typically 1000$\mu$m or less.

The smooth tissue part can be measured by preparing a frozen section of the composition frozen at -25 °C (without treatment in hot water) by cutting a 30 $\mu$m thick section along a specific cut plane and observing it. The preparation and observation of such composition frozen sections is not restricted, but the following procedure is preferred, for example. The frozen composition is cut into a section with a thickness of 30 $\mu$m according to Kawamoto method described in "Use of a new adhesive film for the preparation of multi-purpose fresh-frozen sections from hard tissues, whole-animals, insects and plants", Arch. Histol. Cytol., (2003), 66[2]: 123-43. The thus-obtained frozen section of the composition is stained with, e.g., CBB solution (Coomassie Brilliant Blue R250: 0.1 mass %l; methanol: 40 mass %; acetic acid: 10 mass %). The thus-obtained frozen section is then placed under the field of view of a microscope with a magnification of 200x, for example, and a color photograph with pixel counts of 1360 $\times$ 1024 is taken for analysis.

*Non-swelling (density):

The composition of the present invention may preferably be, although is not limited to, a food in a non-swollen state (especially, not a swollen food whose density is less than 1.0 g/cm$^3$ due to swelling). In other words, the composition of the present invention may preferably be in a non-swollen state so that its density is equal to or higher than a predetermined value. Specifically, the density of the composition of the present invention may be within the range of 1.0g/cm$^3$ or more but less than 3.0g/cm$^3$. More specifically, the lower limit may preferably be 1.0g/cm$^3$ or more, or 1.1g/cm$^3$ or more, or 1.2g/cm$^3$ or more. The upper limit may be, although is not limited to, typically 3.0g/cm$^3$ less than, or less than 2.0g/cm$^3$. The density of a composition in the present invention can be determined by dividing back the amount of the compositional substance in question by the apparent volume of the composition in question. In other words, it is the value obtained by dividing the composition weight by the apparent volume of the composition (the combined volume of the "volume of the composition itself" and the "volume of the internal void"). Since the value of density is almost the same as the value of "specific gravity (ratio of the density of a substance to the density of water 0.999972 g/cm$^3$ at 4°C under atmospheric pressure)," it may also be specified by specific gravity with the numerical value in the above specification as a unitless number. Furthermore, the "bulk density" or "apparent bulk density" calculated from the bulk density, which is obtained by dividing the weight of the composition by the apparent bulk volume of the composition (which is a sum of "the volume of the composition itself," "the volume of pores connected to the outside on the surface of the composition," "the volume of internal voids," and "the voids formed between the composition and a virtual rectangle of minimum volume that the composition is inscribed in outside the composition") may satisfy the above requirements.

In the production of the composition of the present invention, after kneading at high temperature and pressure, the composition can be obtained by lowering the temperature while preventing swelling, usually with pressure applied, and then reducing the pressure to about atmospheric pressure.

[III: Method for Producing Starch-Containing Solid Composition for Heat Cooking]

(1) Summary:

The production method of the present invention includes carrying out at least steps (i) to (iii) mentioned below using the extruder of the present invention explained above.

> (i) The step of preparing a composition satisfying specific chemical makeups and properties.
> (ii) The step of conveying the composition from step (i) by the flight section of the screw.
> (iii) The step of kneading the composition conveyed by the flight section from step (ii) by the kneader section of the screw at an average temperature of less than 100°C and a pressurized condition of 1.0 MPa or more.

(2) Step (i): Preparation of a dough composition:

In this step (i), a food ingredient as a raw material for the composition of the present invention, e.g., pulse and/or cereal, may be mixed with other food ingredients optionally used along with water to prepare a composition which is a basis for the composition of the present invention (hereinafter also referred to as the "dough composition" or simply "dough composition" in the sense of "dough" prior to "paste composition" processing, as appropriate). The dough composition (or dough) may be in any form as long as the food ingredients are partly or wholly integrated with water, and it may be in liquid, sol, gel or solid form. For example, it may be in a plasticized form, such as bread dough, or it may be in a non-plasticized form, such as a minced form. The method for preparing the dough composition is not particularly restricted, but may be a method in which a food ingredient as a raw material for the composition of the present invention (preferably at least one or more pulse and/or cereal, optionally in combination with one or more other edible plants) is simply mixed with other food ingredient, seasoning, and other ingredients optionally used to prepare the dough composition. In addition to an embodiment in which the composition after preparation in step (i) is fed to said extruder, the production method of the present invention also includes an embodiment in which pulse and/or cereal are fed into the feed in a powdered state and is conveyed by the flight section while water is fed via the feeder to thereby prepare a dough composition (i.e., an embodiment in which steps (i) and (ii) are carried out simultaneously)

*Ingredients of the dough composition:

The dough composition may preferably be prepared so as to satisfy the various ingredient requirements explained below.

The starch content in the dough composition in terms of wet mass basis may preferably be typically within the range of 10.0 mass % or more, while the upper limit may be, although is not limited to, 80 mass % or less. More specifically, the lower limit may preferably be typically 10.0 mass % or more, preferably 15 mass % or more, or 20 mass % or more, or 25 mass % or more, or 30 mass % or more, or 35 mass % or more, or 40 mass % or more, or 45 mass % or more, especially 50 mass % or more, while the upper limit may be, although is not limited to, e.g., typically 80 mass % or less, or 75 mass % or less, or 70 mass % or less. The pulse- and/or cereal-derived starch may preferably satisfy the above ranges.

The dry mass basis moisture content in the dough composition may preferably be typically within the range of 25 mass % or more, while the upper limit may be, although is not limited to, for example 200 mass % or less. More specifically, the lower limit may preferably be typically 25 mass % or more, preferably 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, especially 80 mass % or more, while the upper limit may be, although is not limited to, e.g., typically 200 mass % or less, or 175 mass % or less, or 150 mass % or less.

The dry mass basis moisture content in the composition after extrusion according to the present invention may be the same as the dry mass basis moisture content in the dough composition. However, it may be preferable to subject the processed dough composition with a predetermined moisture content or more to drying treatment, because this may serve to age some of the starch in the composition and make the composition less prone to surface binding after cooking. In other words, the dry mass basis moisture content in the composition of the present invention is equal to or lower than that in the dough composition.

The dietary fiber (preferably, although not restricted, insoluble dietary fiber) content in the dough composition in terms of wet mass basis may be within the range of typically 3.0 mass % or more, while the upper limit may be, although is not limited to, for example 40 mass % or less. More specifically, the lower limit may preferably be typically 3.0 mass % or more, preferably 4.0 mass % or more, or 5.0 mass % or more, or 6.0 mass % or more, or 7.0 mass % or more, or 8.0 mass % or more, or 9.0 mass % or more, especially 10 mass % or more, while the upper limit may be, although is not limited to, e.g., typically 40 mass % or less, or 30 mass % or less. This requirement for the dietary fiber content may preferably be also satisfied by the soluble dietary fiber and/or by the insoluble dietary fiber content. Specifically, the soluble dietary fiber content and/or the insoluble dietary fiber content in the dough composition in terms of wet mass basis may be within the range of, e.g., typically 3.0 mass % or more but 40 mass % or less. More specifically, the lower limit may preferably be typically 3.0 mass % or more, particularly 4.0 mass % or more, or 5.0 mass % or more, or 6.0 mass % or more, or 7.0 mass % or more, or 8.0 mass % or more, or 9.0 mass % or more, especially 10 mass % or more, while the upper limit may be, although is not limited to, e.g., typically 40 mass % or less, or 30 mass % or less. The pulse- and/or cereal-derived dietary fiber (or insoluble dietary fiber, or soluble dietary fiber) content may preferably satisfy the above ranges.

The protein content in the dough composition in terms of wet mass basis may be within the range of typically 3.0 mass % or more as the lower limit, while the upper limit may be, although is not limited to, for example 40 mass % or less. More specifically, the lower limit may preferably be typically 3.0 mass % or more, preferably 4.0 mass % or more, or 5.0 mass % or more, or 6.0 mass % or more, or 7.0 mass % or more, or 8.0 mass % or more, or 9.0 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more, while the upper limit may be, although is not limited to, e.g., typically 40 mass % or less, or 30 mass % or less. The pulse- and/or cereal-derived protein may preferably satisfy the above ranges.

The contents of dietary fiber (or insoluble dietary fiber), starch, and protein in the dough composition herein each refer to the wet mass basis ratio calculated with the mass of the whole dough composition containing water as a denominator and the content of each ingredient as a numerator, and may be adjusted so as to satisfy their respective predetermined ranges by adjusting the ingredients contained in the edible plant (e.g., pulse) to be used as a raw material as appropriate. In other words, the content "in terms of wet mass basis" (also referred to simply as "wet mass basis ratio," "wet mass basis," "wet mass equivalent," or "wet basis") herein refers to the ratio of the content of each component, etc., calculated with the wet mass containing water of a composition or a fraction as the denominator and the content of each target component or object as the numerator.

When edible plant (e.g., pulse and/or cereal) is used as a raw material for the dough composition, the wet mass basis ratio of such edible plant (e.g., pulse) may preferably be within the range of 30 mass % or more but 100 mass % or less. More specifically, the lower limit may preferably be typically 30 mass % or more, particularly 40 mass % or more, more particularly 50 mass % or more, especially 60 mass % or more, or 70 mass % or more, or 80 mass % or more, or 90 mass % or more, or 100 mass %. The upper limit may be, although is not limited to, typically 100 mass % or less.

When edible plant (e.g., pulse and/or cereal) is used as a raw material for the dough composition, the ratio of the starch content and/or the protein content derived from edible plant (e.g., pulse, especially heat-treated pulse explained below) to the total starch content and/or the total protein content in the dough composition may preferably be a predetermined value or more. Specifically, the ratio of the starch content derived from edible plant (e.g., pulse and/or cereal) to the total starch content in the dough composition may preferably be within the range of 30 mass % or more but 100 mass % or less. More specifically, the ratio may preferably be 30 mass % or more, particularly 40 mass % or more, more particularly 50 mass % or more, especially 60 mass % or more, or 70 mass % or more, or 80 mass % or more, or 90 mass % or more, or 100 mass %. The upper limit is not particularly restricted, but may be typically 100 mass % or less. Likewise, the ratio of the protein content derived from edible plant (e.g., pulse and/or cereal) to the total protein content in the dough composition may preferably be within the range of 10 mass % or more but 100 mass % or less. More specifically, the ratio may preferably be 10 mass % or more, particularly 20 mass % or more, more particularly 30 mass % or more, especially 40 mass % or more, or 50 mass % or more, or 60 mass % or more, or 70 mass % or more, or 80 mass % or more, or 90 mass % or more, especially 100 mass %. The pulse-derived starch and protein may preferably be pea-derived starch and protein, most preferably starch and protein derived from yellow pea. Preferable examples of starch and protein derived from cereals include oats-derived starch and protein. It is preferable that the total of pulse-derived starch and protein and cereal-derived starch and protein satisfy the above ranges.

* Specific surface area per unit volume raw material after ultrasonication:

The production method of the present invention may be characterized in that a raw material to be used for preparing the dough composition may have a specific surface area per unit volume of a predetermined value or higher after ultrasonication. For example, edible plant (pulse or cereal) containing starch, protein, dietary fiber, etc., that has undergone the processing required in step (i) in advance may be pulverized to prepare a pulverized product with a certain level of specific surface area (paste or powder), which may optionally be moistened, and may be used as raw materials in step (i). The micronization process may be carried out before the processing of edible plants, simultaneously with processing using an extruder, etc., or as a pulverization process after the processing of edible plant. Specifically, one of the features is that the specific surface area per unit volume after ultrasonic treatment of a 2 mass% ethanol dispersion of the object to be measured, as described below, is greater than a predetermined value, as measured using the laser diffraction scattering method. Specifically, the raw material to be used for preparing the dough composition may be characterized in that the specific surface area per unit volume after ultrasonic treatment of a 2 mass% ethanol dispersion of the object to be measured, as described below, is equal to or greater than a predetermined value, as measured using the laser diffraction scattering method. Using the raw material having such characteristic makes it possible to form a strong continuous starch structure even without kneading under high-temperature conditions of 100°C or higher, just by performing the conveyance (step (ii)) and kneading (step (iii)) described below under low-temperature conditions of less than 100°C, thereby producing a solid composition for cooking that is resistant to cracking inside the composition during storage at room temperature even after a certain period of time (e.g., 3 days or more) and that is also resistant to leakage of ingredients inside the composition after heat cooking. Specifically, the specific surface area of the raw material per unit volume after ultrasonication may preferably be within the range of typically $0.10m^2/mL$ or more, while the upper limit may be, although is not limited to, for example $2.5m^2/mL$. More specifically, the lower limit may preferably be typically $0.10m^2/mL$ or more, preferably $0.15m^2/mL$ or more, or $0.20m^2/mL$ or more, or $0.25m^2/mL$ or more, especially $0.30m^2/mL$ or more. It is possible to adjust the specific surface area per unit volume after ultrasonication to a predetermined value or higher by, e.g., micronizing edible plant such as pulse and/or cereal as a raw material by crushing treatment. The upper limit for the specific surface area of the dough composition per unit volume after ultrasonication may be, although not limited to, typically $2.5m^2/mL$ or less, or $2.2m^2/mL$ or less, or $2.0m^2/mL$ or less.

As the pulverized product of edible plant material (i.e., the "pulverized product of starch-containing food material" described below) to be used in step (i), a wet pulverized product (e.g., paste) with a certain moisture content may be used in whole or in part as a raw material in step (i), or a dry pulverized product (e.g., powder) may be used in whole or in part as a raw material in step (i).

When a wet pulverized product is used as a raw material in step (i), the dry mass basis moisture content of the starch-containing food crushed product may preferably be adjusted to be 25 mass % or more, or 30 mass % or more, particularly 35 mass % or more, or 40 mass % or more, or 45 mass % or more, or 50 mass % or more, or 55 mass % or more, or 60 mass % or more. On the other hand, the upper limit for the dry mass basis moisture content may be, although is not limited to, 200 mass % or less, or 150 mass % or less, or 100 mass % or less, from the viewpoint of industrial production efficiency.

When a dry pulverized product is used as a raw material in step (i), the dry mass basis moisture content may be adjusted to within the range of less than 25 mass %, or less than 20 mass %, or less than 15 mass %, or less than 10 mass %. On the other hand, the lower limit for the dry mass basis moisture content may be, although is not limited to, 0.5 mass % or more, or 1 mass % or more, or 2 mass % or more, from the viewpoint of industrial production efficiency.

When dry and/or wet pulverized products are used as a raw material in step (i), water may be optionally added to the dough composition of step (i) to adjust the moisture content to between 0 mass % and 200 mass % on a dry mass basis. However, it is preferable to use dry ingredients are used as part or all of the ingredients used in step (i), because the properties of starch, including the degree of gelatinization, are easily maintained during storage of such dry ingredients.

It is possible to use, as a wet pulverized product, an undried composition that has not been subjected to a drying treatment after being extruded at step (iii) or later. In this regard, it is particularly preferable to use an undried composition as a wet pulverized product in step (i) at a ratio of 50% or less (or 40 mass% or less, or 30% or less) in terms of wet mass basis in step (i), because this can serve to reduce the disposal of food materials.

It is possible to use, as a dry pulverized product, a pulverized product of a dry composition that has been extruded at step (iii) or later and then subjected to drying treatment. In this regard, it is particularly preferable to use a pulverized product of a dry composition in terms of wet mass basis in step (i) at a ratio of 50 mass % or less (or 40 mass % or less, or 30 mass % or less, while the lower limit may be, although is not limited to, typically 0 mass % or more, or 1mass or more), because this can serve to reduce the disposal of food materials.

Therefore, the present invention includes Invention A as follows. (Invention A) A starch-containing food crushed product for used in the preparation of a composition at step (i), satisfying:

(1) a dietary fiber content of in terms of wet mass basis 3.0 mass % or more;
(2) a starch content of in terms of wet mass basis 10.0 mass % or more;
(3) a protein content of in terms of wet mass basis 3.0 mass % or more;
(4) a dry mass basis moisture content of less than 25 mass %;
(5) a degree of gelatinization of starch of 40 mass % or more; and
(6) a specific surface area per unit volume after ultrasonication of $0.10 m^2/mL$ or more.

In the present invention, the specific surface area per unit volume after ultrasonic treatment can be measured under the following conditions, after disturbing the dispersion of the dough composition. Ethanol is used as a solvent for measurement, because it is unlikely to affect the structure of the sample during the measurement of the dough composition. Specifically, 1 g of the sample is immersed in 50 g of ethanol, allowed to stand for about 5 minutes, then stirred and suspended with a spatula, and measured using a solution (2 mass% ethanol dispersion) that has passed through an 8-mesh mesh with a 2.36 mm aperture and 1.0 mm wire diameter (which corresponds to "No. 8" defined in "Alternative" of Nominal Dimensions, Permissible Variation for Wire Cloth of Standard Testing Sieves (U.S.A.) according to U.S.A. Standard Testing Sieves ASTM Specifications E 11-04). More specifically, 100 g of the suspension (20°C) is spread evenly on a sieve, and then subjected to vibration with a load that does not change the composition size until the fractional mass on the sieve is constant. After the processing, the solution that has passed the sieve is dispersed in ethanol at 2 mass% and used for the measurement. The laser diffraction particle size analyzer used for the measurement may be a laser diffraction particle size analyzer with a measurement range of at least 0.02 $\mu$m to 2000 $\mu$m by laser diffraction scattering, an example being Microtrac MT3300 EXII system marketed by Microtrac Bell Inc. The measurement application software used for the measurement is not limited, an example being DMS2 (Data Management System version 2, Microtrac Bell Inc.). When the device and the application software mentioned above are used, the measurement can be carried out by: carrying out cleaning by pressing the Wash button of the software; carrying out calibration by pressing the Set Zero button of the software; and directly loading the sample via the Sample Loading feature until the sample concentration is within the proper range. Specifically, a sample that has not been subjected to ultrasonic treatment is put into the measurement solvent (ethanol) circulating in the measurement system, the concentration is adjusted to within the appropriate range using the Sample Loading feature, and then the ultrasonic treatment (treatment with ultrasonic waves of 40 kHz frequency at 40 W output for 3 minutes) is performed by pressing the Ultrasonic Treatment button of the software. Then, after three times of defoaming, the sample loading can be carried out again to adjust the concentration to within the appropriate range. Thereafter, the sample is promptly laser diffracted at a flow rate of 60% with a measurement time of 10 seconds, and the result is used as the measurement value. The parameters for the measurement may be, e.g., Distribution indication: Volume; Particle refractive index: 1.60; Solvent refractive index: 1.36; Upper limit of measurement: 2,000.00 $\mu$m; Lower limit of measurement: 0.021 $\mu$m.

The specific surface area per unit volume [m$^2$/mL] herein refers to a specific surface area of particles per unit volume (1 mL) measured with a laser diffraction particle size distribution analyzer, assuming that the particles are spherical. The specific surface area of particles per unit volume assuming that the particles are spherical is a value based on a different mechanism from, e.g., those of values reflecting the constitution of particles and surface structures of particles (specific surface area per volume and per mass determined by, e.g., permeation and gas adsorption methods). The specific surface area of particles per unit volume assuming that the particles are spherical can be calculated as 6 $\times$ $\Sigma$(ai)/$\Sigma$(ai*di) particle where ai represents a surface area per particle and di represents a particle diameter.

When determining specific surface areas per unit volume of various particles in the present invention, it is preferable to measure the particle size distribution in terms of channels (CH), and then use the particle diameter for each measurement channel listed in Table A below as a standard. Specifically, according to Table A below, the frequency of particles that are smaller than the particle diameter specified for each channel and larger than the particle diameter specified for the channel with one number larger (for the largest channel in the measurement range, the particle diameter of the lower limit) is measured for each channel in Table A below, and the total frequency for all channels in the measurement range is used as the denominator to obtain the particle frequency % for each channel (also referred to as "particle frequency % for XX channel"). For example, the particle frequency % of channel 1 represents the frequency % of particles of 2000.00 $\mu$m or smaller but larger than 1826.00 $\mu$m.

[Table A]

| Channel | Particle size ($\mu$m) | Channel | Particle size ($\mu$m) | Channel | Particle size ($\mu$m) | Channel | Particle size ($\mu$m) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |

(continued)

| Channel | Particle size (μm) | Channel | Particle size (μm) | Channel | Particle size (μm) | Channel | Particle size (μm) |
|---------|--------------------|---------|--------------------|---------|--------------------|---------|--------------------|
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

*Degree of gelatinization of starch in the raw material:

The production method of the present invention may be characterized in that starch which has been highly gelatinized in advance is used as a raw material for the dough composition. This feature makes it possible to form a solid starch continuous structure (matrix structure) without kneading the dough under high-temperature conditions of 100°C or higher, but only by carrying out conveying (step (ii)) and kneading (step (iii)) as described below under low-temperature conditions of less than 100°C (the lower limit may be, although is not limited to, typically more than 0°C), resulting in a solid composition for cooking that does not easily crack inside the composition even after a certain period of time (e.g., 3 days or more) during storage at room temperature, and that does not easily leach out the components inside the composition after cooking. Specifically, the degree of gelatinization of starch in the dough composition at step (i) may be within the range of 40 mass % or more, while the upper limit may be, although is not limited to, for example 100 mass % or less. More specifically, the lower limit may preferably be typically 40 mass % or more, preferably 50 mass % or more, or 60 mass % or more, or 70 mass % or more, or 80 mass % or more, or 90 mass % or more, while the upper limit may be, although is not limited to, typically 100 mass % or less.

For the same reason, the starch to be used in the dough composition at step (i) may preferably be starch that has been pre-heated at a certain temperature or more. For example, according to the present invention, the starch to be used in the dough composition at step (i) may preferably be starch that has been pre-heated to a maximum temperature reached of 100°C or more under a water-containing condition with a dry mass basis moisture content of 25 mass % or more (or 30 mass % or more, or 35 mass % or more, or 40 mass % or more). More specifically, the starch may have been pre-heated at a temperature of typically 100°C or more but 200°C or less. More specifically, the starch may have been pre-heated at a maximum temperature of typically 100°C or more, or 110°C or more, or 120°C or more. The upper limit for the pre-heating temperature may be, although not limited to, typically 200°C or less, or 180°C or less. In addition, the starch to be used in the dough composition at step (i) may more preferably be pre-heated under a condition with a dry mass basis moisture content of less than a predetermined value. This is because starch that has been pre-heated at high temperatures with a dry mass basis moisture content of below a predetermined value tends to have low processability characteristics due to thermal decomposition. Specifically, the dry mass basis moisture content of starch subjected to pre-heating may preferably be within the range of 40 mass % or more 200 mass % or less. More specifically, the lower limit may preferably be typically 40 mass % or more, particularly 45 mass % or more, or 50 mass % or more, or 55 mass % or more, or 60 mass % or more, or 65 mass % or more, or 70 mass % or more, or 75 mass % or more, especially 80 mass % or more, while the upper limit may be, although is not limited to, typically 200 mass % or less, or 175 mass % or less, or 150 mass % or less. the starch may preferably be starch derived from edible plant, more preferably starch in the state of being contained in edible plant. The ratio of the starch content derived from the edible plant (preferably pulse and/or cereal) to the total starch content in the composition in terms of dry mass basis may preferably be within the range of 30 mass % or more 100 mass % or less. More specifically, the lower limit may preferably be typically 30 mass % or more, particularly 40 mass % or more, or 50 mass % or more, or 60 mass % or more, or 70 mass % or more, or 80 mass % or more, or 90 mass % or more, especially 100 mass %.

*Starch degrading enzyme activity in raw materials:

In order to provide the composition of the present invention with a starch degrading enzyme activity of a predetermined value or lower, it may be preferable to use, as a raw material for the dough composition at this step (i), starch or starch-containing edible plant (e.g., pulse and/or cereal) which has been processed so as to adjust the starch degrading enzyme activity to less than a predetermined value. Specifically, such raw materials may preferably be used such that the starch degrading enzyme activity in the dough composition containing starch or starch-containing edible plant (e.g., pulse and/or cereal) in terms of dry mass basis within the range of 0.0U/g or more but 60.0U/g or less. More specifically, the ratio may preferably be 100 U/g or less, particularly 60.0 U/g or less, or 50.0 U/g or less, or 40.0 U/g or less, or 30.0 U/g or less. On the other hand, the lower limit may be, although not particularly limited to, typically 0.0 U/g or more, or 0.1 U/g or more. Since starch degrading enzymes contained in edible plants (e.g., pulse and/or cereal) are extremely heat-resistant in general, in order to obtain an edible plant with a low starch degrading enzyme activity, it may be preferable to use a processing method in which heat treatment is carried out at a predetermined temperature or higher with a dry mass basis moisture content of 50 mass % or more. Specifically, the heating temperature in an environment with a dry mass basis moisture content of 50 mass% or more may preferably be within the range of 100°C or more but less than 200°C. More specifically, the lower limit may preferably be 100 °C or higher, particularly 110 °C or higher, especially 120°C or higher. On the other hand, the upper limit of the temperature may be, although not particularly limited to, typically less than 200 °C. The duration of heating may be set as appropriate as long as the starch degrading enzyme activity is adjusted at a predetermined value, but may be typically 0.1 minute or more.

*PDI of raw materials:

In order to provide the composition of the present invention with a PDI value of less than a predetermined value, it may be preferable to use, as a raw material for the dough composition at this step (i), protein or protein-containing edible plant (e.g., pulse and/or cereal) which has been processed so as to adjust the PDI value to less than a predetermined value. Specifically, the PDI value of protein or protein-containing edible plant (e.g., pulse and/or cereal) to be used as a raw material of the dough composition may preferably be within the range of 0 mass % or more but less than 55 mass %. More specifically, the upper limit may preferably be less than 50 mass %, or less than 45 mass %, or less than 40 mass %, or less than 35 mass %, or less than 30 mass %, or less than 25 mass %, or less than 20 mass %, or less than 15 mass %, especially less than 10 mass %. On the other hand, the lower limit of the ratio may be, although not particularly limited to, typically 0 mass % or more, more particularly 2 mass % or more, particularly 4 mass % or more.

The protein dispersibility index (PDI) value herein refers to an index of protein solubility, and can be obtained as the percentage of the soluble nitrogen content to the total nitrogen content in the composition {(soluble nitrogen content in the composition)/(total nitrogen content in the composition) $\times$ 100 (%)} according to the standard method. Specifically, a sample to be measured is mixed with 20 times the volume of water and then crushed (using a Microtech Nichion NS-310E3 homogenizer at 8500 rpm for 10 minutes), and the total nitrogen content of the resulting crushed liquid is multiplied by 20 to determine the total nitrogen content of the entire composition. The crushing solution is then centrifuged (3000G for 10 minutes), and the total nitrogen content of the supernatant obtained is then multiplied by 20 to determine the water soluble nitrogen content, whereby the PDI value in the composition can be determined. The total nitrogen content is measured using the combustion method (improved Dumas method) specified in the Food Labeling Law ("About Food Labeling Standards" (March 30, 2015, Shokuhin Table No. 139)).

In addition, the composition may more preferably be characterized in that the ratio of the protein content contained in edible plant (e.g., pulse and/or cereal) to the total protein content in the composition is a predetermined value or higher while the PDI value is a predetermined value or lower, since the resulting composition is less likely to leak its ingredients out into the boiling water. As a processing method for obtaining a protein with a low PDI value in the state of being contained in edible plant (e.g., pulse and/or cereal), it may be preferable to carry out heat treatment in a circumstance with a dry mass basis moisture content of 30 mass % or more at a predetermined temperature or higher, e.g., at a temperature of within the range of 100°C or more but less than 200°C. More specifically, the upper limit may preferably be 100°C or more, more preferably 105°C or more, particularly 110°C or more, especially 120°C or more. The upper limit of the temperature may be, although not particularly limited to, typically less than 200 °C. The duration of heating may be set as appropriate as long as the PDI value is adjusted at a predetermined value, but may be typically 0.1 minute or more, while the upper limit may be, although is not restricted to, typically 60 minutes or less.

*Particle diameter of insoluble dietary fiber in raw materials:

When edible plant (e.g., pulse and/or cereal) is used as a raw material for the dough composition, since the kneading treatment does not significantly change the shape of insoluble dietary fiber, the insoluble dietary fiber derived from such edible plant (e.g., pulse and/or cereal) may preferably have a predetermined size. It is highly likely that the insoluble fiber size in randomly crushed pulse powder is more than 450 $\mu$m (because the insoluble fiber in pulse is usually rod-shaped, and the laser diffraction particle size distribution measurement according to the invention tends to yield larger values). Therefore, the insoluble dietary fiber contained in food ingredients to be used in the present invention (especially food ingredients containing hard tissues, such as pulse with seed coat) may preferably have undergone specific crushing treatment in advance so as to adjust its size to within a specific range. Specifically, as explained above for the insoluble dietary fiber in composition, the particle size of the insoluble dietary fiber in edible plant (e.g., pulse and/or cereal) is evaluated by a method including treating the aqueous suspension of the edible plant (e.g., pulse and/or cereal) with protease and amylase, and subjecting the composition after the starch- and protein-degradation treatment, in which starch and protein are degraded by enzymes, to the ultrasonication and then to the measurement using a laser diffraction particle size analyzer, as mentioned above in relation to the specific surface area per unit volume, to determine the particle size distribution. Specifically, 6 mass % aqueous suspension of the edible plant (e.g., pulse and/or cereal) is treated with 0.4 volume % of protease and 0.02 mass % of $\alpha$-amylase at 20 °C for 3 days (also referred to as "[Procedure b]") to carry out the starch- and protein-digestion treatment, and the enzyme-treated composition is subjected to the measurement for the particle diameter distribution ($d_{90}$ and/or $d_{50}$) after ultrasonication. Such treatment degrades starch and protein among the constituents of the edible plant, so that the particle size distribution of the resulting degraded product is considered to reflect the particle size distribution of the structure composed mainly of insoluble dietary fiber.

Specifically, the particle diameter $d_{90}$ of the insoluble dietary fiber in the edible plant (e.g., pulse and/or cereal) obtained via the procedure mentioned above may preferably be within the range of 1$\mu$m or more but 450$\mu$m or less. More specifically, the upper limit may preferably be typically 450$\mu$m or less, or 400$\mu$m or less, or 350$\mu$m or less, or 300$\mu$m or less, or 250$\mu$m or less, or 200$\mu$m or less, or 150$\mu$m or less, or 100$\mu$m or less, or 90$\mu$m or less, or 80$\mu$m or less, or 70$\mu$m or less, or 60$\mu$m or less, or 50$\mu$m or less. Likewise, the particle diameter $d_{50}$ of the insoluble dietary fiber in the edible plant (e.g., pulse) obtained via the procedure mentioned above may preferably be within the range of 1$\mu$m or more but 450$\mu$m or less. More specifically, the upper limit may preferably be typically 450$\mu$m or less, or 400$\mu$m or less, or 350$\mu$m or less, or 300$\mu$m or less, or 250$\mu$m or less, or 200$\mu$m or less, or 150$\mu$m or less, or 100$\mu$m or less, or 90$\mu$m or less, or 80$\mu$m or less, or 70$\mu$m or less, or 60$\mu$m or less, or 50$\mu$m or less. If the particle diameter $d_{90}$ and/or $d_{50}$ of the insoluble dietary fiber in the edible plant exceeds these upper limits, the effects of the present invention may not be easily obtained. The reason for this is not clear, but it is estimated that large and coarse insoluble dietary fibers inhibit the formation of matrix structure from starch, etc., making it difficult for the effects of the invention to be achieved. On the other hand, the lower limit of the particle diameter $d_{90}$ and/or the particle diameter $d_{50}$ of insoluble dietary fiber contained in edible plant may preferably be, although not particularly limited to, typically 1 $\mu$m or more, more preferably 3 $\mu$m or more.

*CFW-stained sites in raw materials:

When edible plant (e.g., pulse and/or cereal) is used as a raw material for the dough composition, since the kneading treatment does not significantly change the shape of insoluble dietary fiber, the insoluble dietary fiber contained in the edible plant (e.g., pulse and/or cereal) may preferably have predetermined shapes. Specifically, as explained above for the insoluble dietary fiber in composition, when water suspension of edible plant (e.g., pulse and/or cereal) is treated with protease and amylase to enzymatically digest starch and protein to prepare a starch- and protein-digested product (specifically, a processed product from the starch- and protein-digestion treatment of [Procedure b]), and the product is stained with CFW (Calcofluor White) and then observed under fluorescence microscope, the average of the longest diameters and/or the average of the aspect ratios of CFW-stained sites each may preferably satisfy a predetermined value or lower. The thus-obtained CFW-stained sites are deemed to have structures composed mainly of insoluble dietary fiber among dietary fiber. Specifically, the arithmetic average of the longest diameters of CFW-stained sites in edible plant (e.g., pulse and/or cereal) measured in accordance with the procedure explained above may preferably be within the range of 2$\mu$m or more 450$\mu$m or less. More specifically, the upper limit may preferably be typically 450 $\mu$m or less, particularly 400 $\mu$m or less, or 350 $\mu$m or less, or 300 $\mu$m or less, or 250 $\mu$m or less, or 200 $\mu$m or less, or 150 $\mu$m or less, or 100 $\mu$m or less, or 90 $\mu$m or less, or 80 $\mu$m or less, or 70 $\mu$m or less, more particularly 60 $\mu$m or less, especially 50 $\mu$m or less. If the average of the longest diameters of CFW-stained sites exceeds these limits, the effects of the present invention may be less likely to be achieved. The reason for this is not clear, but it is estimated that insoluble dietary fibers with large diameters inhibit the formation of matrix structure from starch, etc., making it difficult for the effects of the invention to be achieved. On the other hand, the lower limit of the arithmetic average of the longest diameters of CFW-stained sites may preferably be, although not particularly limited to, typically 2 $\mu$m or more, more preferably 3 $\mu$m or more.

Since the kneading treatment at step (iii) does not significantly change the shape of dietary fiber (e.g., insoluble dietary fiber), it may be preferable to use an edible plant (e.g., pulse and/or cereal) in powder form which has been processed such that the insoluble dietary fiber contained therein has an aspect ratio of a predetermined value or lower. It is highly likely that the insoluble fiber size in randomly crushed pulse and/or cereal powder is more than 450 $\mu$m (because the insoluble fiber in pulse and/or cereal is usually rod-shaped, and the laser diffraction particle size distribution measurement according to the invention tends to yield larger values). In addition, if edible plant (e.g., pulse and/or cereal) powder is subjected to air sorting, it is likely that edible plant particles having specific shapes are removed, rendering the aspect ratios of CFW-stained sites in the resulting insoluble dietary fiber powder to be either too high or too low. Therefore, it may be preferable to use an edible plant (e.g., pulse and/or cereal) powder that has been subjected to certain crushing treatment to adjust the arithmetic average of the aspect ratios of CFW-stained sites, which are composed mainly of insoluble dietary fiber, to within a predetermined range. Specifically, the arithmetic average of the aspect ratios of CFW-stained sites in edible plant (e.g., pulse) measured in accordance with the procedure explained above may preferably be within the range of 1.1 or more but 5.0 or less. More specifically, the lower limit may preferably be typically 5.0 or less, particularly 4.5 or less, or 4.0 or less, or 3.5 or less, or 3.0 or less, or 2.5 or less, especially 2.0 or less. If the average of the aspect ratios of CFW-stained sites exceeds these limits, the effects of the present invention may be less likely to be achieved. The reason for this is not clear, but it is estimated that dietary fibers (e.g., insoluble dietary fibers) with large aspect ratios inhibit the formation of matrix structure from starch, etc., making it difficult for the effects of the invention to be achieved. On the other hand, the lower limit of the arithmetic average of the aspect ratios of CFW-stained sites may preferably be, although not particularly limited to, typically 1.1 or more, more preferably 1.3 or more.

The specific conditions and procedures for measuring various parameters related to insoluble dietary fiber in edible plant (e.g., pulse and/or cereal) used as a raw material for the dough composition, i.e., amylase and protease treatment, ultrasonication, particle size distribution (particle size $d_{90}$ and $d_{50}$) measurement, CFW staining and fluorescence microscopy, can be determined in accordance with the aforementioned methods for measuring various parameters related to insoluble dietary fiber in a composition explained above.

*Pulverization and powdering of raw materials:

When edible plant (e.g., pulse and/or cereal) is used as a raw material for the dough composition in the present invention, the edible plant may preferably have undergone pulverization and powdering process. The means and conditions for the pulverization and powdering process are not particularly limited. Specifically, the temperature during the pulverization and powdering process is not particularly limited, but it may preferably be dried at a temperature of 200°C or lower (while the lower limit may be, although is not limited to, typically 40°C or more), for example, since if the powder is exposed to too high temperatures, the elasticity of the composition of the present invention tends to decrease. However, when pulse and/or cereal is used as the edible plant and heated before subjected to pulverization and powdering for use, the temperature is not particularly limited since the heat load is reduced. The pressure during the pulverization and powdering process is not limited, and may be chosen from high pressures, normal pressures, and low pressures. Examples of devices for the pulverization process include, but are not limited to, blenders, mixers, mills, kneaders, crushers, disintegrators, and grinders. Specific examples that can be used include, for example, media stirring mills such as dry bead mills ball mills (rolling, vibrating, etc.), jet mills, high-speed rotating impact mills (pin mills, etc.), roll mills, hammer mills, etc.

*Heating and water addition treatment of raw materials:

When edible plant (e.g., pulse and/or cereal) containing starch is used as a raw material for the dough composition in the production method of present invention, it is preferred to use edible plant that has been heated under water-containing conditions as a pre-treatment. Such raw materials that have undergone prior heat hydrotreating treatment will suppress the low molecular weight of starch due to thermal decomposition, making it easier to obtain a solid composition that is less prone to surface binding.

Specifically, the dry mass basis moisture content of edible plant during thermal hydrotreatment may preferably be, although not limited to, within the range of 25 mass % but 200 mass % or less. More specifically, the lower limit may preferably be typically 25 mass % or more, particularly 30 mass % or more, or 40 mass % or more, especially 50 mass % or more. The upper limit of the dry mass basis moisture content is not particularly restricted, but may be typically 200 mass % or less, particularly 175 mass % or less. The heating temperature of edible plant during thermal hydrotreatment may preferably be, although not limited to, within the range of 100°C or more but 200°C or less within the range of. More specifically, the lower limit may preferably be typically 80°C or higher, particularly 90 °C or higher, more particularly 100 °C or higher, while the upper limit for the heating temperature is not limited, but may be typically 200 °C or lower, particularly 190 °C or lower.

According to the present invention, it is more preferable to use both an edible plant containing starch and an edible plant containing protein, more preferably an edible plant containing both starch and protein, and after pre-heating them with water, and subject the edible plant(s) to pre-heating under water-addition conditions before use. Heating of edible plant with water can be achieved by, e.g., steam heating. For example, the starch to be used in the composition at step (i) may preferably be starch derived from edible plant heated under a water-containing condition with a dry mass basis moisture content of 25 mass % or more (or 30 mass % or more, or 35 mass % or more, or 40 mass % or more) to a maximum temperature reached of 100°C or more, and the starch may preferably be used in the state of being contained in edible plant. The ratio of the starch content derived from edible plant (preferably pulse and/or cereal) to the total starch content of the composition in terms of dry mass basis may preferably be typically 30 mass % or more, particularly 40 mass % or more, or 50 mass % or more, or 60 mass % or more, or 70 mass % or more, or 80 mass % or more, or 90 mass % or more, especially 100 mass %.

On the other hand, when starch-containing edible plant (e.g., pulse and/or cereal) that has been powdered (e.g., to have a $d_{90}$ and/or $d_{50}$ < 1000$\mu$m) is subjected to pre-heating treatment before use, it may not be preferable to use edible plant heated (e.g., to a maximum temperature of 100°C or more) in a dry environment with a dry mass basis moisture content of less than 25 mass %, since localized heating of the starch may result in overheating, which may accelerate the thermal degradation of the amylopectin in its structure and gives the composition a sticky quality.

From the viewpoint of efficiency, it may be preferable to use, as the extruder used in the production method of the present invention, an extruder having a configuration in which the high-temperature and high-pressure heating treatment of raw materials such as pulse and/or cereal is conducted by processing them at a high temperature of 100°C or higher in the first stage of the extruder, and then adjusting the internal temperature to less than 100°C to conduct each step of the manufacturing method of the present invention in the latter stage of the extruder (e.g., the extruder 102 in Embodiment B shown in Figures 3 and 4 ), because after the heat and water treatment of the raw materials described in this section is carried out in the first stage of the extruder, the manufacturing method of the present invention can be continuously carried out in the latter stage of the extruder.

*Embodiment in which high-temperature, high-pressure, and strong kneading pre-treatment is carried out in the first stage of the extruder:

As a variant of the embodiment in which two independent extruders are used, raw materials such as pulse and/or cereal may be subjected to a high-temperature, high-pressure, and strong kneading treatment in the previous extruder, and the resulting composition may be optionally dried and then crushed to produce a starch-containing crushed composition, which may be used as part or all of the raw material (processed edible plant products) for preparing the composition at step (i) using the extruder of Embodiment shown in Figure 1. That is, the conditions for producing a starch-containing crushed composition or a dried starch-containing crushed composition described below can be adopted in the first half part of the processing, which corresponds to the pre-treatment in this embodiment.

The starch-containing food crushed composition or dried starch-containing food crushed composition may be produced in the first half of the processing (e.g., the first half of the extruder with tandem screws shown in Figures 3 and 4, specifically the twin-screw extruder with functions equivalent to 204A and 204B in Figure 3), which corresponds to the pre-treatment in Embodiment B shown in Figure 3. That is, the conditions for producing the starch-containing food crushed composition or dried starch-containing food crushed composition described below can be adopted in the first half of the processing, which corresponds to the pre-treatment in this embodiment.

The water content to be blended during high-temperature, high-pressure, and strong kneading in the extruder during the production of the starch-containing food crushed composition as a raw material may preferably be adjusted by mixing, in addition to the water contained in the raw materials such as pulse and/or cereal, additional water as appropriate, so that the dry mass basis moisture content of the dough composition (i.e., the moisture content calculated setting the weight of the sample without water as 100, and using the solid weight of the dough composition minus the weight of water as the denominator) becomes a predetermined percentage. This is because this will result in a food product that satisfies requirements (a) and/or (b) regarding starch grain structures, as described below. For example, the dry mass basis moisture content may preferably be within the range of 3 mass % or more but 100 mass % or less. More specifically, the lower limit for the dry mass basis moisture content in the dough composition may preferably be 3 mass % or more, particularly 5 mass % or more, particularly 7 mass % or more, especially 10 mass % or more, because the dough is more easily integrated and kneading strength is increased. On the other hand, the upper limit may be, although is not limited to, typically 100 mass % or less, preferably 80 mass % or less, more preferably 60 mass % or less, or 50 mass % or less, or less than 50 mass %, or 40 mass % or less, or less than 40 mass %, or 30 mass % or less, or less than 30 mass %, or 25 mass % or less, or less than 25 mass %, because this will facilitate drying treatment.

In addition, especially when producing starch-containing food crushed products, as described below, the amount of water content blended during high-temperature, high-pressure, and strong kneading may preferably be relatively small. For example, the dry mass basis moisture content in the dough composition may preferably be within the range of 3 mass % or more but 60 mass % or less. More specifically, the upper limit for the dry mass basis moisture content in the dough composition may preferably be 60 mass % or less, or 50 mass % or less, or less than 50 mass %, or 40 mass % or less, or less than 40 mass %, or 30 mass % or less, or less than 30 mass %, or 25 mass % or less, or less than 25 mass %, because the resulting composition has a quality that makes it susceptible to swelling. The lower limit may be, although is not limited to, typically 3 mass % or more, particularly 5 mass % or more, particularly 7 mass % or more, especially 10 mass % or more.

It may be preferable that, of the total moisture to be blended during processing at this stage, between 50% and 100% by mass be mixed in advance with raw material such as pulse and/or cereal, before feeding the raw materials into the extruder.

As a specific condition during kneading in the extruder during the production of a food crushed composition containing starch as a raw material, it may be preferable that the SME (specific mechanical energy) value obtained by Formula I be equal to or higher than a certain value. This is because the resulting composition will be a food crushed product containing starch grains that have been sufficiently broken as to satisfy the requirements (a) and/or (b) regarding starch grain structures described below. Specifically, the SME value may preferably be within the range of 300kJ/kg or more but 5000kJ/kg or less, in order to disrupt starch grains. More specifically, the lower limit for the SME with which the kneading is carried out may preferably be typically 300kJ/kg or more, particularly 320kJ/kg or more, or 330kJ/kg or more, or 340kJ/kg or more, or 350kJ/kg or more, or 360kJ/kg or more, or 370kJ/kg or more, or 380kJ/kg or more, or 390kJ/kg or more, or 400kJ/kg or more. The upper limit may be, although is not restricted to, typically 5000kJ/kg or less, or 4000kJ/kg or less, or 3000kJ/kg or less, or 2000kJ/kg or less. The screw speed of the extruder may preferably be typically more than 150 rpm, or more than 200 rpm, or more than 250 rpm.

The kneading may preferably be carried out under pressurized conditions relative to atmospheric pressure. The pressure during kneading can be measured by measuring the outlet pressure of the extruder. The lower limit for the pressure to be applied relative to atmospheric pressure during kneading may preferably be typically 0.01 MPa or more, particularly 0.03 MPa or more, or 0.05 MPa or more, or 0.1 MPa or more, or 0.2 MPa or more, or 0.3 MPa or more, or 0.5 MPa or more, or 1.0 MPa or more, or 2.0 MPa or more, or 3.0 MPa or more. On the other hand, the upper limit for pressure to be applied relative to atmospheric pressure during kneading may preferably be, although is not limited to, 50 MPa or less, or 30 MPa or less, or 10 MPa or less. It may be preferable to install a flow retarding structure near the tip side end point of the kneading section (preferably just after the end of the kneading section) to increase the pressure in the kneading section.

It is also preferable to set the kneading temperature in the extruder at 100°C or higher, because this will destroy the starch grain structure in pulse and/or cereal, resulting in a food crushed product that satisfies the requirements (a) and/or (b) regarding starch grain structure, as described below. Specifically, the kneading temperature may preferably be within the range of 100°C or more but 300°C or less. More specifically, the lower limit may preferably be typically 100°C or more, more preferably 105°C or more, or 110°C or more, or 115°C or more. By setting the lower temperature limit during extrusion as described above, the resulting composition can be in a swollen state, which facilitates subsequent pulverization. On the other hand, the upper limit for the extrusion temperature may be typically 300°C or less, or 250°C or less, or 200°C or less, or 190°C or less, or 180°C or less, or 170°C or less, or 165°C or less, or 160°C or less, or 155°C or less.

The dough temperature at the time of extrusion when a composition that has been subjected to high-temperature, high-pressure, and strong kneading is extruded may be, although is not limited to, either 100°C or more or less than 100°C. Compositions extruded at less than 100°C may become unexpanded (with a density of 1.00 g/cm$^3$ or higher) after extrusion, while compositions extruded at 100°C or higher may become expanded (with a density of less than 1.00 g/cm$^3$) after extrusion. When the composition is made in a non-swollen state after extrusion by setting the outlet temperature in the extruder below a predetermined temperature (e.g., less than 100°C), the temperature at which the extrusion process is performed may preferably be within the range of 0°C or more but less than 100°C. More specifically, the upper limit may preferably be typically less than 100°C, or less than 95°C, or less than 90°C, or less than 85°C, or less than 80°C, or less than 75°C, or less than 70°C, or less than 65°C, or less than at 60°C, while the lower limit may be, although is not limited to, typically 0°C or more, or 4°C or more, or 10°C or more, or 20°C or more, or 30°C or more, or 40°C or more, especially 50°C or more.

It is also preferable to make the composition in a swollen state after extrusion by setting the outlet temperature in the extruder above a predetermined temperature (e.g., 100°C or higher), because this causes starch to be a support structure that is easily crushable, whereby the subsequent crushing process can be easily performed. Although the principle is unknown, it is assumed that the moisture in the dough composition pressurized inside the extruder is kept in a liquid state despite the temperature being above 100°C, and then quickly released under atmospheric pressure so that the moisture in the dough evaporates rapidly as the pressure drops, forming voids in the composition and resulting in a composition in an expanded state after extrusion. In general, in order to produce a composition in a swollen state, the dough composition must be vigorously extruded before the temperature is lowered, so there is usually no incentive to employ a strong kneading process that reduces the conveyor speed. Moreover, if the temperature of the dough composition is further lowered inside the extruder, swelling of the composition will not occur in the first place. Therefore, there have been disincentives to employing a process that reduces the temperature at extrusion to less than 100°C. In the production of a composition in a swollen state, the outlet temperature of the extruder may be at least 100°C. Specifically, the temperature during extrusion may be within the range of 100°C or more but 300°C or less. More specifically, the lower limit may preferably be typically 100°C or more, more preferably 105°C or more, or 110°C or more, or 115°C or more. By setting the lower temperature limit during extrusion as described above, it is possible to produce the composition in a swollen state which facilitates subsequent pulverization. On the other hand, the upper limit for the temperature at extrusion may be typically 300°C or less, or 250°C or less, or 200°C or less, or 190°C or less, or 180°C or less, or 170°C or less, or 165°C or less, or 160°C or less, or 155°C or less.

The composition in the "swollen state" according to the present invention may preferably have a density of less than a predetermined value. Specifically, the density of the composition in the "swollen state" according to the present invention may preferably be within the range of $0.01 g/cm^3$ or more but less than $1.00 g/cm^3$. More specifically, the upper limit may preferably be less than $1.00 g/cm^3$, or less than $0.90 g/cm^3$, or less than $0.80 g/cm^3$. The lower limit may preferably be, although is not limited to, typically $0.01 g/cm^3$ or more, or $0.05 g/cm^3$ or more, or $0.10 g/cm^3$ or more.

The pulverization process of the post-extrusion composition may be performed so that the particle size $d_{50}$ and/or $d_{90}$ (preferably both $d_{50}$ and $d_{90}$) after ultrasonic treatment is about 1000 $\mu$m or less. The lower limit for the particle size $d_{50}$ and/or $d_{90}$ (preferably both $d_{50}$ and $d_{90}$) after ultrasonication may preferably be, although is not particularly limited to, typically 1 $\mu$m or more. As means for such pulverization, the aforementioned known methods can be used.

Drying treatment can be optionally performed on the composition after extrusion. The drying process may be performed either before or after the milling process, but it may be preferable to perform the drying process before the crushing process to ensure smooth pulverization. When drying treatment is performed, the dry mass basis moisture content may preferably decrease by 5% or more before and after the drying treatment (i.e., the percentage decrease defined as "{(the ratio of the dry mass basis moisture content in the composition before drying treatment) - (the ratio of the dry mass basis moisture content in the composition after drying treatment)} / (the ratio of the dry mass basis moisture content in the composition before drying treatment)" may preferably be a certain value or higher). The lowering ratio may preferably be 10% or more, particularly 15% or more, more particularly 20% or more, or 25% or more, or 30% or more, or 35% or more, or 40% or more, or 45% or more, especially 50% or more, while the upper limit may be, although is not limited to, e.g., typically 100% or less, or 95% or less. In addition, the dry mass basis moisture content in the composition after the drying treatment may preferably be less than 60 mass %, or less than 55 mass %, or less than 50 mass %, or less than 45 mass %, or less than 40 mass %, or less than 35 mass %, or less than 30 mass %, or less than 25 mass %, or less than 20 mass %, or less than 15 mass %. On the other hand, the lower limit for the dry mass basis moisture content in the composition of the present invention may preferably be, although is not limited to, 0.5 mass % or more, or 1 mass % or more, or 2 mass % or more, from the viewpoint of industrial production efficiency. The dry mass basis moisture content in the composition of the present invention may be derived from various components of the composition, or it may be derived from the water further added during the processing according to the present invention.

When two types of screws with different functions are connected in series, as in Embodiment B shown in Figure 3, and when the composition after high-temperature, high-pressure, and strong kneading of raw materials such as pulse and/or cereal in the previous extruder is used as part or all of the raw materials (processed edible plant products) for the production in step (i) by the extruder of the embodiment shown in Figure 1, it is possible to prepare a starch-containing food crushed composition that can be stored at room temperature (20°C) for a certain period of time (e.g., from 1 day to 10 years). However, in order to prevent aging of starch during storage, it may be preferable to perform drying treatment either before or after the crushing process to prepare a dry crushed starch-containing composition.

The degree of gelatinization of starch in the dry crushed starch-containing composition after drying may preferably be equal to or higher than a predetermined value, because this makes it easier to obtain the effects that cracks do not occur inside the composition even after a certain period of time (e.g., 3 days or more) during storage at room temperature, and that the ingredients inside the composition do not easily leak out after cooking. Specifically, the degree of gelatinization of starch in the dry crushed starch-containing composition after drying may preferably be within the range of 50 mass % or more 100 mass % or less. More specifically, the ratio may preferably be typically 50 mass % or more, particularly 60 mass % or more, or 70 mass % or more, or 80 mass % or more, especially 85 mass % or more. On the other hand, the upper limit for the degree of gelatinization may preferably be, although not limited to, typically 100 mass %, or 100 mass % or less, or 99 mass % or less, or 95 mass % or less, or 90 mass % or less.

Therefore, the present invention encompasses Invention B and Invention C below.

(Invention B)

A method for producing a starch-containing food crushed product in the swollen state for use in step (i) using an extruder, comprising the steps of:

(I) adding water to pulse powder and/or cereal powder to thereby adjust the dry mass basis moisture content to 3 mass % or more, or 5 mass % or more, or 7 mass % or more, or 10 mass % or more, while the upper limit may be, although is not restricted to, typically 100 mass % or less, or 80 mass % or less, or 60 mass % or less, or 40 mass

% or less, or 30 mass % or less;

(II) kneading the composition prepared in step (I) under a pressurized condition at a temperature of 100°C or more 300°C or less, with an SME value of 300kJ/kg or more, or 320kJ/kg or more, or 330kJ/kg or more, or 340kJ/kg or more, or 350kJ/kg or more, or 360kJ/kg or more, or 370kJ/kg or more, or 380kJ/kg or more, or 390kJ/kg or more, or 400kJ/kg or more, while the upper limit may be, although is not restricted to, e.g., typically 5000kJ/kg or less, or 4000kJ/kg or less, or 3000kJ/kg or less, or 2000kJ/kg or less;

(III) extruding the composition kneaded in step (II) under an atmospheric pressure to thereby cause it to swell;

(IV) optionally subjecting the composition prepared in step (III) to drying treatment; and

(V) crushing the composition prepared in step (III) or (IV).

(Invention C)

The method for producing a starch-containing food crushed product according to Invention B, wherein the composition temperature in step (III) is 100°C or more.

When two types of screws with different functions are connected in series, as in Embodiment B shown in Figure 3, and when the composition heated and treated in the extruder of the first stage is directly fed, transferred by conveyor, or pneumatically conveyed, etc., to the extruder of the second stage within a certain period of time from the completion of the treatment in the first stage to the start of the treatment in the second stage, The production conditions described above can be employed in the first half of the process, which corresponds to pre-processing. However, in order to control starch aging especially during the conveying process from the extruder in the first stage to the extruder in the second stage, it may be preferable to make the composition in a non-swollen state after extrusion by setting the outlet temperature in the extruder in the first half part corresponding to the preprocessing to less than a predetermined temperature (e.g., less than 100°C). Specifically, the temperature at which the extrusion treatment is carried out may preferably be within the range of 0°C or more but less than 100°C. More specifically, the lower limit may preferably be typically less than 100°C, or less than 95°C, or less than 90°C, or less than 85°C, or less than 80°C, or less than 75°C, or less than 70°C, or less than 65°C, or less than 60°C, or less than 55°C, or less than 50°C, or less than 45°C, or less than at 40°C, while the lower limit may be, although is not limited to, typically 0°C or more, or 4°C or more.

In this embodiment, it may be preferable that no drying treatment be performed on the composition after extrusion in order to inhibit starch aging. In other words, the decremental difference in the dry mass basis moisture content before and after the conveying process from the extruder of the first stage to the extruder of the second step (i.e., the decremental difference defined as "(the dry mass basis moisture content in the composition immediately after extrusion from the first-stage extruder) - (the dry mass basis moisture content in the composition fed to the second-stage extruder)") may preferably be equal to or less than a certain value. Specifically, this decremental difference may preferably be 10 mass % or less, or 8 mass % or less, particularly 5 mass % or less. The lower limit may be, although is not limited to, from the viewpoint of industrial production efficiency , for example 0 mass % or more, or 0.5 mass % or more, or 1 mass % or more, or 2 mass % or more. The dry mass basis moisture content in the composition of the present invention may be derived from various components of the composition, or may be derived from the water added during processing in the present invention. For example, the relative humidity around the composition may be increased by partially sealing the transport environment from outside, or by spraying water in mist form, etc., in order to suppress this decremental difference.

*Particle diameter of the dough composition

The particle size of the entire dough composition may be similar in size to the edible plant (e.g., pulse and/or cereal) powder that is preferably used as raw materials. Specifically, ethanol is used as a solvent for measurement, because it is unlikely to affect the structure of the sample during the measurement of the dough composition. Upon measurement, the sample is diluted and suspended in a solvent in advance, and the measurement is performed with the sample homogeneously suspended in the solvent. Specifically, 1 g of the sample is immersed in 50 g of ethanol, allowed to stand for about 5 minutes, then stirred and suspended with a spatula, and measured using a solution (2 mass% ethanol dispersion) that has passed through an 8-mesh mesh with a 2.36 mm aperture and 1.0 mm wire diameter (which corresponds to "No. 8" defined in "Alternative" of Nominal Dimensions, Permissible Variation for Wire Cloth of Standard Testing Sieves (U.S.A.) according to U.S.A. Standard Testing Sieves ASTM Specifications E 11-04). More specifically, 100 g of the suspension (20°C) is spread evenly on a sieve, and then subjected to vibration with a load that does not change the composition size until the fractional mass on the sieve is constant. After the processing, the solution that has passed the sieve is dispersed in ethanol at 2 mass% and used for the measurement. The particle diameter after ultrasonication is measured from the particle size distribution obtained by measuring the same method as described above for specific surface area per unit volume using a laser diffraction particle size analyzer.

The particle size $d_{90}$ after ultrasonication of the entire dough composition measured by the above procedure may preferably be within the range of 0.3μm or more but less than 500μm. More specifically, the upper limit may preferably be typically less than 500μm, or 450μm or less, or 400μm or less, or 350μm or less, or 300μm or less, or 250μm or less, or 200μm or less, or 150μm or less, or 100μm or less, or 90μm or less, or 80μm or less, or 70μm or less, or 60μm or less, or 50μm or less. The particle diameter $d_{50}$ after ultrasonication may preferably be typically less than 500μm, or 450μm or less, or 400μm or less, or 350μm or less, or 300μm or less, or 250μm or less, or 200μm or less, or 150μm or less, or 100μm or less, or 90μm or less, or 80μm or less, or 70μm or less, or 60μm or less, or 50μm or less. The lower limit for $d_{90}$ and $d_{50}$ may be, although not limited to, typically 0.3μm or more, or 1μm or more.

*Characterization of dough compositions by gel filtration chromatography measurement:

In the production method of the present invention, the dough composition of step (i) may preferably be a composition that satisfies the following characteristics when subjected to gel filtration chromatography measurement.

The terms "molecular weight distribution" or "molecular weight distribution curve" used herein refers to a distribution diagram obtained by plotting the logarithms of molecular weights on the horizontal axis (x-axis) and the percentage (%) of the measured value at each logarithm of molecular weight against the total RI detector measured values over the entire measurement range on the vertical axis (y-axis). In addition, when the composition is subjected to isothermal treatment at 90°C in 40-fold volume of water for 15 minutes, and then subjected to [Procedure a] below to obtain purified starch which is then analyzed [Condition A] to obtain a molecular weight distribution curve, the area under the curve is calculated from the molecular weight distribution curve as follows. That is, after numerically correcting the entire curve so that the lowest value in the measurement range is 0, the area under the curve is calculated by plotting the logarithms of molecular weights on the horizontal axis (X-axis) with even intervals. This allows proper evaluation of the low molecular weight fraction (the fraction around [value α]), which has a large quality effect but is underestimated in molecular weight conversion. The thermostatic treatment at 90°C for 15 minutes may be too severe if the temperature is too high or if the composition is agitated by thermal convection. In this case, it is preferable to perform the thermostatic treatment so that the treatment temperature does not rise too high, by putting the composition into a container such as an Eppendorf tube, adding 40 mass times the amount of water adjusted to 90°C, sealing the container, and then bathing the composition in boiling water while slowly stirring to make the internal temperature uniform.

* [Procedure a] :

[Procedure a] is a procedure in which 2.5% aqueous dispersion of the composition (a dispersion prepared by putting the composition into water at 40 mass times its volume) in liquid is pulverized, treated with proteolytic enzyme, and an ethanol-insoluble and dimethyl sulfoxide-soluble component is obtained as purified starch. The technical significance of the [Procedure a] is to remove impurities such as proteins with relatively close molecular sizes and also to obtain purified starch using its ethanol-insoluble and dimethyl sulfoxide-soluble properties to thereby prevent column blockage during gel filtration chromatography and improve the accuracy and reproducibility of the analysis.

The method for crushing the composition after the thermostatic treatment in this [Procedure a] may be any method that can sufficiently homogenize the composition, an example of which is to crush the composition at 25,000 rpm for 30 seconds using a homogenizer NS52 (Microtech Nichion, Inc.).

The proteolytic enzyme treatment in this [Procedure a] may be any treatment that can sufficiently enzymatically degrade the proteins in the composition. An example of the treatment is to add 0.5 mass % proteolytic enzyme (Proteinase K by Takara Bio, product code 9034) to the composition after the pulverizing treatment and allow them to react for 16 hours at 20°C.

The extraction of ethanol-insoluble and dimethyl sulfoxide-soluble components from the pulverized composition (or pulverized defatted composition) in this [Procedure a] is not limited, but may be carried out, for example, as follows. (i) After having undergone pulverizing and optional degreasing treatment, the composition is mixed with 240-fold volume of 99.5% ethanol (FUJIFILM Wako Pure Chemicals Co.), and the mixture is centrifuged (e.g., at 10000 rpm for 5 minutes). The precipitate fraction is collected as the ethanol-insoluble component. Next, (ii) the resulting ethanol-insoluble fraction is mixed with 80-fold volume of dimethyl sulfoxide (CAS67-68-5, FUJIFELM Wako Pure Chemicals Co.) based on the initial volume of the crushed composition. The mixture is dissolved by isothermal treatment at 90°C for 10 minutes with stirring, and the dissolved solution after isothermal treatment is centrifuged (e.g., at 10000 rpm for 5 minutes). The resulting supernatant is collected to obtain dimethyl sulfoxide-soluble fraction dissolved in dimethyl sulfoxide. Then, (iii) the resulting dimethyl sulfoxide-soluble fraction dissolved in dimethyl sulfoxide is mixed with 240-fold volume of 99.5% ethanol (FUJIFILM Wako Pure Chemicals Co.), and the mixture is centrifuged (e.g., at 10000 rpm for 5 minutes). The precipitate fraction is collected. Then, (iv) the above (iii) is repeated three times, and the final precipitate obtained is dried under reduced pressure, whereby the ethanol-insoluble and dimethyl sulfoxide-soluble component can be obtained as purified starch.

\* [Condition A]:

The [Condition A] means a procedure in which the product from the treatment of [Procedure a] above is dissolved into 1M aqueous solution of sodium hydroxide at a concentration of 0.30 mass %, allowed to stand at 37°C for 30 minutes, mixed with an equal volume of water and an equal volume of eluent (e.g., 0.05M NaOH/0.2% NaCl), and then subjected to filtration with a 5-$\mu$m filter. 5mL of the filtrate is then subjected to gel filtration chromatography, and a molecular weight distribution in an interval with molecular weight logarithms of 5.0 or more but less than 9.5 is measured.

The technical significance of this [Condition A] is to prevent column blockage during gel filtration chromatography by removing insoluble coarse foreign matter from starch dissolved in water under alkaline conditions by filtration, thereby improving the accuracy and reproducibility of the analysis.

That is, the dough composition of step (i) is subjected to gel filtration chromatography on the aforementioned filtrate obtained under [Condition A] of purified starch obtained by treating the dough composition of step (i) either as is or after thermostatic treatment at 90°C for 15 minutes in a specific 40 mass times volume of water and then treated according to [Procedure a] above, and then subjected to gel filtration chromatography, whereby the mass average molecular weight distribution in the predetermined interval described below within the logarithmic range of molecular weight less than 5.0 to 9.5 is measured. The molecular weight distribution curve thus obtained is analyzed after data correction so that the lowest value is zero, to obtain the mass-average molecular weight logarithm and the ratio of the area under the curve in a given molecular weight logarithm interval to the total area under the curve obtained from the molecular weight distribution curve in the given molecular weight logarithm range. Therefore, gel filtration chromatography may preferably be set up to obtain these values as appropriate.

\*Measurement conditions for gel filtration chromatography:

In the present invention, it may be preferable to use, as gel filtration columns for gel filtration chromatography, the combination of a gel filtration column with normal logarithm of the exclusion limit (Da) in a middle molecular weight logarithm range (between 6.5 and 8.0) and a gel filtration column with normal logarithm of the exclusion limit (Da) in a lower molecular weight logarithm range (less than 6.5) among the molecular weight logarithm of 5.0 or more but less than 9.5 to be measured. It is more preferable to adopt a column configuration in which these plural gel filtration columns with different molecular exclusion limits within the aforementioned ranges are connected in series (in tandem) from the one with the highest molecular exclusion limit to the one with the lowest, in order from the upstream of analysis. Such a column configuration allows for the starch with molecular weight logarithms corresponding to [value $\beta$] (i.e., 6.5 or more but less than 8.0) to be separated from the starch with molecular weight logarithms corresponding to the smaller [value $\alpha$] (i.e., 5.0 or more but less than 6.5) and/or from the starch with molecular weight logarithms corresponding to the larger [value $\gamma$] (8.0 or more but less than 9.5), and for each parameter to be measured appropriately.

A specific example of such a combination of gel filtration columns is the following combination of four columns connected in tandem.

  \*TOYOPEARL HW-75S (made by Tosoh Co., exclusion limit molecular weight (logarithm): 7.7Da, average pore diameter 100 nm or more, $\Phi$2cm$\times$30cm): two columns.
  \*TOYOPEARL HW-65S (made by Tosoh Co., exclusion limit molecular weight (logarithm): 6.6Da, average pore diameter 100 nm, $\Phi$2cm$\times$30cm): one column.
  \*TOYOPEARL HW-55S (made by Tosoh Co., exclusion limit molecular weight (logarithm): 5.8Da, average pore diameter 50 nm, $\Phi$2cm$\times$30cm): one column.

The eluting agent for gel filtration chromatography may be, although not restricted, 0.05M NaOH/0.2% NaCl. The conditions for gel filtration chromatography may be, although not restricted, such that the analysis can be carried out at an oven temperature of 40°C, at a flow rate of 1 mL/min, and with a unit time of 0.5 seconds. The detection equipment for gel filtration chromatography may be, although not restricted, an RI detector (RI-8021 manufactured by Tosoh Co., Ltd.). Data analysis methods for gel filtration chromatography are not limited, but specific examples include the following. Measurement values obtained from the detection instrument within the molecular weight logarithmic range to be measured (i.e., 5.0 or more but less than 9.5) are corrected so that the lowest value within the measurement range is zero. A calibration curve is prepared from the peal top elution times of two linear standard pullulan markers for size exclusion chromatography with a peak top molecular weight of 1660000 and a peak top molecular weight of 380000 (e.g., P400 (DP2200, MW380000) and P1600 (DP9650, MW1660000), both manufactured by Showa Denko Co.). Using the property that the molecular weight logarithm is proportional to the elution time, each elution time is converted to a mass molecular weight logarithmic value (also referred to as the molecular weight logarithm or the mass molecular weight logarithm). Conversion of the elution time (more specifically, the elution time obtained by analysis at an oven temperature of 40°C, at a flow rate of 1 mL/min, and with a unit time of 0.5 seconds) to the molecular weight logarithm in this manner allows for measurement data in which the molecular weight logarithms are distributed at even intervals. In addition, the sum of the measurement values obtained at all elution times within a given molecular weight logarithmic range (e.g., 5.0 or more but less than 9.5) of the measurement target is set at 100, and the measured value at each elution time (molecular weight log) is expressed as a percentage. This allows for the molecular weight distribution of the measured sample (X-axis: molecular weight logarithm, Y-axis: percentage (%) of the measured value at each molecular weight logarithm to the total of the measurement values from the RI detector over the entire measurement range) to be calculated, and for a molecular weight distribution curve to be created.

*The numerical range of each parameter as measured by gel filtration chromatography:

The production method of the present invention may preferably be characterized in that when the dough composition in step (i) is subjected to isothermal treatment at 90°C for 15 minutes in 40-fold mass of water and then to [Procedure a] below, and the resulting product is subjected to measurement under [Condition A] below to obtain a molecular weight distribution curve in an interval with molecular weight logarithms of 5.0 or more but less than 8.0 (hereinafter referred to as "MWDC$_{5.0-8.0}$"), the ratio of the area under the curve in an interval with molecular weight logarithms of 5.0 or more but less than 6.5 to the area under the entire curve (hereinafter referred to as "AUC1") is equal to or less than a predetermined value. Specifically, the AUC1 measured for the dough composition in step (i) may preferably be within the range of 10% or more 70% or less. More specifically, the upper limit may preferably be typically 70% or less, particularly 65% or less, or less than 65%, or 60% or less. Dough compositions with AUC1 values less than or equal to the predetermined values mentioned above are highly probable that the aforementioned heat and water treatment has inactivated the intrinsic enzyme that degrades the relatively high molecular weight fraction (molecular weight logarithms of 6.5 or more but less than 8.0), which is thought to consist mainly of amylopectin. The lower limit may be, although is not limited to, typically 10% or more, or 15% or more.

The production method of the present invention may preferably be characterized in that in the molecular weight distribution curve (MWDC$_{5.0-8.0}$) of the dough composition in step (i), the ratio of the area under the curve in an interval with molecular weight logarithms of 6.5 or more but less than 8.0 to the area under the entire curve (hereinafter referred to as "AUC2") is equal to or higher than a predetermined value. Specifically, the AUC2 value obtained by subjecting the dough composition in step (i) to the measurement mentioned above may preferably be within the range of 30% or more but 90% or less. More specifically, the upper limit may preferably be typically 30% or more, particularly 35% or more, particularly 40% or more, or 45% or more. Dough compositions with AUC2 values more than or equal to the predetermined value mentioned above have a high probability of having a moderate amount of amylopectin remaining in the starch after heat treatment. The upper limit may be, although is not restricted to, typically 90% or less, or 85% or less.

The production method of the present invention may preferably be characterized in that when the composition from step (i) is subjected to the [Procedure a] above, and the resulting product is subjected to measurement under the [Condition A] above to obtain a molecular weight distribution curve in an interval with molecular weight logarithms of 6.5 or more but less than 9.5 (hereinafter referred to as "MWDC$_{6.5-9.5}$"), the ratio of the area under the curve in an interval with molecular weight logarithms of 6.5 or more but less than 8.0 to the area under the entire curve (hereinafter referred to as "AUC3") is equal to or higher than a predetermined value. Specifically, the AUC3 value obtained by subjecting the dough composition in step (i) to the measurement mentioned above may preferably be within the range of 30% or more but 100% or less. More specifically, the lower limit may preferably be typically 30% or more, particularly 35% or more, particularly 40% or more, or 50% or more, or 60% or more, or 70% or more, or 80% or more. Dough compositions with AUC3 values more than or equal to the predetermined value mentioned above are desirable because they have a quality that makes them less likely to bind when subjected to a drying process, resulting in higher productivity. Although the principle behind this is unknown, it is thought to be due to the fact that among the high molecular weight starch fractions (molecular weight logarithms of 6.5 or more but less than 9.5), which are thought to be mainly amylopectin, there are many relatively low molecular weight fractions (molecular weight logarithms of 6.5 or more but less than 8.0) that have characteristics of low adhesion. The upper limit may be, although is not restricted to, typically 100%, or 100% or less, or 98% or less.

Since grains other than cereal, such as rice, wheat, and barley, tend to contain a large fraction with molecular weight logarithms of 8.0 to 9.5, the total content of grains other than cereal (e.g., rice, wheat, and barley) may preferably be equal to or lower than a predetermined ratio. Specifically, the total content of grains other than cereal (e.g., rice, wheat, and barley) in terms of dry mass basis may preferably be 0 mass % or more but 50 mass % or less (or 40 mass % or less, or 30 mass % or less, or 20 mass % or less, or 10 mass % or less, or substantially absent, or absent). Alternatively, the total content of starch derived from grains other than cereal (e.g., rice, wheat, and barley) in terms of dry mass basis may preferably be 0 mass % or more 50 mass % or less (or 40 mass % or less, or 30 mass % or less, or 20 mass % or less, or 10 mass % or less, or substantially absent, or absent. Alternatively, the ratio of the total content of starch derived from grains other than cereal (e.g., rice, wheat, and barley) to the total starch content in terms of dry mass basis may preferably be 0 mass % or more 50 mass % or less (or 40 mass % or less, or 30 mass % or less, or 20 mass % or less, or 10 mass % or less, or substantially absent, or absent. Unless otherwise specified, the phrase "substantially absent" herein refers to a content being less than 10 mass ppm.

The production method of the present invention may preferably be characterized in that the ratio of the area under the curve in an interval with molecular weight logarithms of 3.5 or more but less than 5.0 to the molecular weight distribution curve $MWDC_{3.5-6.5}$ (hereinafter referred to as AUC4) is within a predetermined range. Specifically, the AUC4 value of the composition of the present invention may preferably be within the range of 10% or more but 70% or less. More specifically, the lower limit may preferably be typically 10% or more, or 15% or more, particularly 20% or more, or 25% or more, or 30% or more, or 35% or more, or 40% or more. The reason for this is not known, but it is thought that the fraction of amylose (thought to be contained in the fraction with molecular weight logarithms of 5.0 or more but less than 6.5) contained in the starch that is partially or completely broken down to dextrins with lower molecular masses (thought to be contained in the fraction with molecular weight logarithms of 3.5 or more but less than 5.0) being equal to or greater than a predetermined value is considered to result in a composition with a good texture. On the other hand, the upper limit may be, although is not limited to, e.g., typically 70% or less, or 60% or less, or 50% or less, or 45% or less.

(3) Step (ii): Conveying step

In step (ii), the dough composition prepared in step (i) is conveyed by the flight section of the screw in the extruder. The ratio of the length of the flight section to the total length of the screw in the extruder used in this step may preferably be adjusted to be equal to or higher than a predetermined value (at least 50% or more, while the upper limit may be, although is not restricted to, typically less than 100%), since this helps ensure a relatively long transport time by the flight section of the screw in step (ii). It is assumed that this is one of the reasons that even if kneading is performed at a relatively low temperature of less than 100°C (the lower limit is not particularly restricted, but usually 40°C or higher) in the subsequent step (iii), strong continuous starch structures are formed, whereby a solid composition is obtained that is resistant to cracking in the composition during storage at room temperatures after a certain period (e.g., 3 days or longer).

The time of conveyance may be determined from the temperature and pressure at the time of conveyance, the ratio of the flight section length to the total screw length, and other factors as appropriate. Since the amount of heat applied to the composition depends largely on the characteristics of the equipment used, it may be preferable to process the composition so that the physical properties of the composition before and after the treatment are adjusted to a predetermined range. However, in general, the conveying time (the period of time during which the composition stays in the flight section) may preferably be within the range of 0.1 minutes or more but 60 minutes or less. More specifically, the lower limit may preferably be for example typically 0.1 minutes or more, or 0.2 minutes or more, or 0.3 minutes or more, or 0.4 minutes or more, or 0.5 minutes or more, or 0.8 minutes or more, or 1 minutes or more, especially 2 minutes or more. The upper limit for the conveying time may preferably be, although is not limited to, typically 60 minutes or less, or 30 minutes or less, or 15 minutes or less, from the viewpoint of efficiency.

The temperature during conveyance may be determined from the pressure and time of conveyance, total screw length and flight length ratio, and other factors as appropriate. Since the amount of heat applied to the composition depends largely on the characteristics of the equipment used, it may be preferable to process the composition so that the physical properties of the composition before and after the treatment are adjusted to a predetermined range. However, in general, the average temperature during conveyance (the average temperature of the composition along the flight section in the barrel) may preferably be within the range of 40°C or more but less than 100°C. More specifically, the upper limit may preferably be less than at 100°C, or 99°C or less, or 98°C or less, or 97°C or less, or 96°C or less, or 95°C or less. However, if the temperature during conveyance is too low, the starch grain structures in the composition may not be sufficiently broken down in the next step at the kneading section. Therefore, the lower limit for the average temperature during conveyance may preferably be typically 40°C or more, particularly 45°C or more, or 50°C or more, or 55°C or more. The average temperature in an area refers to the arithmetic mean of the composition temperature inside the barrel along the area, and can be calculated by measuring the inside of the barrel along the area at finite even intervals (e.g., 1 cm intervals). The maximum temperature reached in this area may preferably be within the range of 40°C or more but less than 100°C. More specifically, the upper limit may preferably be typically less than 100°C, or 99°C or less, or 98°C or less, or 97°C or less, or 96°C or less, or 95°C or less, while the lower limit may be typically 40°C or more, particularly 45°C or more, or 50°C or more, or 55°C or more, or 60°C or more, or 65°C or more, or 70°C or more, or 75°C or more, or 80°C or more.

(4) Step (iii): Kneading treatment

The dough composition conveyed by the flight section from step (ii) is kneaded at a certain strength under pressurized, specific high-temperature conditions. This strong kneading under high temperature conditions allows the desired molecular weight distribution of starch explained above to develop properly, whereby the effect of the invention is achieved. In particular, kneading under predetermined high-temperature and high-pressure conditions is more desirable.

As for the specific conditions during kneading, the SME (specific mechanical energy) value calculated according to Equation I below may be equal to or higher than a predetermined value, since this may serve to break down the starch grains sufficiently to develop the properties of a matrix. Specifically, the SME value with which the kneading is carried out may preferably be within the range of 300kJ/kg or more, while the upper limit may be, although is not restricted to, for example 5000kJ/kg or less. More specifically, the lower limit may preferably be typically 350 kJ/kg or more, or 400 kJ/kg or more, particularly 450kJ/kg or more, more particularly 500kJ/kg or more, or 550kJ/kg or more, or 600kJ/kg or more, or 700kJ/kg or more, especially 800 kJ/kg or more. The upper limit may be, although is not restricted to, typically 5000kJ/kg or less, or 4000kJ/kg or less, or 3000kJ/kg or less, or 2000kJ/kg or less. When an extruder is used for the kneading, screw rotation speed may preferably be within the range of more than 150 rpm but 2500 rpm or less. More specifically, the ratio may preferably be typically higher than 150rpm, more preferably higher than 200rpm, still more preferably higher than 250rpm. The upper limit may be, although is not restricted to, e.g., typically 2500 rpm or less, or 1500 rpm or less.

[Formula 2]

$$SME = \frac{\frac{N}{N_{\max}} \times \frac{\tau - \tau_{\mathrm{empty}}}{100}}{Q} \times P_{\max} \times 3600$$

Equation I

N: Screw rotation speed during kneading (rpm)
$N_{\max}$: Maximum screw speed (rpm)
$\tau$: Kneading torque / maximum torque (%)
$\tau_{\mathrm{empty}}$: Idling torque / maximum torque (%)
Q: Total mass flow rate (kg/hr)
$P_{\max}$: Maximum power of the agitator (e.g., extruder) (kW)

The production method of the present invention may be characterized in that the kneading at step (iii) is carried out at a low temperature of less than 100°C (while the lower limit may be, although is not limited to, typically more than 0°C). According to the production method of the present invention, by satisfying each of the aforementioned requirements, even if the kneading in this step (iii) is conducted at a low temperature of less than 100°C, it is possible to obtain a solid composition that does not easily crack inside the composition after a certain period (e.g., 3 days or more) during storage at room temperature, and that does not easily leach the ingredients inside the composition after heat cooking. Furthermore, because kneading can be performed at such low temperatures, the solid composition mentioned above can be easily produced using general-purpose extruders without the use of special manufacturing equipment that is resistant to high temperatures and high pressures. Specifically, the upper limit for the average temperature during kneading (the average temperature of the composition of the kneader section in the barrel) may be less than 100°C, while the lower limit may be, although is not restricted to, e.g., 40°C or more. More specifically, the upper limit may preferably be typically less than at 100°C, preferably 99°C or less, or 98°C or less, or 97°C or less, or 96°C or less, or 95°C or less. However, if the temperature during kneading is too low, the starch grain structure in the composition may not be sufficiently broken down by kneading. Therefore, the lower limit for the average temperature during kneading may preferably be typically 40°C or more, particularly 45°C or more, or 50°C or more, or 55°C or more, or 60°C or more, or 65°C or more, or 70°C or more, or 75°C or more, or 80°C or more. Here, the processing by the extruder, especially above the lower limit of the aforementioned average temperature and at the aforementioned high SME value, can be performed in the range of, for example, from 3% to 100% of the kneading length at the screw. More specifically, this ratio may preferably be typically 3% or more, particularly 5% or more, or 8% or more, or 10% or more, or 15% or more, especially 20% or more. In particular, the starch grain structures derived from grain structures, pulse, cereal and fruits and seeds are more robust, making the aforementioned treatments at relatively high temperatures and high SME values more useful. The average temperature in an area herein refers to the arithmetic mean of the composition temperature inside the barrel along the area, and can be calculated by measuring the temperatures the inside of the barrel along the area at finite even intervals (e.g., 1 cm intervals). The maximum temperature reached in this area may preferably be within the range of 40°C or more but less than 100°C. More specifically, the upper limit may preferably be typically less than 100°C, or 99°C or less, or 98°C or less, or 97°C or less, or 96°C or less, or 95°C or less, while the lower limit may be typically 40°C or more, particularly 45°C or more, or 50°C or more, or 55°C or more.

Pressure conditions during the kneading are not limited. The kneading may be carried out under atmospheric pressure, but may preferably be carried out under pressurized conditions relative to atmospheric pressure. It may be more preferable to carry out the kneading under conditions where higher pressure than usual is applied, as this will facilitate the breakdown of the starch grain structure and development of the stained site structures according to the present invention. The pressure during kneading can be measured by measuring the outlet pressure of the extruder. The pressure to be applied relative to atmospheric pressure may preferably be within the range of 1.0 MPa or more, while the upper limit may be, although is not limited to, for example 50 MPa or less. More specifically, the lower limit may preferably be typically 1.0 MPa or more, particularly 1.3 MPa or more, or 1.5 MPa or more, or 1.8 MPa or more, or 2.0 MPa or more, or 2.5 MPa or more, or 3.0 MPa or more. On the other hand, the upper limit for the pressure to be applied relative to atmospheric pressure may preferably be, although is not limited to, 50 MPa or less, or 40 MPa or less, or 30 MPa or less, or 20 MPa or less.

The kneading time can be determined appropriately based on various conditions such as the kneading temperature and pressure and the size of the kneading vessel. In particular, since the amount of heat applied to the composition varies greatly depending mainly on the characteristics of the apparatus used, it may be preferable to determine the processing time such that the physical properties of the composition before and after the processing are adjusted to within their respective desired ranges mentioned above. In general, however, The lower limit of the kneading time may preferably be within the range of 0.1 minutes or more but 60 minutes or less. More specifically, the lower limit may preferably be typically 0.1 minute or more, particularly 0.2 minute or more, more particularly 0.3 minute or more, or 0.4 minutes or more, or 0.5 minutes or more, or 0.8 minute or more, or 1 minutes or more, especially 2 minutes or more. The upper limit of the kneading time is not particularly restricted, but may be typically 60 minutes or less, particularly 30 minutes or less, more particularly 15 minutes or less, from the viewpoint of efficiency.

It is a surprising, and completely unknown, finding that kneading a dough composition under such severe high-pressure conditions may cause protein, starch, dietary fiber, etc., to form complex structures without processing at temperatures of 100°C or higher, and produce a composition in which that cracks are less likely to occur even after a long period of time during storage at room temperature, and whose ingredients are less likely to leak out after heat cooking.

It may be preferred to use a dough composition and/or a processed edible plant product (such as the starch-containing crushed composition mentioned above) with a number of starch grain structures equal to or less than a certain value in step (i), because this facilitates the effects in steps (ii) and (iii). The principle is unknown, but it is thought that if a dough composition in which starch grain structures have been destroyed is subjected to the high-pressure strong kneading conditions described below, the starch diffuses throughout the composition to form a matrix-like continuous structure without using special processing at temperatures above 100°C. Specifically, the dough composition in step (i) may preferably satisfy at least either, more preferably both, of the requirements (a) and/or (b) relating to starch grain structures below.

It may be preferable to use a raw material (such as the starch-containing crushed composition mentioned above) in which starch grains have been destroyed to such a degree as to satisfy the requirements (a) and/or (b) below, more preferably a processed edible plant product (such as the starch-containing crushed composition mentioned above) which has undergone high-temperature strong kneading treatment to such a degree as to satisfy both the requirements (a) and/or (b) below.

(a) When 6 mass % suspension of a crushed product of the composition is observed, the number of starch grain structures observed is 300/mm$^2$ or less.
(b) When 14 mass % of composition crushed product water slurry is subjected to measurement with a rapid visco-analyzer with elevating the temperature from 50°C to 140°C at a rate of 12.5°C/min, the peak temperature of gelatinization obtained is less than 120°C.

With regard to the requirement (a), the number of starch grain structures observed under the conditions mentioned above for the dough composition in step (i) and/or a processed edible plant product used in the dough composition (such as the starch-containing crushed composition mentioned above) may preferably be typically 300/mm$^2$ or less, particularly 250/mm$^2$ or less, more particularly 200/mm$^2$ or less, especially 150/mm$^2$ or less, or 100/mm$^2$ or less, or 50/mm$^2$ or less, or 30/mm$^2$ or less, or 10/mm$^2$ or less, especially 0/mm$^2$. The details of the starch grain structures are the same as those explained above for the composition of the present invention.

With regard to the requirement (b), the peak temperature of gelatinization measured under the conditions mentioned above for the dough composition in step (i) and/or a processed edible plant product used in the dough composition (such as the starch-containing crushed composition mentioned above) may preferably be within the range of 50°C or more but less than 120°C. More specifically, the upper limit may preferably be, typically less than 120°C, or 115°C or less, or 110°C or less, or 105°C or less, or 100°C or less, or 95°C or less, or 90°C or less, or 85°C or less, or 80°C or less. On the other hand, even in compositions where the starch grains have been destroyed, the constituents may exhibit pseudo peak temperatures of gelatinization due to hydro-swelling. Therefore, the lower limit may be, although is not restricted to, typically 50°C or more, or 55°C or more, or 60°C or more.

The rapid viscometer analyzer (RVA) recited in in (b) above may be any device that can raise the temperature of the object to be measured up to 140°C, an example of which is the RVA4800 manufactured by Perten. The peak temperature of gelatinization measured with RVA at a temperature increase rate of 12.5°C/min can specifically be measured by the following procedure. A composition sample of 3.5 g dry mass is crushed such that the resulting crushed product has a size of, e.g., 100-mesh pass (150 μm mesh aperture) and 120-mesh on (125 μm mesh aperture). The resulting crushed material is then weighed into an aluminum cup for RVA measurement, and distilled water is added to make a total volume of 28.5 g to prepare 14 mass % sample aqueous slurry (this may be referred to simply as "composition crushed product aqueous slurry" or "sample aqueous slurry"), which is used for the RVA viscosity measurement in [Procedure a] above. The measurement is started at 50°C. The rotation speed is set at 960 rpm from the start of measurement for 10 seconds, and then changed to 160 rpm and maintained until the end of measurement. After held at 50°C for one minute, the temperature is increased at a rate of 12.5°C/minute from 50°C to 140°C, while the peak temperature of gelatinization (°C) is measured.

The term "peak temperature of gelatinization" used herein represents the temperature (°C) at which the viscosity shows the highest value (cP) within a given temperature range and then turns to a decreasing trend during the RVA temperature raising process, and is an index reflecting the heat resistance of starch grains. For example, if a composition has the highest viscosity at the 50°C holding stage immediately after the start of measurement and then decreases in viscosity, then the peak temperature of gelatinization is 50°C, and the viscosity at any temperature T°C (50≤T≤140°C) during the temperature increase stage from 50°C to 140°C is the highest. If the viscosity of a composition decreases during the temperature increase stage after T°C, the peak temperature of gelatinization is T°C. If the viscosity of a composition shows the highest value during the 140°C holding stage, then the peak temperature of gelatinization is 140°C.

The degree of gelatinization of starch in the composition after the kneading at step (ii) may preferably be a predetermined value or higher, from the viewpoint of preventing shape collapse during heat cooking. Specifically, the degree of gelatinization of starch in the composition after the kneading at step (ii) may preferably be within the range of 30 mass % or more 100 mass % or less. More specifically, the ratio may preferably be typically 30 mass % or more, particularly 40 mass % or more, or 50 mass % or more, or 60 mass % or more, especially 70 mass % or more. The upper limit of the degree of gelatinization is not particularly restricted, but if it is too high, the starch may break down and the composition may become sticky and of undesirable quality. Accordingly, the upper limit of the degree of gelatinization may preferably be typically 100 mass % or less, or 99 mass % or less, or 95 mass % or less, or 90 mass % or less.

(5) Step (iv): Aging treatment

It may also be preferable to provide the step of lowering the degree of gelatinization of starch in the composition after kneading in step (iii) by a predetermined value or more, because this may help locally age the starch near the surface of the composition and prevent binding between the compositions after cooking. According to the present invention, this step may also be referred to as the "aging treatment" step. Specifically, the treatment in step (iv) may preferably be carried out on the composition with a dry mass basis moisture content of 25% or more in an environment with an ambient temperature 80°C or less and an ambient humidity (RH%) of 60 RH% or more for 0.1 hour or more.

As the aging treatment, it may be preferable to treat the composition in an environment where the ambient humidity (RH%) is equal to or higher than a certain percentage, because this will help extend the time until the dry mass basis moisture content is reduced to less than 25 mass%, and the resulting composition tends not to bond with each other after heat cooking. Specifically, the ambient humidity (RH%) with which the treatment is carried out may preferably be within the range of 60 RH% or more but 100 RH% or less. More specifically, the lower limit may preferably be typically 60 RH% or more, particularly 70 RH% or more, or 80 RH% or more. The upper limit may be, although is not restricted to, typically 100 RH% or less. The reason why aging treatment improves quality is thought to be that starch near the surface of the composition, which normally loses water quickly and is less susceptible to aging than the interior of the composition, is locally aged in the state where the dry mass basis moisture content is 25 mass% or more. In order to adjust the ambient humidity (RH%) to a predetermined value or more, the composition after being extruded from the die section may be kept in a high humidity environment, or the relative humidity may be increased by holding water vapor evaporating from the composition around the composition, or by spraying water in mist form or other treatments (also called wetting treatment) to achieve a predetermined ambient humidity.

The aging treatment may be performed in a closed device with a constant humidity, or in a device that supplies a constant humidity atmosphere, or may be achieved by wetting treatment with maintaining relative humidity by holding water vapor that evaporates from the composition around the composition, or by a combination of these methods.

From the viewpoint of accelerating aging of the composition, it may be preferable to adjust the ambient temperature during aging treatment to be a predetermined temperature or less. Specifically, the ambient temperature during the aging treatment may preferably be within the range of more than 0°C 80°C or less. More specifically, the upper limit may preferably be typically 80°C or less, or 70°C or less, or 60°C or less, or 50°C or less, or 40°C or less, or 30°C or less, or 20°C or less, or 10°C or less. The lower limit for the temperature may be, although is not limited to, typically more than 0°C, or 4°C or more.

From the viewpoint of accelerating aging of the composition, it may be preferable to carry out the aging treatment with maintaining the dry mass basis moisture content of the composition to a predetermined ratio or more. Specifically, the dry mass basis moisture content of the composition during the aging treatment may preferably be within the range of 25 mass % or more but 200 mass % or less. More specifically, the lower limit may preferably be typically 25 mass % or more, particularly 30 mass % or more. The upper limit may be, although is not restricted to, typically 200 mass % or less, or 175 mass % or less, or 150 mass % or less, or 125 mass % or less, or 100 mass % or less.

When the drying treatment in step (v) below is carried out, the aging treatment may be performed before the drying treatment or after the drying treatment, but it may be preferable to perform the aging treatment before the drying treatment, because the effect of the present invention is more pronounced when the aging treatment is performed before the drying treatment.

The aging treatment in the state where the dry mass basis moisture content of the composition is 25 mass % or more may preferably be carried out under conditions such that the parameter A × T (RH%, hr) is above a predetermined lower limit. Where A indicates the relative humidity of the atmosphere (RH%) and T indicates the wetting treatment time (hour, or also referred to simply as hr). However, it is to be noted that A > 50 RH%. For example, if the relative humidity of the atmosphere is 95 RH% (A) and the wetting treatment time is 1 hour (T), the parameter A × T = 95 (RH%, hr). The parameter A × T (RH%-hr) may preferably be withing the range of 6 or more but 1000 or less. More specifically, the ratio may preferably be typically 6 or more, particularly 8 or more, or 10 or more, or 12 or more, or 14 or more, or 16 or more, or 18 or more, or 24 or more, or 30 or more, or 36 or more, or 42 or more, or 48 or more, or 54 or more, especially 60 or more. The upper limit may be, although is not restricted to, typically 1000 or less.

The temperature of the composition during the aging treatment may be within the range of more than 0°C but less than 100°C. More specifically, the upper limit may preferably be less than 100°C, or 90°C or less, or 80°C or less, or 70°C or less, or 60°C or less, or 50°C or less, or 40°C or less, or 30°C or less, or 20°C or less, or 10°C or less. The lower limit for the temperature may be, although is not restricted to, typically more than 0°C, or 4°C or more.

The rate of decrease in the degree of gelatinization (mass %) after the kneading section in this step (iv) may preferably be equal to or higher than a predetermined value, since this will help improve the binding property of the resulting composition after heat cooking. Specifically, the rate of decrease in the degree of gelatinization after the kneading section in this step (iv) relative to the degree of gelatinization in the kneaded composition at step (iii) may preferably be within the range of typically 6 mass % or more but 90 mass % or less. More specifically, the aging treatment may preferably be carried out until the rate of decrease in the degree of gelatinization after the kneading section in this step (iv) relative to the degree of gelatinization in the kneaded composition at step (iii) reaches 6 mass % or more (i.e., until the degree of gelatinization decreases by 6 mass % or more), since this will help improve the binding property of the resulting composition after heat cooking. The rate of decrease may preferably be 7 mass % or more, or 8 mass % or more, or 9 mass % or more, particularly 10 mass % or more, or 15 mass % or more, or 20 mass % or more. On the other hand, the upper limit for the rate of decrease in the degree of gelatinization after the kneading section in this step (iv) may preferably be, although not limited to, typically 90 mass % or less, or 80 mass % or less, or 70 mass % or less.

The degree of gelatinization (mass %) after the kneading section in this step (iv) may preferably be equal to or higher than a predetermined value, since this will help improve the binding property of the resulting composition after heat cooking. Specifically, the degree of gelatinization after the kneading section in this step (iv) may preferably be within the range of, although the lower limit is not restricted, typically 5 mass % or more but 99 mass % or less. More specifically, the ratio may preferably be typically 99 mass % or less, particularly 98 mass % or less, or 95 mass % or less, or 90 mass % or less, or 85 mass % or less, or 80 mass % or less, or 75 mass % or less, or 70 mass % or less. On the other hand, the lower limit may preferably be, although is not limited to, typically 5 mass % or more, particularly 10 mass % or more, or 15 mass % or more, or 20 mass % or more, or 25 mass % or more, or 30 mass % or more, or 35 mass % or more, or 40 mass % or more, or 45 mass % or more, especially 50 mass % or more.

The means to achieve the aging treatment in step (iv) is not particularly limited, but for example, after the extruder kneading process is completed, water retention treatment as described below can be performed as a post-treatment to age the starch near the surface of the composition and achieve the aging in step (iv). Specifically, the duration of time after step (iii) since the temperature of the composition decreases to less than 90°C (while the lower limit may be, although not limited to, typically more than 0°C, or more than at 4°C) until the dry mass basis moisture content of the composition decreases to less than 25 mass% may preferably be adjusted to within the range of typically 0.1 hour or more 20 hours or less. More specifically, this length of time may preferably be adjusted to typically 0.1 hour or more, particularly 0.2 hours or more, or 0.3 hours or more, or 0.4 hours or more, or 0.5 hours or more, or 0.6 hours or more, or 0.7 hours or more, or 0.8 hours or more, or 0.9 hours or more, especially 1.0 hours or more. On the other hand, the upper limit for this length of time may preferably be, although is not limited to, typically 20 hours or less, or 15 hours or less, or 10 hours or less.

The temperature of the composition in step (iv) may preferably be, although is not limited to, within the range of more than 0°C but less than 90°C. More specifically, the ratio may preferably be typically less than 90°C, or 80°C or less, or 70°C or less, especially 60°C or less. The lower limit may preferably be, although is not limited to, more than 0°C, or more than at 4°C. The pressure in step (iv) is also not restricted, and may be normal pressure.

(6) Adjustment of the dry mass basis moisture content of the composition

As an example of a method for accelerating the aging described above, moisture can be added in any of the above steps (i) through (iii) to adjust the dry mass basis moisture content of the dough composition before processing to a predetermined percentage or higher. More specifically, it may be preferable to add moisture in either step (i) or step (ii). It may be preferable to add moisture to the dough composition that has reached a dry mass basis moisture content in step (i) after step (i), more specifically in step (ii) and/or step (iii), and especially in step (ii). Moisture can be added either in the form of water or in the form of steam, but it is preferred to add water. Specifically, the dry mass basis moisture content of the composition may preferably be within the range of more than 25 mass % but 200 mass % or less. More specifically, the lower limit for the dry mass basis moisture content of the composition may be typically 25 mass %, or more than 30 mass %, or more than 35 mass %, or more than 40 mass %, or more than 45 mass %, or more than 50 mass %, or more than 55 mass %, or more than 60 mass %, or more than 65 mass %, or more than 70 mass %, or more than 75 mass %, or more than 80 mass %. On the other hand, the upper limit for the dry mass basis moisture content of the composition may be, although is not limited to, typically 200 mass % or less, or 175 mass % or less, or 150 mass % or less.

In general, if the sole purpose is to simply gelatinize starch, a dry mass basis moisture content of less than 40 mass% in the dough composition is sufficient. Considering the subsequent drying process, there is no motivation to add more moisture, but rather, there is a disincentive to do so. Therefore, it is difficult to arrive at the idea of increasing the dry mass basis moisture content in the dough composition without the concept of aging the starch once it is gelatinized, as in this step (iv) of the present invention. Furthermore, even if the dry mass basis moisture content in the dough composition is simply increased, it is difficult to reach the idea of retaining moisture for a certain period of time, as in this step (iv), as opposed to the idea of subsequently drying the moisture in the composition. Therefore, it is extremely difficult to adopt the aforementioned concept of accelerating aging by ensuring a certain amount of time for the dry mass basis moisture content of the composition to become less than 25%, especially after step (iii), by treating the composition for a certain amount of time in an environment with a predetermined ambient temperature or lower and a predetermined ambient humidity percentage or higher.

The specific means for adjusting the dry mass basis moisture content of the composition is not limited, but water addition during the preparation of the dough composition in step (i) above may be preferred. Water may be added either in liquid or in steam, but water in liquid form is preferred. Furthermore, if an extruder that uses a heater to heat the composition temperature is used, it may be preferable to mix at least a certain percentage of the water to be blended with other ingredients during its production before the composition temperature in the extruder is heated more than 20°C above the initial temperature, as this may prevent starch from changing its properties due to over-heating. Specifically, the percentage of pre-mixed moisture at a stage before the temperature of the composition in the extruder is heated by 20°C or more from the initial temperature to the total moisture to be blended during production (especially the total amount of moisture blended in stages (i) through (iii)) may preferably be within the range of 50% or more but 100% or less. More specifically, the lower limit for the percentage of moisture to be pre-mixed with other raw ingredients may preferably be typically 50% or more, particularly 60% or more, or 70% or more, or 80% or more, or 90% or more, especially 100%. In this case, this percentage of water may preferably be pre-mixed with other raw materials before feeding them into the extruder.

When a part or all of the water is added, the dry mass basis moisture content of the dough composition may be within the range of more than 5 mass % but mass % or less. More specifically, the ratio may preferably be typically 5 mass %, or more than 10 mass %, or more than 15 mass %, or more than 20 mass %, or more than 25 mass %, or more than 30 mass %, or more than 35 mass %, or more than 40 mass %, or more than 45 mass %, or more than 50 mass %, or more than 55 mass %, or more than 60 mass %, or more than 65 mass %, or more than 70 mass %, or more than 75 mass %, especially more than 80 mass %. The upper limit for the dry mass basis moisture content of the composition may preferably be, although not restricted, e.g., typically 200 mass % or less, or 175 mass % or less, or 150 mass % or less, or 100 mass % or less.

Alternatively, it is also possible to use a method of adding water to the composition after extrusion by the extruder in step (iii) or any later step to extend the time until the composition reaches a dry mass basis moisture content of less than 25 mass% to be a predetermined time or longer. Water may be added either in liquid or in steam, but water in liquid form is preferred. Alternatively, addition of water can also be carried out by putting the composition into water and making it absorb water.

In addition, once the dry mass basis moisture content of the composition becomes less than 25 mass %, water retention treatment can be continued by re-adding water to the dry composition to increase its dry mass basis moisture content so that the total water retention time with a dry mass basis moisture content of 25 mass % or higher to be a predetermined time or longer. When water is re-added to the dry composition, more than half of the water retention time thereafter may preferably be 60°C or less, more preferably 50°C or less, still more preferably 40°C or less. The lower limit may be, although is not limited to, typically more than at 0°C.

(7) Step (v): Drying treatment

The production method of the present invention may preferably include, after step (iii) or step (iv), the step of (v) lowering the dry mass basis moisture content of the composition to a predetermined value or lower, since this will help suppress quality changes in the composition and result in a composition that retains its quality. This step may also be referred to as a "drying treatment" step. Specifically, before and after the drying treatment in this step (v), the dry mass basis moisture content may preferably decrease by 5% or more (i.e., the decrease ratio defined by {(the dry mass basis moisture content in composition before the drying treatment) - (the dry mass basis moisture content in composition after the drying treatment)} /(the dry mass basis moisture content in composition before the drying treatment) may preferably be a certain value or higher). The decrease ratio may preferably be within the range of 5% or more but 100% or less. More specifically, the lower limit may preferably be typically 5% or more, or 10% or more, or 15% or more, or 20% or more, or 25% or more, or 30% or more, or 35% or more, or 40% or more, or 45% or more, especially 50% or more, while the upper limit may be, although is not limited to, e.g., typically 100% or less, or 95% or less. In particular, it is preferable to further include the drying treatment in step (v) after the aging treatment in step (iv), because the aged starch near the surface formed in step (iv) may help inhibit binding between compositions during the drying treatment, resulting in a highly productive composition.
The dry mass basis moisture content of the final composition after the drying treatment may preferably be within the range of 0.5 mass % or more but less than 60 mass %. More specifically, the lower limit may preferably be less than 60 mass %, or less than 55 mass %, or less than 50 mass %, or less than 45 mass %, or less than 40 mass %, or less than 35 mass %, or less than 30 mass %, or less than 25 mass %, or less than 20 mass %, or less than 15 mass %. On the other hand, the lower limit for the dry mass basis moisture content in the composition of the present invention may preferably be, although is not limited to, 0.5 mass % or more, or 1 mass % or more, or 2 mass % or more, from the viewpoint of industrial production efficiency. The dry mass basis moisture content in the composition of the present invention may be derived from various ingredients of the composition, or it may be derived from moisture added during the processing according to the present invention.
The temperature of the composition during the drying treatment in step (v) is not restricted, but when the treatment is carried out under normal pressure, it may preferably be within the range of more than 50°C but less than 100°C. More specifically, it may preferably be typically more than 50°C, or more than 60°C, or more than 70°C, especially more than 80°C. The upper limit may preferably be, although is not limited to, less than 100°C, or less than at 98°C.
The pressure condition during the drying treatment in step (v) is not restricted, and it may be carried out under normal pressure or under reduced pressure. When the drying treatment is carried out under reduced pressure (e.g., less than 0.1 MPa), the composition temperature may preferably be within the range of more than 0°C but 80°C or less. More specifically, the temperature may preferably be 80°C or less, particularly 70°C or less, or 60°C or less, especially 50°C or less. The lower limit may be, although is not limited to, typically more than 0°C, or more than at 4°C.
Any method commonly used for drying food products can be used as a drying method. Examples include freeze drying, air drying (e.g., draught drying (hot air drying), fluidized bed drying, spray drying, drum drying, low temperature drying, sun drying, shade drying, etc.), pressurized drying, reduced pressure drying, microwave drying, oil heat drying, etc. Of these method, from the viewpoint that the color tone and flavor inherent in food ingredients are not significantly changed, and that non-food aromas (e.g. burnt smell) can be controlled, microwave drying is preferred, and microwave drying under reduced pressure is even more preferred. On the other hand, from the viewpoint of processing large quantities of compositions, air drying (e.g., hot air drying, fluidized bed drying, spray drying, drum drying, low temperature drying, sun drying, shade drying, etc.) is also preferred, and draught drying (especially hot air drying with ambient temperatures within a predetermined temperature range) is particularly preferred.
During the drying treatment in this step (v), it may be preferable to treat the composition for predetermined amount of time or longer in an environment where the ambient temperature (especially the average ambient temperature) exceeds a predetermined level, because this may reduce the time required for the dry mass basis moisture content to decrease by a predetermined ratio or higher. Specifically, the drying treatment may preferably be carried out at an ambient temperature of within the range of more than 50°C but 100°C or less. More specifically, the lower limit may preferably be typically higher than 50 °C, particularly higher than 60 °C, more particularly higher than 70 °C, or higher than 80 °C. The upper limit of the ambient temperature is not particularly restricted, but may be typically 100 °C or lower. An environment where the ambient temperature is higher than a predetermined temperature can be created by, e.g., storing the composition extruded from the die section at high temperature environment, maintaining the temperature of the composition extruded at high temperature to increase the ambient temperature, or blowing the composition with high temperature air. The average ambient temperature can be calculated by dividing the total temperature during the drying treatment by the drying time. For example, the total ambient temperature per minute can be divided by the number of minutes of drying treatment.

The treatment of the composition at ambient temperature may be carried out for a predetermined amount of time or longer, which may be within the range of 0.1 hour or more 20 hours or less. More specifically, the ratio may preferably be typically 0.1 hour or more, particularly 0.2 hours or more, or 0.3 hours or more, or 0.4 hours or more, or 0.5 hours or more, or 0.6 hours or more, or 0.7 hours or more, or 0.8 hours or more, or 0.9 hours or more, especially 1.0 hours or more. The upper limit may be, although is not limited to, typically 20 hours or less, or 15 hours or less.

The ambient humidity (RH%) during the treatment at a predetermined ambient temperature in this step (v) may be below a certain level, because this helps shorten the time required for the dry mass basis moisture content to decrease by a predetermined percentage or more. Specifically, the ambient humidity (especially the ambient average humidity in step (v)) may preferably be within the range of 0 RH% or more but less than 60 RH%. More specifically, the upper limit may preferably be typically less than 60 RH%, or less than 50 RH% or less than 40 RH% or less than 30 RH%. The lower limit may be, although is not limited to, typically 0 RH% or more. The ambient average humidity can be calculated by dividing the total accumulated humidity during the drying treatment by the drying time, for example, by the total ambient humidity per minute divided by the number of minutes of drying the drying treatment. When step (v) is carried out after step (iv), the ambient humidity may preferably be lower than the ambient humidity in step (iv). For example, if the ambient humidity in step (iv) is 60 RH% or higher, the ambient humidity in step (v) may preferably be less than 60 RH%, because the ambient humidity can be used to distinguish step (iv) from step (v).

### (8) Extruder

In the production method of the present invention, of the above steps, at least steps (ii) and (iii), and optionally some or all of steps (i) and/or (iv), may preferably be performed using the specific extruder of the present invention (more preferably a uniaxial extruder) described above.

Specifically, by feeding and mixing the raw materials of the composition of the invention to the extruder of the present invention via the feeder, it is possible to produce a composition that satisfies the aforementioned predetermined ranges of dietary fiber (or insoluble fiber) content, starch content, protein content, and dry mass basis moisture content, respectively (step (i)). However, it is also possible to carry out the preparation of the composition by mixing these raw materials outside the extruder of the present invention, and then feeding the prepared composition to the extruder of the present invention via a feeder, so that only steps (ii) and (iii) may be performed according to the production process of the present invention. The resulting composition may then be conveyed from the flight section to the kneading section by rotating the screw (step (ii)), followed by kneading in the kneading section (step (iii)), and then discharged from the die section while being molded.

### (9) Other conditions

In the production method of the present invention, it may be more preferable to keep the total mass flow rate of the extruder to a predetermined level or higher while lowering the outlet temperature setting of the die section of the extruder, since this may promote the gelatinization of the composition. Those conditions may be adjusted as appropriate such that the extruder outlet pressure is to a predetermined level or higher, but specific examples are as follows.

The total mass flow rate (also referred to as the flow volume) is not restricted, but may preferably be maintained to be within the range of 0.5 kg/hour or more but 100 kg/hour or less. More specifically, the ratio may preferably be typically 0.5 kg/hour or more, particularly 0.7 kg/hour or more, particularly 1.0 kg/hour or more. The upper limit of the total mass flow rate is not particularly restricted, but may preferably be typically 100 kg/hour or less, or 50 kg/hour or less.

The outlet temperature of the extruder may preferably be, although is not limited to, within the range of 0°C or more but less than 100°C. More specifically, the ratio may preferably be typically less than 100°C, or less than 95°C, or less than 90°C, or less than 85°C, less than 80°C, or less than 75°C, or less than 70°C, or less than 65°C, or less than 60°C, or less than 55°C, or less than 50°C, or less than 45°C, especially less than at 40°C, while the lower limit may be, although is not limited to, typically 0°C or more, or 4°C or more.

Conventionally, extruders have often been used to produce puff and other swollen compositions, and their production conditions are usually set as the temperature at the time of extrusion of the composition discharged from the die section exceeds the swelling temperature of the composition. Accordingly, they could not be applied to the production method for solid compositions without swelling that are kneaded and processed at less than 100°C, as in the present invention. In addition, when manufacturing puff and other puffed products, it is technical common technical common knowledge of those skilled in the art to reduce the proportion of moisture in the total mass flow rate in order to cause rapid swelling at reduced pressure. Therefore, there was no motivation to increase the moisture content in the total mass flow rate as in the case of compositions that do not involve swelling.

(10) Post treatment

Although the method for producing the composition of the present invention includes at least the steps explained above, any post treatment may also be carried out. Examples of post treatments include molding treatment.

Examples of molding treatments include molding the solid paste composition into a desired form (e.g., pasta, Chinese noodles, udon, inaniwa udon, kishimen, houtou, suiton, hiyamugi, somen, soba, soba gaki, bee-hun, pho, reimen, vermicelli, oatmeal, couscous, kiritanpo, tteok, and gyoza skins, as mentioned above). Such a molding treatment can be carried out using methods normally known in the art. For example, in order to produce compositions in elongated shapes such as pasta, Chinese noodles, or other noodles, the composition can be extruded into elongated forms using an extruder or other devices described above. On the other hand, in order to produce compositions in flat plate shapes, the composition may be molded into flat plate shapes. Furthermore, the composition can be made into any shape such as elongated, granular, or flaky shapes, by, e.g., press-molding the composition or cutting or die-cutting the flat-plate shaped composition. Alternatively, after kneading, the composition may be extruded using a die with a flow channel cross-section having an average degree of unevenness of a predetermined value or higher to thereby mold the composition such that its cross-section has an average degree of unevenness of a predetermined value or higher. Examples of the die shapes include, although not limited to, round, square, triangular, star, oval, crescent, half-moon, cross, and fylfot, as well as any combinations thereof (e.g., a Celtic cross-shaped die hole, which is a combination of a Greek cross shape and a circle shape arranged such that the intersection of the cross is on the center of the circle, and that the circle has a radius of three-fourths or less of the distance from the center to each tip of the cross). For example, a composition with a circular (round) cross-sectional shape will become a composition with a cylindrical shape after extrusion, a composition with a quadrangular (especially square) cross-sectional shape will become a composition with a square columnar shape after extrusion, and a composition with any other cross-sectional shape will become a columnar composition with that shape as the bottom surface after extrusion.

[III: Crushed Product of Starch-Containing Solid Composition for Heat Cooking and its Agglomerate]

The composition of the present invention may be crushed before use. Specifically, the production method of the present invention may further include, after the kneading in step (iii) above, or after the aging in step (iv) above, or after the drying in step (v) above, the step of (vo) crushing the composition to produce a crushed composition. The thus-obtained crushed product of the composition of the present invention (hereinafter also referred to as "the crushed composition of the present invention") also constitutes a subject of the present invention. When the composition of the present invention is crushed into the crushed composition of the present invention, the conditions for crushing the composition are not particularly limited, but may be determined such that the particle diameter $d_{50}$ and/or $d_{90}$ of the crushed composition is adjusted to within the range of 50 $\mu$m or more but 1000 $\mu$m or less. It may be especially preferable to carry out this crushing after the drying in step (v).

A portion of the crushed composition thus obtained can also be used for preparing a dough composition in step (i) again, optionally with adding water as needed.

It is also possible to use the crushed composition of the present invention as a raw material to prepare an agglomerate of the crushed composition, e.g., by subjecting the crushed composition again to the high-temperature, strong-kneading treatment according to the production method of the present invention. In other words, the production method of the present invention may further include, after the crushing at step (vi), the step of (vii) agglomerating the crushed composition to produce a crushed composition agglomerate. The thus-obtained agglomerate of the crushed composition of the present invention (also referred to as "the crushed composition agglomerate of the present invention") may also preferably be used as the composition of the present invention or as a raw material at step (i) of the production method of the present invention. The crushed composition agglomerate of the present invention also constitutes a subject of the present invention. When the composition of the present invention is crushed into the crushed composition of the present invention, the manufacture conditions are as explained above.

**EXAMPLES**

The present invention will now be described in further detail by way of Examples. These examples are shown merely for convenience of the description, and should not be construed as limitations to the present invention in any sense.

[Preparation of starch-containing solid compositions]

The starch-containing solid composition sample in each of the Examples and Comparative Examples was produced by preparing a dough composition from a predetermined combination of edible plants, which had optionally undergone pre-treatment, kneading the prepared composition using a predetermined uniaxial extruder under predetermined conditions and also gelatinizing it, and subjecting the kneaded composition to post-treatment for aging. Protein and starch were used as those contained in their respective food ingredients, and the contents thereof were adjusted using fractions having high contents of starch and protein, which were separated based on their differences in specific gravity. The dried kibi (common millet) powder used had a starch content of about 60 mass %, the dried oats powder used had a starch content of about 60 mass %, the dried quinoa powder used had a starch content of about 55 mass %, the dried yellow pea powder used had a starch content of about 50 mass %, and the rice powder used had a starch content of about 100 mass %. The ratios of the starch content derived from pulse to the total starch content of the entire composition in Example 29, Example 30, and Example 31 were 60 mass %, 33 mass %, and 14 mass %, respectively.

Table 1 below indicates the types, makeup, and properties of the raw materials used in each of the Examples and Comparative Examples. Table 2 below indicates the makeup of the dough composition to be processed in each of the Examples and Comparative Examples. Table 3 below indicates the configuration and operating conditions of the extruder used for producing the composition sample, and the treatment carried out using the extruder, in each of the Examples and Comparative Examples. Table 4 below indicates properties and characteristics of the composition at each step (gelatinization and aging) of the processing, and the sensory evaluation results for the resulting starch-containing solid composition, in each of the Examples and Comparative Examples.

For the duration of the aging treatment and the parameter A x T indicating the state of the composition with a dry mass basis moisture content of 25 mass% or higher, the treatment time (hr) at an ambient temperature of 80°C or lower and ambient humidity (RH%) of 60 RH% or higher at a dry mass basis moisture content of 25 mass% or higher is given in the tables. The drying treatment was carried out under the conditions indicated in Table 3. Test sections where the compositions tend to bind to each other during the drying process were noted in the Comments column of Table 3.

For each of the Examples and Comparative Examples, the conditions and procedures for the analysis and sensory evaluation of the raw materials, the dough composition made from them, and the starch-containing solid compositions for cooking obtained by processing them are shown below. Of the individual evaluation items listed in Tables 1 through 4, those items for which conditions and procedures are not described below were analyzed and evaluated using the conditions and procedures described in the [DESCRIPTION OF EMBODIMENTS] section above.

[Processing by extruder]

The following procedure was used to process the dough composition in each of the Examples and Comparative Examples. For Example 16, an extruder with a tandem-type screw shown in Figures 3 and 4 was used to process the raw material by heating and kneading in the first half of the extruder (204A and 204B in Figure 3, especially 204B), cooling it to below 100°C, and operating it in the second half of the extruder (306 in Figure 4) at the operating conditions shown in Table 3. For the other examples, the processing of the "raw material" was performed using a twin-screw extruder (e.g., the first half of the extruder with tandem-type screws shown in Figures 3 and 4, specifically, a twin-screw extruder with functions equivalent to 204A and 204B in Figure 3), and under the operating conditions shown in Table 1. Subsequent steps were performed by using a single-screw extruder (the single-screw extruder shown in Figures 1 and 2) with the configuration shown in Table 3 and operating under the operating conditions shown in Table 3.

In each example indicated as "Exhausted at the feeder" in the "Forced exhaust position" column of Table 3, a barrel without a vent section was used. In each example indicated as "With exhaust (exhaust immediately after the kneading section in the first half)" (in which the composition heated and crushed in the first half of the extruder and cooled to less than 100°C after processing was used as a crushed product of pulse and/or cereal), a barrel with a vent immediately after the kneading section in the first half and without a vent in the second half was used. In each example indicated as "Exhausted at the flight section," a barrel was used in which the vent section was located at a position corresponding to the flight section and within 5% of the starting point of the flight section when the screw was placed inside the barrel in operation.

In all examples, the screw used was a screw with a forward flight structure that is 100% of the total length of the flight section, and the kneading and heating sections have a grooved screw structure (passage-like structures connected to the forward flight structure in an oblique direction, and the angle of the passage-like structures with respect to the axis of rotation is 50% of the helix angle).

[Specific surface area per unit volume]

In each of the Examples and Comparative Examples, the specific surface area per unit volume after ultrasonic treatment (corresponding to "specific surface area per unit volume after ultrasonic treatment" in Table 1) of the edible plant (pulse or cereal) material was measured using the following procedure. Ethanol was used as the solvent, since it is unlikely to affect the structure of the sample when measuring the composition. Upon measurement, the sample was diluted and suspended in the solvent in advance, and the dispersion was measured while the sample was homogeneously suspended in the solvent. Specifically, 1 g of the sample was immersed in 50 g of ethanol, allowed to stand for about 5 minutes, then stirred and suspended with a spatula, and measured using a solution (2 mass% ethanol dispersion) that had passed through an 8-mesh mesh with a 2.36 mm aperture and 1.0 mm wire diameter (which corresponds to "No. 8" defined in "Alternative" of Nominal Dimensions, Permissible Variation for Wire Cloth of Standard Testing Sieves (U.S.A.) according to U.S.A. Standard Testing Sieves ASTM Specifications E 11-04). More specifically, 100 g of the suspension (20°C) was spread evenly on a sieve, and then subjected to vibration with a load that does not change the composition size until the fractional mass on the sieve was constant. After the processing, the solution that had passed the sieve was dispersed in ethanol at 2 mass% and used for the measurement. The laser diffraction particle size analyzer used for the measurement may be a laser diffraction particle size analyzer with a measurement range of at least 0.02 $\mu$m to 2000 $\mu$m by laser diffraction scattering, an example being Microtrac MT3300 EXII system marketed by Microtrac Bell Inc. The measurement application software used for the measurement was DMS2 (Data Management System version 2, Microtrac Bell Inc.). The measurement was carried out by: carrying out cleaning by pressing the Wash button of the software; carrying out calibration by pressing the Set Zero button of the software; and directly loading the sample via the Sample Loading feature until the sample concentration was within the proper range. Specifically, a sample that has not been subjected to ultrasonic treatment was put into the measurement solvent (ethanol) circulating in the measurement system, the concentration was adjusted to within the appropriate range using the Sample Loading feature, and then the ultrasonic treatment (treatment with ultrasonic waves of 40 kHz frequency at 40 W output for 3 minutes) was performed by pressing the Ultrasonic Treatment button of the software. Then, after three times of defoaming, the sample loading was carried out again to adjust the concentration to within the appropriate range. Thereafter, the sample was promptly laser diffracted at a flow rate of 60% with a measurement time of 10 seconds, and the result was used as the measurement value. The parameters for the measurement were: Distribution indication: Volume; Particle refractive index: 1.60; Solvent refractive index: 1.36; Upper limit of measurement: 2,000.00 $\mu$m; Lower limit of measurement: 0.021 $\mu$m.

[Enzyme (amylase and protease) treatment and measurement of particle diameter $d_{50}$ after enzyme treatment and ultrasonication]

In each of the Examples and Comparative Examples, the particle diameters $d_{90}$ of the raw materials and the dough composition obtained via pre-treatment (e.g., heating and kneading) after enzyme (amylase protease) treatment and ultrasonication (corresponding to the "Particle diameter $d_{90}$ after disturbance" column in the "Edible plant materials" section in Table 1 and the "Particle diameter $d_{90}$ after disturbance" column in the "Dietary fiber" section in Table 2, respectively). were measured by the following procedure. Each sample was subjected to the amylase and protease treatment as follows. 300mg of each sample was placed in a plastic tube with 5 mL of water, allowed to swell at 20°C for about 1 hour, and then processed using a small Hiscotron (Microtech Nichion homogenizer NS-310E3) until a porridge-like consistency is obtained (about 15 seconds at 1000 rpm) to prepare a 6 mass % water suspension of the composition. 2.5 mL of the treated sample is then divided and combined with 10 $\mu$L of protease (Proteinase K, Takara Bio) and 0.5 mg of $\alpha$-amylase ($\alpha$-Amylase from Bacillus subtilis, Sigma), and allowed to react at 20°C for 3 days. The thus-treated sample was then subjected to measurement of the particle diameter distribution after ultrasonication, using a laser diffraction particle size analyzer, under the following conditions. Ethanol was used as the solvent for the measurement. From the particle size distribution obtained by measuring the specific surface area per unit volume in the same manner as described above using a laser diffraction particle size analyzer, the post-disturbance particle diameter $d_{90}$, etc., was calculated.

[Measurement of starch, protein, dietary fiber, and dry mass basis moisture contents, degree of gelatinization, and AUC1 to 4]

Of the component contents in each sample shown in Table 2, the "Starch" content was determined according to the Japan Standard Tables for Food Composition 2015 (7th revised edition) and using the method of AOAC 996.11, by a method in which soluble carbohydrates (glucose, maltose, maltodextrin, etc.) that affect the measured value are removed via extraction treatment with 80% ethanol. The "Protein" content was determined according to the Japan Standard Tables for Food Composition 2015 (7th revised edition), by quantifying the total amount of nitrogen using the modified Kjeldahl method, and then multiplying the total amount of nitrogen with the "nitrogen-protein conversion factor." The "Insoluble dietary fiber" content was determined according to the Japan Standard Tables for Food Composition 2015 (7th revised edition), using the Prosky variant method. The "Dry mass basis moisture content" was according to the Japan Standard Tables for Food Composition 2015 (7th revised edition), by heating to 90°C using a decompression heating and drying method. The "degree of gelatinization" in Tables 2 and 4 was determined using the glucoamylase second method, which is a partial modification of the Central Analytical Laboratory of Customs (following the method by Japan Food Research Laboratories: https://www.jfrl.or.jp/storage/file/221.pdf). AUC1-4 were measured in the preferred method disclosed in the [DESCRIPTION OF EMBODIMENTS] section above ("Measurement conditions for gel filtration chromatography").

[Measurement of the number of starch grain structures]

In each of the Examples and Comparative Examples, the number of starch grain structures in the dough composition (corresponding to the "Number of starch grains" column in Table 2) was measured using the following procedure.. Each sample was pulverized with a mill and filtered through an aperture size of 150 $\mu$m to prepare composition powder. 3mg of the powder was suspended in 50$\mu$L of water to prepare a 6% aqueous suspension of composition powder. The suspension was dropped onto a glass slide, on which a cover glass was then placed and lightly crushed to obtain a prepared slide. Representative sites in the prepared slide were observed under a phase contrast microscope (ECLIPSE80i, Nikon) at a magnification of 200x to determine the number of starch grain structures in the field of view.

[Sensory evaluation]

* Summary of sensory evaluation procedure:

The sensory evaluation of the starch-containing solid compositions prepared in each of the Examples and Comparative Examples (corresponding to the "Sensory evaluation of compositions after processing" column in Table 4) was performed according to the following procedure. For each example, a composition before heat cooking after storage at room temperature (20°C) for 72 hours was subjected to sensory evaluation of cracks (appearance only), and one mass of the composition was heat cooked in nine masses of water at 90°C for 5 minutes, and the resulting boiled water and the cooked composition were subjected to evaluation of ingredient leakage and overall evaluation, respectively.

Specifically, the cracks inside each composition before cooking after 72 hours of storage at room temperature were visually observed on the composition exterior and evaluated as "Cracks at room temperature storage." The taste of the boiled water after heat cooking of each composition was evaluated as "Ingredient leakage into boiled water." The taste of each composition after heat cooking when eaten with boiled water was also evaluated as "Overall evaluation." The sensory evaluation was performed by 10 trained sensory inspectors.

* Sensory inspectors:

The sensory inspectors were selected from those who achieved excellent performance in the identification training described in A to C below, had experience in product development, had a lot of knowledge about food qualities such as taste and texture, and were capable of performing absolute evaluation for each sensory evaluation item.

A) Taste discrimination test: a total of seven samples were prepared, including five aqueous solutions prepared for five tastes (sweetness: taste of sugar; sourness: taste of tartaric acid; umami: taste of monosodium glutamate; saltiness; taste of sodium chloride; and bitterness: taste of caffeine), each with a concentration close to the threshold value of each component, and two sample solutions with distilled water, and the trainees were instructed to accurately identify the sample of each taste.

B) Concentration difference discrimination test: a series of five solutions with slightly different concentrations was prepared for each of salt and acetic acid, and the trainees were instructed to accurately distinguish the solutions of different concentrations for each component.

C) Three-point identification test to accurately identify from three soy sauce samples, two from Manufacturer A and one from Manufacturer B, the soy sauce sample from Manufacturer B.

For any of the aforementioned evaluation items, standard samples were evaluated in advance by all the inspectors, and each score of the evaluation criteria was standardized before objective sensory inspection was carried out by 10 inspectors. The evaluation of each evaluation item was carried out using a method in which each inspector selected one of the scores closest to his or her own evaluation from a five-point grading scale for each item. The total of the evaluation results was calculated from the arithmetic mean of the scores of the 10 inspectors, and rounded to one decimal place to determine the final scores.

*Evaluation criteria for "Cracks at room temperature storage":

For each sample, appearance of the composition before cooking stored at room temperature (cracks inside the composition) was evaluated on the following five-point grading scale.

5: Very favorable, with no cracks observed.
4: Favorable, with few cracks observed.
3: Rather favorable, with a few cracks observed partly.
2: Rather unfavorable, with some cracks observed.
1: Unfavorable, with a significant number of cracks observed.

*Evaluation criteria for "Ingredient leakage into boiled water during heat cooking":

For each sample, one mass of the composition was cooked in 9 masses of water at 90°C for 5 minutes, and the boiled water was evaluated on the following five-point grading scale.

5: Very favorable, with no ingredient leakage into the boiled water observed.
4: Favorable, with little ingredient leakage into the boiled water observed.
3: Rather favorable, with a small amount of ingredient leakage into the boiled water observed.
2: Rather unfavorable, with some ingredient leakage into the boiled water observed.
1: Unfavorable, with a significant amount of ingredient leakage into the boiled water observed.

*Evaluation criteria for "Overall evaluation":

For each sample, taste of the boiled water and the cooked composition when eaten together was evaluated on the following five-point grading scale. Adhesivity of pieces of the composition to each other after heat cooking was also noted as a comment.

5: Very favorable, with excellent quality and balance of taste between the composition and boiled water.
4: Favorable, with good quality and balance of taste between the composition and boiled water.
3: Rather favorable, with moderate quality and balance of taste between the composition and boiled water.
2: Rather unfavorable, with relatively poor quality and balance of taste between the composition and boiled water.
1: Unfavorable, with poor quality and balance of taste between the composition and boiled water.

[Results]

[Table 1-1]

| Table 1 | | Raw materials | | | | | | | | |
|---|---|---|---|---|---|---|---|---|---|---|
| | | Edible plant materials | | | | | | | | |
| | | Pulse materials | | | Cereal materials | | | Other edible plant materials | | |
| | | Type | Post-disturbance particle diameter d90 ($\mu$m) | Content (dry mass basis %) | Type | Post-disturbance particle diameter d90 ($\mu$m) | Content (dry mass basis %) | Type | Post-disturbance particle diameter d90 ($\mu$m) | Content (dry mass basis %) |
| Example | 1 | Dry yellow pea powder | 250 | 100% | - | - | - | - | - | - |
| Example | 2 | Dry yellow pea powder | 250 | 100% | - | - | - | - | - | - |
| Example | 3 | Dry yellow pea powder | 250 | 100% | - | - | - | - | - | - |
| Example | 4 | Dry yellow pea powder | 250 | 100% | - | - | - | - | - | - |
| Comparative Example | 5 | Dry yellow pea powder | 250 | 100% | - | - | - | - | - | - |
| Example | 6 | Dry yellow pea powder | 250 | 100% | - | - | - | - | - | - |

| Table 1 | | Raw materials | | | | | | | | |
|---|---|---|---|---|---|---|---|---|---|---|
| | | Edible plant materials | | | | | | | | |
| | | Pulse materials | | | Cereal materials | | | Other edible plant materials | | |
| | | Type | Post-disturbance particle diameter d90 ($\mu$m) | Content (dry mass basis %) | Type | Post-disturbance particle diameter d90 ($\mu$m) | Content (dry mass basis %) | Type | Post-disturbance particle diameter d90 ($\mu$m) | Content (dry mass basis %) |
| Example | 7 | Dry yellow pea powder | 250 | 100% | - | - | - | - | - | - |
| Example | 8 | Dry yellow pea powder | 250 | 100% | - | - | - | - | - | - |
| Example | 9 | Dry yellow pea powder | 250 | 100% | - | - | - | - | - | - |
| Example | 10 | Dry yellow pea powder | 250 | 100% | - | - | - | - | - | - |
| Example | 11 | Dry yellow pea powder | 250 | 100% | - | - | - | - | - | - |
| Example | 12 | Dry yellow pea powder | 250 | 100% | - | - | - | - | - | - |

| Table 1 | | Raw materials | | | | | | | | |
|---|---|---|---|---|---|---|---|---|---|---|
| | | Edible plant materials | | | | | | | | |
| | | Pulse materials | | | Cereal materials | | | Other edible plant materials | | |
| | | Type | Post-disturbance particle diameter d90 ($\mu$m) | Content (dry mass basis %) | Type | Post-disturbance particle diameter d90 ($\mu$m) | Content (dry mass basis %) | Type | Post-disturbance particle diameter d90 ($\mu$m) | Content (dry mass basis %) |
| Example | 13 | Dry yellow pea powder | 250 | 100% | - | - | - | - | - | - |
| Example | 14 | Dry yellow pea powder | 250 | 100% | - | - | - | - | - | - |
| Example | 15 | Dry yellow pea powder | 250 | 100% | - | - | - | - | - | - |
| Example | 16 | Dry yellow pea powder | 250 | 100% | - | - | - | - | - | - |
| Comparative Example | 17 | Dry yellow pea powder | 500 | 100% | - | - | - | - | - | - |
| Example | 18 | Dry yellow pea powder | 445 | 100% | - | - | - | - | - | - |

EP 4 289 284 A1

| Table 1 | | Raw materials | | | | | | | | |
|---|---|---|---|---|---|---|---|---|---|---|
| | | Edible plant materials | | | | | | | | |
| | | Pulse materials | | | Cereal materials | | | Other edible plant materials | | |
| | | Type | Post-disturbance particle diameter d90 (μm) | Content (dry mass basis %) | Type | Post-disturbance particle diameter d90 (μm) | Content (dry mass basis %) | Type | Post-disturbance particle diameter d90 (μm) | Content (dry mass basis %) |
| Example | 19 | Dry yellow pea powder | 300 | 100% | - | - | - | - | - | - |
| Example | 20 | Dry yellow pea powder | 50 | 100% | - | - | - | - | - | - |
| Example | 21 | Dry yellow pea powder | 120 | 100% | - | - | - | - | - | - |

EP 4 289 284 A1

[Table 1-2]

| Table 1 | | Raw materials | | | | | | | | | |
| --- | --- | --- | --- | --- | --- | --- | --- | --- | --- | --- | --- |
| | | Edible plant materials | | | | | | | | | |
| | | Pulse materials | | | Cereal materials | | | Other edible plant materials | | | |
| | | Type | Post-disturbance particle diameter d90 (μm) | Content (dry mass basis %) | Type | Post-disturbance particle diameter d90 (μm) | Content (dry mass basis %) | Type | Post-disturbance particle diameter d90 (μm) | Content (dry mass basis %) |
| Comparative Example | 22 | Dry yellow pea powder | 250 | 100% | - | - | - | - | - | - |
| Example | 23 | Dry yellow pea powder | 250 | 100% | - | - | - | - | - | - |
| Example | 24 | Dry yellow pea powder | 250 | 100% | - | - | - | - | - | - |
| Example | 25 | Dry yellow pea powder | 250 | 100% | - | - | - | - | - | - |
| Example | 25 | Dry yellow pea powder | 250 | 100% | - | - | - | - | - | - |
| Example | 27 | Dry yellow pea powder | 250 | 100% | - | - | - | - | - | - |
| Example | 28 | Dry yellow pea powder | 250 | 100% | - | - | - | - | - | - |
| Example | 29 | Dry yellow pea powder | 250 | 75% | - | - | - | Rice powder | 250 | 25% |
| Example | 30 | Dry yellow pea powder | 250 | 50% | - | - | - | Rice powder | 250 | 50% |
| Example | 31 | Dry yellow pea powder | 250 | 25% | - | - | - | Rice powder | 250 | 75% |
| Example | 32 | Dry yellow pea powder | 408 | 100% | - | - | - | - | - | - |
| Example | 33 | Dry yellow pea powder | 301 | 100% | - | - | - | - | - | - |

| Table 1 | | Raw materials | | | | | | | | |
|---|---|---|---|---|---|---|---|---|---|---|
| | | Edible plant materials | | | | | | | | |
| | | Pulse materials | | | Cereal materials | | | Other edible plant materials | | |
| | | Type | Post-disturbance particle diameter d90 (μm) | Content (dry mass basis %) | Type | Post-disturbance particle diameter d90 (μm) | Content (dry mass basis %) | Type | Post-disturbance particle diameter d90 (μm) | Content (dry mass basis %) |
| Example | 34 | Dry yellow pea powder | 65 | 100% | - | - | - | - | - | - |
| Example | 35 | Dry yellow pea powder | 85 | 100% | - | - | - | - | - | - |
| Example | 36 | Dry yellow pea powder (50%) + Soybean powder (50%) | 250 | 100% | - | | - | - | - | - |
| Example | 37 | Dry lentil powder | 285 | 100% | - | - | - | - | - | - |
| Example | 38 | Dry black kidney bean powder | 30 | 100% | - | - | - | - | - | - |
| Example | 39 | Dry white pea powder | 300 | 100% | - | - | - | - | - | - |
| Example | 40 | Dry chickpea powder | 385 | 100% | - | - | - | - | - | - |
| Example | 41 | Dry yellow pea powder | 485 | 100% | - | - | - | - | - | - |
| Example | 42 | Dry yellow pea powder | 250 | 100% | - | - | - | - | - | - |

[Table 1-3]

| Table 1 | | Raw materials | | | | | | | | |
| --- | --- | --- | --- | --- | --- | --- | --- | --- | --- | --- |
| | | Edible plant materials | | | | | | | | |
| | | Pulse materials | | | Cereal materials | | | Other edible plant materials | | |
| | | Type | Post-disturbance particle diameter d90 (μm) | Content (dry mass basis %) | Type | Post-disturbance particle diameter d90 (μm) | Content (dry mass basis %) | Type | Post-disturbance particle diameter d90 (μm) | Content (dry mass basis %) |
| Example | 43 | Dry yellow pea powder | 250 | 100% | - | - | - | - | - | - |
| Example | 44 | Dry yellow pea powder | 250 | 100% | - | - | - | - | - | - |
| Example | 45 | Dry yellow pea powder | 250 | 100% | - | - | - | - | - | - |
| Example | 46 | Dry yellow pea powder | 250 | 100% | - | - | - | - | - | - |
| Example | 47 | Dry yellow pea powder | 250 | 100% | - | - | - | - | - | - |
| Comparative Example | 48 | Dry yellow pea powder | 250 | 100% | - | - | - | - | - | - |

(continued)

| Table 1 | | Raw materials | | | | | | | | | |
| | | Edible plant materials | | | | | | | | | |
| | | Pulse materials | | | Cereal materials | | | Other edible plant materials | | | |
| | | Type | Post-disturbance particle diameter d90 ($\mu$m) | Content (dry mass basis %) | Type | Post-disturbance particle diameter d90 ($\mu$m) | Content (dry mass basis %) | Type | Post-disturbance particle diameter d90 ($\mu$m) | Content (dry mass basis %) |
| Example | 49 | Dry yellow pea powder | 250 | 100% | - | - | - | - | - | - |
| Example | 50 | Dry yellow pea powder | 250 | 100% | - | - | - | - | - | - |
| Comparative Example | 51 | Dry yellow pea powder | 250 | 100% | - | - | - | - | - | - |
| Example | 52 | Dry yellow pea powder | 250 | 100% | - | - | - | - | - | - |
| Example | 53 | Dry yellow pea powder | 250 | 100% | - | - | - | - | - | - |
| Example | 54 | Dry yellow pea powder | 250 | 100% | - | - | - | - | - | - |

| Table 1 | | Raw materials | | | | | | | | |
|---|---|---|---|---|---|---|---|---|---|---|
| | | Edible plant materials | | | | | | | | |
| | | Pulse materials | | | Cereal materials | | | Other edible plant materials | | |
| | | Type | Post-disturbance particle diameter d90 (μm) | Content (dry mass basis %) | Type | Post-disturbance particle diameter d90 (μm) | Content (dry mass basis %) | Type | Post-disturbance particle diameter d90 (μm) | Content (dry mass basis %) |
| Example | 55 | Dry yellow pea powder | 250 | 100% | - | - | - | - | - | - |
| Example | 56 | Dry yellow pea powder | 250 | 100% | - | - | - | - | - | - |
| Example | 57 | Dry yellow pea powder | 250 | 100% | - | - | - | - | - | - |
| Comparative Example | 58 | Dry yellow pea powder | 250 | 100% | - | - | - | - | - | - |
| Example | 59 | Dry yellow pea powder | 250 | 100% | - | - | - | - | - | - |
| Example | 60 | Dry yellow pea powder | 250 | 100% | - | - | - | - | - | - |

EP 4 289 284 A1

| Table 1 | | Raw materials | | | | | | | | | |
|---|---|---|---|---|---|---|---|---|---|---|---|
| | | Edible plant materials | | | | | | | | | |
| | | Pulse materials | | | Cereal materials | | | Other edible plant materials | | | |
| | | Type | Post-disturbance particle diameter d90 ($\mu$m) | Content (dry mass basis %) | Type | Post-disturbance particle diameter d90 ($\mu$m) | Content (dry mass basis %) | Type | Post-disturbance particle diameter d90 ($\mu$m) | Content (dry mass basis %) |
| Example | 61 | Dry yellow pea powder | 250 | 100% | - | - | - | - | - | - |
| Example | 62 | Dry yellow pea powder | 250 | 100% | - | - | - | - | - | - |
| Example | 63 | Dry yellow pea powder | 250 | 100% | - | - | - | - | - | - |

EP 4 289 284 A1

[Table 1-4]

| Table 1 | | Raw materials | | | | | | | | |
|---|---|---|---|---|---|---|---|---|---|---|
| | | Edible plant materials | | | | | | | | |
| | | Pulse materials | | | Cereal materials | | | Other edible plant materials | | |
| | | Type | Post-disturbance particle diameter d90 ($\mu$m) | Content (dry mass basis %) | Type | Post-disturbance particle diameter d90 ($\mu$m) | Content (dry mass basis %) | Type | Post-disturbance particle diameter d90 ($\mu$m) | Content (dry mass basis %) |
| Example | 64 | Dry yellow pea powder | 250 | 100% | - | - | - | - | - | - |
| Example | 65 | Dry yellow pea powder | 250 | 100% | - | - | - | - | - | - |
| Example | 66 | Dry yellow pea powder | 250 | 100% | - | - | - | - | - | - |
| Example | 67 | Dry yellow pea powder | 250 | 1 00% | - | - | - | - | - | - |
| Example | 68 | Dry yellow pea powder | 250 | 100% | - | - | - | - | - | - |
| Example | 69 | Dry yellow pea powder | 250 | 100% | - | - | - | - | - | - |

EP 4 289 284 A1

(continued)

| Table 1 | | Raw materials | | | | | | | | |
|---|---|---|---|---|---|---|---|---|---|---|
| | | Edible plant materials | | | | | | | | |
| | | Pulse materials | | | Cereal materials | | | Other edible plant materials | | |
| | | Type | Post-disturbance particle diameter d90 (μm) | Content (dry mass basis %) | Type | Post-disturbance particle diameter d90 (μm) | Content (dry mass basis %) | Type | Post-disturbance particle diameter d90 (μm) | Content (dry mass basis %) |
| Example | 70 | Dry yellow pea powder | 250 | 100% | - | - | - | - | - | - |
| Example | 71 | Dry yellow pea powder | 250 | 100% | - | - | - | - | - | - |
| Example | 72 | Dry yellow pea powder | 250 | 100% | - | - | - | - | - | - |
| Example | 73 | Dry yellow pea powder | 250 | 75% | Dry oates powder | 120 | 25% | - | - | - |
| Example | 74 | Dry yellow pea powder | 250 | 50% | Dry oates powder | 120 | 50% | - | - | - |
| Example | 75 | Dry yellow pea powder | 250 | 25% | Dry oates powder | 120 | 75% | - | - | - |
| Example | 76 | - | - | - | Dry oates powder | 120 | 100% | - | - | - |

(continued)

Table 1

| | | Raw materials | | | | | | | | |
|---|---|---|---|---|---|---|---|---|---|---|
| | | Edible plant materials | | | | | | Other edible plant materials | | |
| | | Pulse materials | | | Cereal materials | | | | | |
| | | Type | Post-disturbance particle diameter d90 (μm) | Content (dry mass basis %) | Type | Post-disturbance particle diameter d90 (μm) | Content (dry mass basis %) | Type | Post-disturbance particle diameter d90 (μm) | Content (dry mass basis %) |
| Example | 77 | Dry yellow pea powder | 250 | 50% | Dry quinoa powder | 120 | 50% | - | - | - |
| Example | 78 | Dry yellow pea powder | 250 | 50% | Dry kibi powder | 120 | 50% | - | - | - |

[Table 1-5]

| Table 1 | | Raw materials | | | | | | | | | |
|---|---|---|---|---|---|---|---|---|---|---|---|
| | | Processing corresponding to pre-treatment | | | | | | | | | |
| | | Heating/kneading treatment | | | | | | Drying treatment | Crushing treatment | Comments | Specific surface area per unit volume after ultrasonication (m²/mL) |
| | | Dry mass basis moisture content upon treatment (mass %) | Maximum temp. during treatment (°C) | Kneading strength (SME) (kJ/kg) | Outlet temp. (°C) | Outlet pressure (MPa) | State upon extrusion | Dry mass basis moisture content after drying (mass %) | | | |
| Example | 1 | 50% | 120 | 900 | 90 | 1.2 | Non-swollen state | 10% | Yes | Crushed composition produced | D.40 |
| Example | 2 | 50% | 120 | 900 | 90 | 1.2 | Non-swollen state | 10% | Yes | Crushed composition produced | 0.40 |
| Example | 3 | 50% | 120 | 900 | 90 | 1.2 | Non-swollen state | 10% | Yes | Crushed composition produced | 0.40 |
| Example | 4 | 50% | 120 | 900 | 90 | 0.7 | Non-swollen state | 10% | Yes | Crushed composition produced | D.40 |
| Comparative Example | 5 | 50% | 120 | 900 | 115 | 0.2 | Swollen state | 10% | Yes | Crushed swollen composition produced | 0.40 |
| Example | 6 | 50% | 120 | 900 | 110 | 0.4 | Swollen state | 1D% | Yes | Crushed swollen composition produced | 0.40 |
| Example | 7 | 50% | 120 | 900 | 105 | 0.5 | Swollen state | 10% | Yes | Crushed swollen composition produced | 0.40 |

(continued)

| Table 1 | | Raw materials | | | | | | | | | |
|---|---|---|---|---|---|---|---|---|---|---|---|
| | | Processing corresponding to pre-treatment | | | | | | | | | |
| | | Heating/kneading treatment | | | | | | Drying treatment | Crushing treatment | Comments | Specific surface area per unit volume after ultrasonication (m2/mL) |
| | | Dry mass basis moisture content upon treatment (mass %) | Maximum temp. during treatment (°C) | Kneading strength (SME) (kJ/kg) | Outlet temp. (°C) | Outlet pressure (MPa) | State upon extrusion | Dry mass basis moisture content after drying (mass %) | | | |
| Example | 8 | 50% | 120 | 900 | 102 | 0.6 | Swollen state | 10% | Yes | Crushed swollen composition produced | 0.40 |
| Example | 9 | 50% | 120 | 900 | 102 | 0.6 | Swollen state | 10% | Yes | Crushed swollen composition produced | 0.40 |
| Example | 10 | 50% | 120 | 900 | 100 | 0.6 | Swollen state | 10% | Yes | Crushed swollen composition produced | 0.40 |
| Example | 11 | 50% | 120 | 900 | 90 | 1.2 | Non-swollen state | 10% | Yes | Crushed composition produced | 0.40 |
| Example | 12 | 50% | 120 | 900 | 80 | 29 | Non-swollen state | 10% | Yes | Crushed composition produced | 0.40 |
| Example | 13 | 50% | 120 | 900 | 75 | 3.9 | Non-swollen state | 10% | Yes | Crushed composition produced | 0.40 |
| Example | 14 | 50% | 120 | 900 | 75 | 6.0 | Non-swollen state | 10% | Yes | Crushed composition produced | 0.40 |

(continued)

Table 1

| | | Raw materials | | | | | | | | | |
|---|---|---|---|---|---|---|---|---|---|---|---|
| | | Processing corresponding to pre-treatment | | | | | | | | | |
| | | Heating/kneading treatment | | | | | | Drying treatment | Crushing treatment | Comments | Specific surface area per unit volume after ultrasonication (m²/mL) |
| | | Dry mass basis moisture content upon treatment (mass %) | Maximum temp. during treatment (°C) | Kneading strength (SME) (kJ/kg) | Outlet temp. (°C) | Outlet pressure (MPa) | State upon extrusion | Dry mass basis moisture content after drying (mass %) | | | |
| Example | 15 | 5D% | 120 | 900 | 75 | 5.7 | Non-swollen state | 10% | Yes | Crushed composition produced | 0.40 |
| Example | 16 | 50% | 120 | 900 | 90 | 1.2 | Non-swollen state | - | No | Heating/kneading at first stage and then supplied to fetter extruder | 0.40 |
| Comparative Example | 17 | 50% | 120 | 300 | 45 | 10.1 | Non-swollen state | 10% | Yes | Crushed composition produced | 0.05 |
| Example | 18 | 50% | 120 | 380 | 55 | 6.5 | Non-swollen state | 10% | Yes | Crushed composition produced | 0.15 |
| Example | 19 | 50% | 120 | 600 | 61 | 7.6 | Non-swollen state | 10% | Yes | Crushed composition produced | 0.35 |
| Example | 20 | 50% | 140 | 1350 | 65 | 6.7 | Non-swollen state | 1D% | Yes | Crushed composition produced | 2.00 |

| Table 1 | | Raw materials | | | | | | | | | | |
|---|---|---|---|---|---|---|---|---|---|---|---|---|
| | | Processing corresponding to pre-treatment | | | | | | | | | | |
| | | Heating/kneading treatment | | | | | | Drying treatment | Crushing treatment | Comments | Specific surface area per unit volume after ultrasonication (m$^2$/mL) | |
| | | Dry mass basis moisture content upon treatment (mass %) | Maximum temp. during treatment (°C) | Kneading strength (SME) (kJ/kg) | Outlet temp. (°C) | Outlet pressure (MPa) | State upon extrusion | Dry mass basis moisture content after drying (mass %) | | | | |
| Example | 21 | 50% | 120 | 1080 | 80 | 0.5 | Non-swollen state | 10% | Yes | Crushed composition produced | 1.00 | |

[Table 1-6]

| Table 1 | | Raw materials | | | | | | | | | | |
| | | Processing corresponding to pre-treatment | | | | | | | Crushing treatment | Comments | Specific surface area per unit volume after ultrasonicalion (m2/mL) |
| | | Heating/kneading treatment | | | | | | Drying treatment | | | |
| | | Dry mass basis moisture content upon treatment (mass%) | Maximum temp, during treatment (°C) | Kneading strength (SME) (kJ/kg) | Outlet temp. (°C) | Outlet pressure (MPa) | State upon extrusion | Dry mass basis moisture content after drying (mass%) | | | |
|---|---|---|---|---|---|---|---|---|---|---|---|
| Comparative Example | 22 | 20% | 100 | 900 | 95 | 1.0 | Non-swollen state | 10% | Yes | Crushed composition produced | D.40 |
| Example | 23 | 30% | 100 | 900 | 95 | to | Non-swollen state | 10% | Yes | Crushed composition produced | 0.40 |
| Example | 24 | 40% | 110 | 900 | 95 | 1.0 | Non-swollen state | 10% | Yes | Crushed composition produced | 0.40 |
| Example | 25 | 50% | 90 | 900 | 90 | 0.8 | Non-swollen state | 10% | Yes | Crushed composition produced | 0.40 |
| Example | 26 | 60% | 120 | 900 | 85 | 0.8 | Non-swollen state | 10% | Yes | Crushed composition produced | 0.40 |
| Example | 27 | 100% | 120 | 900 | 85 | 0.8 | Non-swollen state | 10% | Yes | Crushed composition produced | 0.40 |
| Example | 28 | 150% | 130 | 900 | 85 | 0.8 | Non-swolten state | 10% | Yes | Crushed composition produced | 0.40 |

(continued)

Table 1

| | | Raw materials | | | | | | | | |
| | | Processing corresponding to pre-treatment | | | | | | | | Specific surface area per unit volume after ultrasonicalion (m²/mL) |
| | | Heating/kneading treatment | | | | | | Drying treatment | Crushing treatment | Comments | |
| | | Dry mass basis moisture content upon treatment (mass%) | Maximum temp, during treatment (°C) | Kneading strength (SME) (kJ/kg) | Outlet temp. (°C) | Outlet pressure (MPa) | State upon extrusion | Dry mass basis moisture content after drying (mass%) | | | |
| Example | 29 | 50% | 120 | 900 | 90 | 1.5 | Non-swollen state | 10% | Yes | Crushed composition produced | 0.40 |
| Example | 30 | 50% | 120 | 900 | 90 | 1.5 | Non-swollen state | 10% | Yes | Crushed composition produced | 0.40 |
| Example | 31 | 50% | 120 | 900 | 90 | 1.5 | Non-swollen state | 10% | Yes | Crushed composition produced | 0.40 |
| Example | 32 | 50% | 120 | 900 | 90 | 1.0 | Non-swollen state | 10% | Yes | Crushed composition produced | 0.15 |
| Example | 33 | 50% | 120 | 900 | 90 | 1.0 | Non-swollen state | 10% | Yes | Crushed composition produced | 0.20 |
| Example | 34 | 50% | 120 | 900 | 90 | 1.0 | Non-swollen state | 10% | Yes | Crushed composition produced | 1.32 |
| Example | 35 | 50% | 120 | 900 | 90 | 1.0 | Non-swollen state | 10% | Yes | Crushed composition produced | 1.10 |

(continued)

| Table 1 | | Raw materials | | | | | | | | | |
|---|---|---|---|---|---|---|---|---|---|---|---|
| | | Processing corresponding to pre-treatment | | | | | | | | | |
| | | Heating/kneading treatment | | | | | | Drying treatment | Crushing treatment | Comments | Specific surface area per unit volume after ultrasonicalion (m²/mL) |
| | | Dry mass basis moisture content upon treatment (mass%) | Maximum temp, during treatment (°C) | Kneading strength (SME) (kJ/kg) | Outlet temp. (°C) | Outlet pressure (MPa) | State upon extrusion | Dry mass basis moisture content after drying (mass%) | | | |
| Example | 36 | 50% | 120 | 900 | 90 | 1.0 | Non-swollen state | 10% | Yes | Crushed composition produced | 0.40 |
| Example | 37 | 50% | 120 | 400 | 90 | 8.0 | Non-swolten state | 10% | Yes | Crushed composition produced | 0.20 |
| Example | 38 | 50% | 120 | 1260 | 90 | 0.7 | Non-swollen state | 10% | Yes | Crushed composition produced | 1.50 |
| Example | 39 | 50% | 120 | 700 | 90 | 1.8 | Non-swollen state | 10% | Yes | Crushed composition produced | 0.30 |
| Example | 40 | 50% | 120 | 550 | 90 | 5.1 | Non-swollen state | 10% | Yes | Crushed composition produced | 0.20 |
| Example | 41 | 50% | 120 | 900 | 90 | 1.0 | Non-swollen state | 10% | Yes | Crushed composition produced | 0.11 |
| Example | 42 | 50% | 120 | 900 | 90 | 10 | Non-swolten state | 10% | Yes | Crushed composition produced | 0.40 |

[Table 1-7]

| Table 1 | | Raw materials | | | | | | | | | |
|---|---|---|---|---|---|---|---|---|---|---|---|
| | | Processing corresponding to pre-treatment | | | | | | | | | |
| | | Heating/kneading treatment | | | | | | Drying treatment | Crushing treatment | Comments | Specific surface area per unit volume after ultrasonication (m²/mL) |
| | | Dry mass basis moisture content upon treatment (mass %) | Maximum temp. duing treatment (°C) | Kneading strength (SME) (kJ/kg) | Outlet temp . (°C) | Outlet pressure (MPa) | state upon extrusion | Dry mass basis moisture content after drying (mass %) | | | |
| Example | 43 | 50% | 120 | 900 | 95 | 0.8 | Non-swollen state | 1D% | Yes | Crushed composition produced | 0.40 |
| Example | 44 | 50% | 120 | 900 | 95 | 0.8 | Non-swollen state | 1D% | Yes | Crushed composition produced | 0.40 |
| Example | 45 | 50% | 120 | 900 | 95 | 0.8 | Non-swollen state | 1D% | Yes | Crushed composition produced | 0.40 |
| Example | 46 | 50% | 120 | 900 | 95 | 0.8 | Non-swollen state | 1D% | Yes | Crushed composition produced | 0.40 |
| Example | 47 | 50% | 120 | 900 | 95 | 0.8 | Non-swollen state | 1D% | Yes | Crushed composition produced | 0.40 |
| Comparative Example | 48 | 50% | 120 | 900 | 85 | 1.6 | Non-swollen state | 1D% | Yes | Crushed composition produced | 0.40 |
| Example | 49 | 50% | 120 | 900 | 85 | 1.6 | Non-swollen state | 10% | Yes | Crushed composition produced | 0.40 |

| Table 1 | | Raw materials | | | | | | | | | |
|---|---|---|---|---|---|---|---|---|---|---|---|
| | | Processing corresponding to pre-treatment | | | | | | | | | |
| | | Heating/kneading treatment | | | | | | Drying treatment | Crushing treatment | Comments | Specific surface area per unit volume after ultrasonication (m²/mL) |
| | | Dry mass basis moisture content upon treatment (mass %) | Maximum temp. duing treatment (°C) | Kneading strength (SME) (kJ/kg) | Outlet temp . (°C) | Outlet pressure (MPa) | state upon extrusion | Dry mass basis moisture content after drying (mass %) | | | |
| Example | 50 | 50% | 120 | 900 | 85 | 1.6 | Non-swollen state | 10% | Yes | Crushed composition produced | 0.40 |
| Comparative Example | 51 | 50% | 120 | 900 | 85 | 1.6 | Non-swollen state | 1D% | Yes | Crushed composition produced | 0.40 |
| Example | 52 | 50% | 120 | 900 | 85 | 1.6 | Non-swollen state | 10% | Yes | Crushed composition produced | 0.40 |
| Example | 55 | 50% | 120 | 900 | 85 | 1.6 | Non-swollen state | 10% | Yes | Crushed composition produced | D.40 |
| Example | 54 | 50% | 120 | 900 | 85 | 1.6 | Non-swollen state | 10% | Yes | Crushed composition produced | 0.40 |
| Example | 55 | 50% | 120 | 900 | 85 | 1.6 | Non-swollen state | 1D% | Yes | Crushed composition produced | 0.40 |
| Example | 56 | 50% | 120 | 900 | 85 | 1.6 | Non-swollen state | 1D% | Yes | Crushed composition produced | 0.40 |

(continued)

| Table 1 | | Raw materials | | | | | | | | | | |
|---|---|---|---|---|---|---|---|---|---|---|---|---|
| | | Processing corresponding to pre-treatment | | | | | | | | | | |
| | | Heating/kneading treatment | | | | | | Drying treatment | Crushing treatment | Comments | Specific surface area per unit volume after ultrasonication (m²/mL) |
| | | Dry mass basis moisture content upon treatment (mass %) | Maximum temp. duing treatment (°C) | Kneading strength (SME) (kJ/kg) | Outlet temp . (°C) | Outlet pressure (MPa) | state upon extrusion | Dry mass basis moisture content after drying (mass %) | | | |
| Example | 57 | 50% | 120 | 900 | 85 | 1.6 | Non-swollen state | 10% | Yes | Crushed composition produced | 0.40 |
| Comparative Example | 58 | 50% | 120 | 900 | 90 | 1.0 | Non-swollen state | 1D% | Yes | Crushed composition produced | 0.40 |
| Example | 59 | 50% | 120 | 900 | 90 | 1.0 | Non-swollen state | 1D% | Yes | Crushed composition produced | 0.40 |
| Example | 60 | 50% | 120 | 900 | 90 | 1.0 | Non-swollen state | 1D% | Yes | Crushed composition produced | D.40 |
| Example | 61 | 50% | 120 | 900 | 90 | 1.0 | Non-swollen state | 10% | Yes | Crushed composition produced | 0.40 |
| Example | 62 | 5D% | 120 | 900 | 90 | 1.0 | Non-swollen state | 10% | Yes | Crushed composition produced | 0.40 |
| Example | 63 | 50% | 120 | 900 | 90 | 1.0 | Non-swollen state | 10% | Yes | Crushed composition produced | D.40 |

[Table 1-8]

| Table 1 | | Raw materials | | | | | | | | |
| --- | --- | --- | --- | --- | --- | --- | --- | --- | --- | --- |
| | | Processing corresponding to pre-treatment | | | | | | | | |
| | | Heating/kneading treatment | | | | | | Drying treatment | Crushing treatment | Comments | Specific surface area per unit volume after ultrasonication (m²/mL) |
| | | Dry mass basis moisture content upon treatment (mass %) | Maximum temp. during treatment (°C) | Kneading strength (SME) (kJ/kg) | Outlet temp. (°C) | Outlet pressure (MPa) | State upon extrusion | Dry mass basis moisture content after drying (mass %) | | | |
| Example | 64 | 50% | 120 | 900 | 90 | 1.0 | Non-swollen state | 10% | Yes | Crushed composition produced | 0.40 |
| Example | 65 | 50% | 120 | 900 | 90 | 1.0 | Non-swollen state | 10% | Yes | Crushed composition produced | 0.40 |
| Example | 66 | 50% | 120 | 900 | 90 | 1.0 | Non-swollen state | 10% | Yes | Crushed composition produced | D.40 |
| Example | 67 | 50% | 120 | 900 | 90 | 1.0 | Non-swollen state | 10% | Yes | Crushed composition produced | 0.40 |
| Example | 68 | 50% | 120 | 900 | 90 | 1.0 | Non-swollen state | 10% | Yes | Crushed composition produced | 0.40 |
| Example | 69 | 20% | 120 | 900 | 105 | 1.0 | Swollen state | 10% | Yes | Crushed swollen composition produced | 0.20 |
| Example | 70 | 10% | 120 | 900 | 110 | 0.5 | Swollen state | 10% | Yes | Crushed swollen composition produced | 0.20 |

81

| Table 1 | | Raw materials | | | | | | | | | | |
|---|---|---|---|---|---|---|---|---|---|---|---|---|
| | | Processing corresponding to pre-treatment | | | | | | | | | | |
| | | Heating/kneading treatment | | | | | | Drying treatment | Crushing treatment | Comments | Specific surface area per unit volume after ultrasonication (m²/mL) |
| | | Dry mass basis moisture content upon treatment (mass %) | Maximum temp. during treatment (°C) | Kneading strength (SME) (kJ/kg) | Outlet temp. (°C) | Outlet pressure (MPa) | State upon extrusion | Dry mass basis moisture content after drying (mass %) | | | |
| Example | 71 | 30% | 170 | 900 | 90 | 0.8 | Non-swollen state | 10% | Yes | Crushed composition produced | 0.78 |
| Example | 72 | 30% | 170 | 900 | 90 | 0.8 | Non-swollen state | - | No | Heating/ kneading at first stage and then air-fed to latter extruder | 0.78 |
| Example | 73 | 25% | 140 | 1269 | 95 | 0.8 | Non-swollen state | 10% | Yes | Crushed composition produced | 0.33 |
| Example | 74 | 25% | 140 | 1502 | 95 | 0.8 | Non-swollen state | 10% | Yes | Crushed composition produced | D.33 |
| Example | 75 | 25% | 140 | 1894 | 95 | 0.8 | Non-swollen state | 10% | Yes | Crushed composition produced | 0.33 |
| Example | 76 | 25% | 140 | 1980 | 95 | 0.8 | Non-swollen state | 10% | Yes | Crushed composition produced | 0.33 |
| Example | 77 | 20% | 140 | 1435 | 110 | 0.5 | Swollen state | 10% | Yes | Crushed composition produced | 0.10 |

82

(continued)

| Table 1 | | Raw materials | | | | | | | | | | |
| | | Processing corresponding to pre-treatment | | | | | | | | | | |
| | | Heating/kneading treatment | | | | | | Drying treatment | Crushing treatment | Comments | Specific surface area per unit volume after ultrasonication (m²/mL) |
| | | Dry mass basis moisture content upon treatment (mass %) | Maximum temp. during treatment (°C) | Kneading strength (SME) (kJ/kg) | Outlet temp. (°C) | Outlet pressure (MPa) | State upon extrusion | Dry mass basis moisture content after drying (mass %) | | | |
| Example | 78 | 15% | 140 | 1345 | 110 | 0.5 | Swollen state | 10% | Yes | Crushed composition produced | D.10 |

[Table 2-1]

| Table 2 | | Dough composition | | | | | | | | | | | | | | |
| | | Protein | | Dietary fiber | | | Starch | | | | | Molecular mass ratio | | | | Dry mass basis moisture content (%) |
| | | Derived from | Content (wet mass basis %) | Dietary fiber Content (wet mass basis %) | Insoluble dietary fiberContent (wet mass basis %) | Post-disturbance particle diameter d90 (pm) | Derived from | Content (wet mass basis*) | (a) Number of starch grains (/mm$^2$) | (b) RVA peak temp. of gelatinization (°C) | Degree of gelabinization of starch (mass %) | AUC 1 (%) | AUC 2 (%) | AUC 3 (%) | AUC 4 (%) | |
|---|---|---|---|---|---|---|---|---|---|---|---|---|---|---|---|---|
| Example | 1 | Yellow pea | 14.1% | 10.1% | 9.0% | 103 | Yellow pea | 32.3% | 0 | 81 | 97% | 31% | 69% | 100% | 20% | 55% |
| Example | 2 | Yellow pea | 14.1% | 10.1% | 9.0% | 103 | Yellow pea | 32.3% | 0 | 83 | 97% | 31% | 69% | 100% | 20% | % |
| Example | 3 | Yellow pea | 14.1% | 10.1% | 9.0% | 103 | Yellow pea | 32.3% | 0 | 83 | 97% | 31% | 69% | 100% | 20% | 65% |
| Example | 4 | Yellow pea | 14.1% | 10.1% | 9.0% | 103 | Yellow pea | 32.3% | 0 | 75 | 97% | 31% | 69% | 100% | 20% | 45% |
| Comparative Example | 5 | Yellow pea | 19.2% | 13.0% | 12.0% | 102 | Yellow pea | 41.7% | 0 | 56 | 96% | 31% | 69% | 100% | 20% | 20% |
| Example | 6 | Yellow pea | 17.4% | 12.5% | 11.5% | 98 | Yellow pea | 40.0% | 0 | 61 | 95% | 31% | 69% | 100% | 20% | 25% |
| Example | 7 | Yellow pea | 17.4% | 12.5% | 11.5% | 98 | Yellow pea | 40.0% | 0 | 66 | 95% | 31% | 69% | 100% | 20% | 25% |
| Example | 8 | Yellow pea | 17.4% | 12.5% | 11.5% | 08 | Yellow pea | 40.0% | 0 | 71 | % | 31% | 69% | 100% | 20% | 25% |
| Example | a | Yellow pea | 17.4% | 12.5% | 11.5% | 98 | Yellow pea | 40.0% | 0 | 71 | 95% | 31% | 69% | 100% | 20% | 25% |
| Example | 10 | Yellow pea | 17.4% | 12.5% | 11.5% | 98 | Yellow pea | 40.0% | 0 | 72 | 85% | 31% | 69% | 100% | 20% | 25% |
| Example | 11 | Yellow pea | 10.1% | 11.6% | 10.2% | 101 | Yellow pea | 37.0% | 0 | 81 | 97% | 31% | 69% | 100% | 20% | 35% |

| Table 2 | | Dough composition | | | | | | | | | | | | | | |
| | | Protein | | Dietary fiber | | | Starch | | | | | Molecular mass ratio | | | | Dry mass basis moisture content (%) |
| | | Derived from | Content (wet mass basis %) | Dietary fiber Content (wet mass basis %) | Insoluble dietary fiberContent (wet mass basis %) | Post-disturbance particle diameter d90 (pm) | Derived from | Content (wet mass basis*) | (a) Number of starch grains (/mm²) | (b) RVA peak temp. of gelatinization (°C) | Degree of gelabinization of starch (mass %) | AUC 1 (%) | AUC 2 (%) | AUC 3 (%) | AUC 4 (%) | |
| Example | 12 | Yellow pea | 15.0% | 10.8% | 8.8% | 97 | Yellow pea | 34.5% | 0 | 84 | 84% | 31% | 69% | 100% | 20% | 45% |
| Example | 13 | Yellow pea | 10.9% | 7.8% | 4.7% | 102 | Yellow pea | 25.0% | 0 | 86 | 95% | 31% | 69% | 100% | 20% | 100% |
| Example | 14 | Yellow pea | 8.7% | 6.2% | 4.3% | 106 | Yellow pea | 20.0% | 0 | 93 | 95% | 31% | 69% | 100% | 20% | 150% |
| Example | 155 | Yellow pea | 7.3% | 5.2% | 3.8% | 89 | Yelow pea | 16.7% | 0 | 96 | 95% | 31% | 69% | 100% | 20% | 200% |
| Example | 16 | Yellow pea | 14.1% | 10.1% | 9.0% | 96 | Yelow pea | 32.3% | 0 | 96 | 96% | 35% | 65% | 100% | 31% | 55% |
| Comparative Example | 17 | Yellow pea | 14.1% | 10.1% | 9.0% | 492 | Yellow pea | 32.3% | 103 | 121 | 45% | 32% | 68% | 100% | 22% | 55% |
| Example | 18 | Yellow pea | 14.1% | 10.1% | 9.0% | 395 | Yellow pea | 32.3% | 38 | 115 | 60% | 33% | 67% | 100% | 23% | 55% |
| Example | 19 | Yellow pea | 14.1% | 10.1% | 9.0% | 102 | Yellow pea | 32.3% | 7 | 101 | 71% | 34% | 66% | 100% | 19% | 55% |
| Example | 20 | Yellow pea | 14.1% | 14.1% | 13.5% | 12 | Yellow pea | 32.3% | 0 | 89 | 86% | 18% | 82% | 100% | 42% | 55% |
| Example | 21 | Yellow pea | 14.1% | 14.1% | 13.5% | 38 | Yellow pea | 32.3% | 0 | 93 | 89% | 26% | 74% | 100% | 28% | 56% |
| Comparative Example | 22 | Yellow pea | 14.1% | 10.1% | 9.0% | 91 | Yellow pea | 32.3% | 176 | 131 | 38% | 72% | 28% | 100% | 52% | 55% |

EP 4 289 284 A1

85

(continued)

| Table 2 | | Dough composition | | | | | | | | | | | | | | |
|---|---|---|---|---|---|---|---|---|---|---|---|---|---|---|---|---|
| | | Protein | | Dietary fiber | | | Starch | | | | | Molecular mass ratio | | | | Dry mass basis moisture content (%) |
| | | Derived from | Content (wet mass basis %) | Dietary fiber Content (wet mass basis %) | Insoluble dietary fiberContent (wet mass basis %) | Post-disturbance particle diameter d90 (pm) | Derived from | Content (wet mass basis*) | (a) Number of starch grains (/mm²) | (b) RVA peak temp. of gelatinization (°C) | Degree of gelabinization of starch (mass %) | AUC 1 (%) | AUC 2 (%) | AUC 3 (%) | AUC 4 (%) | |
| Example | 23 | Yellow pea | 14.1% | 10.1% | 9.0% | 93 | Yellow pea | 32.3% | 74 | 114 | 51% | 58% | 42% | 100% | 43% | 55% |
| Example | 24 | Yellow pea | 14.1% | 10.1% | 9.0% | 95 | Yellow pea | 32.3% | 28 | 110 | 82% | 42% | 58% | 100% | 38% | 55% |
| Example | 25 | Yellow pea | 14.1% | 10.1% | 9.0% | 89 | Yellow pea | 32.3% | 512 | 140 | 45% | 70% | 30% | 100% | 5% | 55% |
| Example | 26 | Yellow pea | 14.1% | 1D. 1% | 9.0% | 91 | Yallow pea | 32.3% | 0 | B3 | 90% | 25% | 75% | 100% | 25% | 55% |
| Example | 27 | Yellow pea | 14.1% | 10.1% | 9.0% | 88 | Yellow pea | 32.3% | 0 | 92 | 85% | 19% | 81% | 100% | 31% | 55% |
| Example | 28 | Yellow pea | 14.1% | 10.1% | 9.0% | 84 | Yellow pea | 32.3% | a | &9 | 78% | 14% | 86% | 100% | 33% | 55% |

[Table 2-2]

| Table 2 | | Protein | | Dietary fiber | | | Starch | | | | | Molecular mass ratio | | | | mass Dry mass basis. moisture content (%) |
|---|---|---|---|---|---|---|---|---|---|---|---|---|---|---|---|---|
| | | Derived from | Content (wet mass basis. %) | Dietary fiber Content (wet mass basis %) | Insoluble dietary fiber Content (wet mass basis %) | Post-disturbanace particle diameter d90 (pm) | Derived from | Content (wet mass basis %) | (a) Number of starch grains (/mm²) | (b) RVA Peak temp. of gelatinization (°C) | Degree of gelatinization of starch (mass %) | AUC1 (%) | AUC2 (%) | AUC 3 (%) | AUC4 (%) | |
| Example | 29 | Yellow pea | 10.5% | 7.5% | 8.4% | 88 | Yellow pea + rice | 38.7% | 0 | 85 | 92% | 33% | 67% | 78% | 20% | 55% |
| Example | 30 | Yellow pea | 7.0% | 5.0% | 3.7% | 92 | Yellow pea + rice | 45.2% | 0 | 80 | 93% | 34% | 66% | 43% | 20% | 55% |
| Example | 31 | Yellow pea. | 3.5% | 3.1% | 3.0% | 87 | Yellow pea + rice | 51.6% | 0 | 81 | 92% | 35% | 65% | 25% | 20% | 55% |
| Example | 32 | Yellow pea | 3.6% | 18.2% | 16.3% | 296 | Yellow pea | 15.9% | 0 | 00 | 82% | 33% | 67% | 100% | 20% | 120% |
| Example | 33 | Yellow pea | 5.7% | 28.6% | 25.6% | 254 | Yellow pea | 25.0% | 0 | 98 | 82% | 33% | 67% | 100% | 20% | 40% |
| Example | 34 | Yellow pea | 19.1% | 3.2% | 3.0% | 18.5 | Yellow pea | 13.6% | 0 | 89 | 98% | 32% | 68% | 100% | 20% | 120% |
| Example | 35 | Yellow pea | 30.0% | 5.0% | 4.0% | 25.8 | Yellow pea | 21.4% | 0 | 87 | 98% | 32% | 68% | 100% | 20% | 40% |
| Example | 36 | Yellow pea + Soybean | 31.6% | 10.1% | 8.9%. | 98 | Yellow pea | 15.8% | 0 | 89 | 98% | 33% | 67% | 100% | 22% | 58% |
| Example | 37 | Lentil | 16.5% | 19.0% | 17.6% | 258 | Lentil | 17.196 | 30 | 85 | 90% | 34% | 66% | 100% | 20% | 58% |
| Example | 38 | Black kidney bean | 14.5% | 11.8% | 10.4% | 15 | Black kidney bean | 26.3% | 0 | 86 | 95% | 19% | 81% | 100% | 20% | 52% |
| Example | 39 | White pea | 9.4% | 10.1% | 7.8% | 238 | White pea | 31.4% | 0 | 63 | 92% | 19% | 81% | 100% | 20% | 59% |
| Example | 40 | Chickpea | 14.2% | 11.6% | 8.6% | 298 | Chickpea | 25.8% | 0 | 85 | 95% | 32% | 68% | 100% | 20% | 55% |

(continued)

| Table 2 | | Protein | | Dietary fiber | | | Starch | | | | | Molecular mass ratio | | | | mass Dry mass basis. moisture content (%) |
|---|---|---|---|---|---|---|---|---|---|---|---|---|---|---|---|---|
| | | | | | | | | | | | | | | | | |
| | | Derived from | Content (wet mass basis. %) | Dietary fiber Content (wet mass basis %) | Insoluble dietary fiber Content (wet mass basis %) | Post-disturbanace particle diameter d90 (pm) | Derived from | Content (wet mass basis %) | (a) Number of starch grains (/mm$^2$) | (b) RVA Peak temp. of gelatinization (°C) | Degree of gelatinization of starch (mass %) | AUC 1 (%) | AUC 2 (%) | AUC 3 (%) | AUC4 (%) | |
| Example | 41 | Yellow pea | 14 1% | 10.1% | 9.0% | 448 | Yellow pea | 32.3% | 0 | 86 | 95% | 33% | 67% | 100% | 20% | 55% |
| Example | 42 | Yellow pea | 14.1% | 10.1% | 9.0% | 103 | Yellow pea | 32.3% | 0 | 88 | 95% | 31% | 69% | 100% | 20% | 55% |
| Example | 43 | Yellow pea | 14.1% | 10.1% | 9.0% | 103 | Yellow pea | 32.3% | 0 | 61 | 95% | 31% | 69% | 100% | 20% | 55% |
| Example | 44 | Yellow pea | 14.1% | 10.1% | 9.0% | 103 | Yellow pea | 32.3% | 0 | 90 | 95% | 31% | 69% | 100% | 20% | 55% |
| Example | 45 | Yellow pea | 14.1% | 10.1% | 9.0% | 103 | Yellow pea | 32.3% | 0 | 87 | 95% | 31% | 69% | 100% | 20% | 55% |
| Example | 46 | Yellow pea | 14.1% | 10.1% | 9.0% | 103 | Yellow pea | 32.3% | 0 | 85 | 95% | 31% | 69% | 100% | 20% | 55% |
| Example | 47 | Yellow pea | 14.1% | 10.1% | 9.0% | 103 | Yellow pea | 32.3% | 0 | 86 | 95% | 31% | 69% | 100% | 20% | 55% |
| Comparative Example | 48 | Yellow pea | 14 1% | 10.1% | 9.0% | 103 | Yellow pea | 32.3% | 0 | 89 | 97% | 31% | 69% | 100% | 20% | 55% |
| Example | 46 | Yellow pea | 14.1% | 10.1% | 9.0% | 103 | Yellow pea | 32.3% | 0 | 87 | 97% | 31% | 69% | 100% | 20% | 55% |
| Example | 50 | Yellow pea | 14.1% | 10.1% | 9.0% | 103 | Yellow pea | 32.3% | 0 | 87 | 97% | 31% | 69% | 100% | 20% | 55% |
| Comparative Example | 51 | Yellow pea | 14.1% | 10.1% | 9.0% | 103 | Yellow pea | 32.3% | 0 | 88 | 97% | 31% | 69% | 100% | 20% | 55% |

| Table 2 | | Dough composition | | | | | | | | | | | | | | | |
|---|---|---|---|---|---|---|---|---|---|---|---|---|---|---|---|---|---|
| | | Protein | | Dietary fiber | | | Starch | | | | | Molecular mass ratio | | | | | mass Dry mass basis. moisture content (%) |
| | | Derived from | Content (wet mass basis. %) | Dietary fiber Content (wet mass basis %) | Insoluble dietary fiber Content (wet mass basis %) | Post-disturbanace particle diameter d90 (pm) | Derived from | Content (wet mass basis %) | (a) Number of starch grains (/mm$^2$) | (b) RVA Peak temp. of gelatinization (°C) | Degree of gelatinization of starch (mass %) | AUC1 (%) | AUC2 (%) | AUC 3 (%) | AUC4 (%) | |
| Example | 52 | Yellow pea | 14.1% | 10.1% | 9.0% | 103 | Yellow pea | 32.3% | 0 | 86 | 97% | 31% | 69% | 100% | 20% | 55% |
| Example | 53 | Yellow pea | 14.1% | 10.1% | 9.0% | 103 | Yellow pea | 32.3% | 0 | 89 | 97% | 31% | 69% | 100% | 20% | 55% |
| Example | 54 | Yellow pea | 14.1% | 10.1% | 9.0% | 103 | Yellow pea | 32.3% | 0 | 85 | 97% | 31% | 69% | 100% | 20% | 55% |
| Example | 55 | Yellow pea | 14.1% | 10.1% | 9.0% | 103 | Yellow pea | 32.3% | 0 | 84 | 97% | 31% | 69% | 100% | 20% | 55% |
| Example | 56 | Yellow pea | 14 1% | 10.1% | 9.0% | 103 | Yellow pea | 32.3% | 0 | 93 | 97% | 31% | 69% | 100% | 20% | 55% |
| Example | 57 | Yellow pea | 14.1% | 10.1% | 9.0% | 103 | Yellow pea | 32.3% | 0 | 93 | 97% | 31% | 69% | 100% | 20% | 55% |

[Table 2-3]

| Table 2 | | Dough composition | | | | | | | | | | | | | | |
| | | Protein | | Dietary fiber | | | Starch | | | | | Molecular mass ratio | | | | Dry mass basis moisture content (%) |
| | | Derived from | Content (wet mass basis %) | Dietary fiber Content (wet mass basis %) | Insoluble dietary fiber Content (wet mass basis %) | Post-disturbance particle diameter d90 (μm) | Derived from | Content (wet mass basis %) | (a) Number of starch grains (/mm²) | (b) RVA peak temp. of gelatinization (°C) | Degree of gelatinization of starch (mass %) | AUC 1 (%) | AUC 2 (%) | AUC 3 (%) | AUC 4 (%) | |
| Comparative Example | 58 | Yellow pea | 14.1% | 10.1% | 9.0% | 103 | Yellow pea | 32.3% | 0 | 93 | 97% | 31% | 69% | 100% | 20% | 55% |
| Example | 59 | Yellow pea | 14.1% | 10.1% | 9.0% | 103 | Yellow pea | 32.3% | 0 | 89 | 97% | 31% | 69% | 100% | 20% | 55% |
| Example | 60 | Yellow pea | 14.1% | 10.1% | 9.0% | 103 | Yellow pea | 32.3% | 0 | 84 | 97% | 31% | 69% | 100% | 20% | 55% |
| Example | 61 | Yellow pea | 14.1% | 10.1% | 9.0% | 103 | Yellow pea | 32.3% | 0 | 86 | 94% | 31% | 69% | 100% | 20% | 55% |
| Example | 62 | Yellow pea | 14.1% | 10.1% | 9.0% | 103 | Yellow pea | 32.3% | 0 | 87 | 95% | 31% | 69% | 100% | 20% | 55% |
| Example | 63 | Yellow pea | 14.1% | 10.1% | 9.0% | 103 | Yellow pea | 32.3% | 0 | 89 | 95% | 31% | 69% | 100% | 20% | 55% |
| Example | 64 | Yellow pea | 14.1% | 10.1% | 9.0% | 103 | Yellow pea | 32.3% | 0 | 84 | 98% | 31% | 69% | 100% | 20% | 55% |
| Example | 65 | Yellow pea | 14.1% | 10.1% | 9.0% | 103 | Yellow pea | 32.3% | 0 | 85 | 98% | 31% | 69% | 100% | 20% | 55% |
| Example | 66 | Yellow pea | 14.1% | 10.1% | 9.0% | 103 | Yellow pea | 32.3% | 0 | 89 | 98% | 31% | 69% | 100% | 20% | 55% |
| Example | 67 | Yellow pea | 14.1% | 10.1% | 9.0% | 103 | Yellow pea | 32.3% | 0 | 89 | 98% | 31% | 69% | 100% | 20% | 55% |
| Example | 68 | Yellow pea | 14.1% | 10.1% | 9.0% | 103 | Yellow pea | 32.3% | 0 | 87 | 98% | 31% | 69% | 100% | 20% | 55% |
| Example | 69 | Yellow pea | 16.9% | 12.0% | 10.7% | 91 | Yellow pea | 38.5% | 0 | 88 | 98% | 30% | 70% | 100% | 21% | 30% |
| Example | 70 | Yellow pea | 16.9% | 12.0% | 10.7% | 91 | Yellow pea | 38.5% | 0 | 90 | 98% | 26% | 74% | 100% | 22% | 30% |
| Example | 71 | Yellow pea | 16.9% | 12.0% | 10.7% | 103 | Yellow pea | 38.5% | 0 | 91 | 100% | 10% | 90% | 100% | 42% | 30% |
| Example | 72 | Yellow pea | 16.9% | 12.0% | 10.7% | 103 | Yellow pea | 38.5% | 0 | 91 | 100% | 10% | 90% | 100% | 42% | 30% |
| Example | 73 | Yellow pea + oates | 14.7% | 10.6% | 8.6% | 86 | Yellow pea + oates | 40.8% | 0 | 85 | 100% | 11% | 90% | 93% | 40% | 25% |
| Example | 74 | Yellow pea + oates | 12.5% | 9.2% | 6.6% | 76 | Yellow pea + oates | 43.2% | 0 | 85 | 100% | 11% | 89% | 87% | 39% | 25% |
| Example | 75 | Yellow pea + oates | 10.2% | 7.8% | 4.5% | 67 | Yellow pea + oates | 45.6% | 0 | 85 | 100% | 12% | 89% | 80% | 37% | 25% |
| Example | 76 | Oates | 8.0% | 6.4% | 2.4% | 56 | Oates | 48.0% | 0 | 87 | 100% | 12% | 88% | 73% | 35% | 25% |
| Example | 77 | Yellow pea + quinoa | 9.8% | 6.7% | 5.6% | 21 | Yellow pea + quinoa | 35.0% | 0 | 90 | 100% | 19% | 81% | 90% | 18% | 60% |
| Example | 78 | Yellow pea + kibi | 6.7% | 6.1% | 5.9% | 15 | Yellow pea + kibi | 33.0% | 0 | 91 | 100% | 18% | 82% | 90% | 18% | 80% |

[Table 3-1]

| Table 3 | | Processing conditions | | | | | | | | |
|---|---|---|---|---|---|---|---|---|---|---|
| | | Entire screw | Forced exhaust mechanism | | Flight section | | Kneading section | | | |
| | | L/D ratio (in area at < 100°C) | Position of forced exhaust | Suction pressure (MPa) | Length ratio of flight section to entire screw (%) | Average composition temp. at flight section (°C) | Length ratio of kneading section to entire screw (%) | Kneading pressure (Mpa) | Average composition temp. at kneading setion (°C) | Kneading strength (SME) (kJ/kg) |
| Example | 1 | 9 | Exhaust at feeder | 0.08 | 82% | 70 | 18% | 4 | 90 | 640 |
| Example | 2 | 9 | Exhaust at feeder | 0.08 | 82% | 70 | 18% | 4 | 90 | 701 |
| Example | 3 | 9 | Exhaust at feeder | 0.08 | 82% | 70 | 18% | 4 | 90 | 625 |
| Example | 4 | 9 | Exhaust at feeder | 0.08 | 82% | 70 | 18% | 4 | 90 | 625 |
| Comparative Example | 5 | 9 | Exhaust at feeder | 0.08 | 82% | 40 | 18% | 1.3 | 70 | 295 |
| Example | 6 | 9 | Exhaust at feeder | 0.08 | 82% | 45 | 18% | 2.5 | 75 | 349 |
| Example | 7 | 9 | Exhaust at feeder | 0.08 | 82% | 45 | 18% | 2.5 | 75 | 349 |
| Example | 8 | 9 | Exhaust at feeder | 0.08 | 82% | 45 | 18% | 2.5 | 75 | 349 |
| Example | 9 | 9 | Exhaust at feeder | 0.08 | 82% | 45 | 18% | 2.5 | 75 | 349 |
| Example | 10 | 9 | Exhaust at feeder | 0.08 | 82% | 45 | 18% | 2.5 | 75 | 349 |
| Example | 11 | 9 | Exhaust at feeder | 0.08 | 82% | 54 | 18% | 3 | 90 | 469 |
| Example | 12 | 9 | Exhaust at feeder | 0.08 | 82% | 62 | 18% | 3.3 | 90 | 557 |
| Example | 13 | 9 | Exhaust at feeder | 0.08 | 82% | 75 | 18% | 4.5 | 90 | 438 |
| Example | 14 | 9 | Exhaust at feeder | 0.08 | 82% | 71 | 18% | 4 | 90 | 491 |
| Example | 15 | 9 | Exhaust at feeder | 0.08 | 82% | 70 | 18% | 4 | 90 | 556 |
| Example | 16 | 9 | Exhaust at immediately after first kneading section | 0.08 | 82% | 98 | 18% | 4 | 90 | 661 |
| Comparative Example | 17 | 9 | Exhaust at feeder | 0.08 | 82% | 70 | 18% | 4 | 90 | 324 |
| Example | 18 | 9 | Exhaust at feeder | 0.08 | 82% | 70 | 18% | 4 | 90 | 372 |
| Example | 19 | 9 | Exhaust at flight section | 0.05 | 82% | 70 | 18% | 4 | 90 | 553 |
| Example | 20 | 9 | Exhaust at feeder | 0.05 | 82% | 70 | 18% | 4 | 90 | 1,414 |
| Example | 21 | 9 | Exhaust at feeder | 0.08 | 82% | 70 | 18% | 4 | 90 | 1,025 |
| Comparative Example | 22 | 9 | Exhaust at feeder | 0.08 | 82% | 60 | 18% | 4 | 90 | 453 |
| Example | 23 | 9 | Exhaust at feeder | 0.08 | 82% | 62 | 18% | 4 | 90 | 424 |
| Example | 24 | 9 | Exhaust at feeder | 0.08 | 82% | 65 | 18% | 4 | 90 | 435 |
| Example | 25 | 9 | Exhaust at feeder | 0.08 | 82% | 70 | 18% | 4 | 90 | 421 |
| Example | 26 | 9 | Exhaust at feeder | 0.08 | 82% | 70 | 18% | 4 | 90 | 431 |
| Example | 27 | 9 | Exhaust at feeder | 0.08 | 82% | 70 | 18% | 4 | 90 | 422 |
| Example | 28 | 9 | Exhaust at feeder | 0.08 | 82% | 70 | 18% | 4 | 90 | 426 |
| Example | 29 | 9 | Exhaust at feeder | 0.08 | 82% | 70 | 18% | 4 | 90 | 432 |

[Table 3-2]

| Table 3 | | Processing conditions | | | | | | | | |
|---|---|---|---|---|---|---|---|---|---|---|
| | | Entire screw | Forced exhaust mechanism | | Flight section | | Kneading section | | | |
| | | L/D ratio (in area at < 100°C) | Position of forced exhaust | Suction pressure (MPa) | Length ratio of flight section to entire screw (%) | Average composition temp. at flight section (°C) | Length ratio of kneading section to entire screw (%) | Kneading pressure (Mpa) | Average composition temp. at kneading setion (°C) | Kneading strength (SME) (kJ/kg) |
| Example | 30 | 9 | Exhaust at feeder | 0.08 | 82% | 70 | 18% | 4 | 90 | 428 |
| Example | 31 | 9 | Exhaust at feeder | 0.08 | 82% | 70 | 18% | 4 | 90 | 431 |
| Example | 32 | 9 | Exhaust at feeder | 0.08 | 82% | 65 | 18% | 4 | 90 | 568 |
| Example | 33 | 9 | Exhaust at feeder | 0.08 | 82% | 65 | 18% | 4 | 90 | 539 |
| Example | 34 | 9 | Exhaust at feeder | 0.08 | 82% | 65 | 18% | 4 | 90 | 1,193 |
| Example | 35 | 9 | Exhaust at feeder | 0.08 | 82% | 65 | 18% | 4 | 90 | 1,081 |
| Example | 36 | 9 | Exhaust at feeder | 0.08 | 82% | 72 | 18% | 4 | 96 | 585 |
| Example | 37 | 9 | Exhaust at feeder | 0.08 | 82% | 70 | 18% | 4 | 94 | 385 |
| Example | 38 | 9 | Exhaust at feeder | 0.08 | 82% | 65 | 18% | 4 | 92 | 1,601 |
| Example | 39 | 9 | Exhaust at feeder | 0.08 | 82% | 65 | 18% | 4 | 87 | 451 |
| Example | 40 | 9 | Exhaust at feeder | 0.08 | 82% | 65 | 18% | 4 | 85 | 403 |
| Example | 41 | 9 | Exhaust at feeder | 0.08 | 82% | 71 | 18% | 4 | 90 | 398 |
| Example | 42 | 5 | Exhaust at feeder | 0.08 | 82% | 71 | 18% | 3.2 | 90 | 379 |
| Example | 43 | 15 | Exhaust at feeder | 0.08 | 82% | 71 | 18% | 4.1 | 90 | 391 |
| Example | 44 | 20 | Exhaust at feeder | 0.08 | 82% | 71 | 18% | 4.2 | 90 | 421 |
| Example | 45 | 24 | Exhaust at feeder | 0.08 | 82% | 71 | 18% | 4.1 | 90 | 450 |
| Example | 46 | 30 | Exhaust at feeder | 0.08 | 82% | 71 | 18% | 4.1 | 90 | 785 |
| Example | 47 | 9 | None | – | 82% | 71 | 18% | 4 | 90 | 477 |
| Comparative Example | 48 | 9 | Exhaust at feeder | 0.08 | 45% | 71 | 55% | 0.8 | 90 | 1,577 |
| Example | 49 | 9 | Exhaust at feeder | 0.08 | 55% | 71 | 45% | 1.5 | 90 | 1,238 |
| Example | 50 | 9 | Exhaust at feeder | 0.08 | 70% | 71 | 30% | 2 | 90 | 811 |
| Comparative Example | 51 | 9 | Exhaust at feeder | 0.08 | 82% | 71 | 18% | 0.5 | 90 | 306 |
| Example | 52 | 9 | Exhaust at feeder | 0.08 | 82% | 40 | 18% | 15.1 | 40 | 466 |
| Example | 53 | 9 | Exhaust at feeder | 0.08 | 82% | 50 | 18% | 12.1 | 50 | 467 |
| Example | 54 | 9 | Exhaust at feeder | 0.08 | 82% | 60 | 18% | 9.5 | 60 | 477 |
| Example | 55 | 9 | Exhaust at feeder | 0.08 | 82% | 70 | 18% | 5.8 | 70 | 461 |
| Example | 56 | 9 | Exhaust at feeder | 0.08 | 82% | 90 | 18% | 5.1 | 81 | 483 |
| Example | 57 | 9 | Exhaust at feeder | 0.08 | 82% | 99 | 18% | 2.9 | 99 | 496 |

[Table 3-3]

| Table 3 | | Processing conditions | | | | | | | | |
|---|---|---|---|---|---|---|---|---|---|---|
| | | Entire screw | Forced exhaust mechanism | | Flight section | | Kneading section | | | |
| | | L/D ratio (in area at < 100°C) | Position of forced exhaust | Suction pressure (MPa) | Length ratio of flight section to entire screw (%) | Average composition temp. at flight section (°C) | Length ratio of kneading section to entire screw (%) | Kneading pressure (Mpa) | Average composition temp. at kneading setion (°C) | Kneading strength (SME) (kJ/kg) |
| Comparative Example | 58 | 9 | Exhaust at feeder | 0.08 | 100% | 70 | 0% | 4 | 80 | 100 |
| Example | 59 | 9 | Exhaust at feeder | 0.08 | 97% | 99 | 3% | 4 | 99 | 280 |
| Example | 60 | 9 | Exhaust at feeder | 0.08 | 95% | 99 | 5% | 4 | 99 | 330 |
| Example | 61 | 9 | Exhaust at feeder | 0.08 | 82% | 90 | 18% | 4 | 90 | 497 |
| Example | 62 | 9 | Exhaust at feeder | 0.08 | 82% | 90 | 18% | 4 | 90 | 461 |
| Example | 63 | 9 | Exhaust at feeder | 0.08 | 82% | 90 | 18% | 4 | 90 | 473 |
| Example | 64 | 9 | Exhaust at feeder | 0.08 | 82% | 90 | 18% | 4 | 90 | 461 |
| Example | 65 | 9 | Exhaust at feeder | 0.08 | 82% | 90 | 18% | 4 | 90 | 456 |
| Example | 66 | 9 | Exhaust at feeder | 0.08 | 82% | 90 | 18% | 4 | 90 | 481 |
| Example | 67 | 9 | Exhaust at feeder | 0.08 | 82% | 90 | 18% | 4 | 90 | 481 |
| Example | 68 | 9 | Exhaust at feeder | 0.08 | 82% | 90 | 18% | 4 | 90 | 481 |
| Example | 69 | 9 | Exhaust at feeder | 0.50 | 82% | 90 | 18% | 4 | 90 | 985 |
| Example | 70 | 9 | Exhaust at feeder | 0.50 | 82% | 90 | 18% | 4 | 90 | 895 |
| Example | 71 | 7 | Exhaust at feeder | 0.08 | 90% | 90 | 10% | 2.6 | 90 | 860 |
| Example | 72 | 7 | Exhaust at feeder | 0.10 | 90% | 90 | 10% | 2.6 | 90 | 860 |
| Example | 73 | 15 | Exhaust at feeder | 0.05 | 95% | 95 | 5% | 5.5 | 95 | 678 |
| Example | 74 | 15 | Exhaust at feeder | 0.05 | 95% | 95 | 5% | 5.5 | 95 | 789 |
| Example | 75 | 15 | Exhaust at feeder | 0.05 | 95% | 95 | 5% | 5.5 | 95 | 873 |
| Example | 76 | 15 | Exhaust at feeder | 0.05 | 95% | 95 | 5% | 5.5 | 95 | 989 |
| Example | 77 | 9 | Exhaust at feeder | 0.05 | 82% | 80 | 18% | 1 | 85 | 953 |
| Example | 78 | 9 | Exhaust at feeder | 0.05 | 82% | 70 | 18% | 1 | 80 | 1,023 |

[Table 3-4]

| Table 3 | | Die section | | Post-treatment section | | | | | |
| | | | | Aging treatment | | Dry treatment | | | |
| | | Die section unevenness | Die section shape | Aging time T (hr) | A x T (RH%*hr) A: RH% T: Aging time | Average ambient temp. (°C) | Drying time at ambient temp. > 50°C (time: hr) | Decrease in dry mass basis moisture content during drying (%) | Comments |
|---|---|---|---|---|---|---|---|---|---|
| Example | 1 | 1.0 | Circular | 1 | 60 | 90 | 4 | 82% | |
| Example | 2 | 1.0 | Circular | 1 | 60 | 90 | 4 | 85% | |
| Example | 3 | 1.0 | Circular | 1 | 60 | 55 | 0.5 | 23% | |
| Example | 4 | 1.0 | Circular | 0.3 | 18 | 70 | 2 | 44% | |
| Comparative Example | 5 | 1.0 | Circular | 0.1 | 6 | 90 | 4 | 50% | |
| Example | 6 | 1.0 | Circular | 0.1 | 6 | 60 | 0.5 | 8% | |
| Example | 7 | 1.0 | Circular | 0.1 | 6 | 57 | 0.5 | 16% | |
| Example | 8 | 1.0 | Circular | 0.1 | 6 | 54 | 0.5 | 20% | |
| Example | 9 | 1.0 | Circular | 0.1 | 6 | – | – | 0% | |
| Example | 10 | 1.0 | Circular | 0.1 | 6 | 90 | 4 | 60% | |
| Example | 11 | 1.0 | Circular | 0.3 | 18 | 90 | 4 | 71% | |
| Example | 12 | 1.0 | Circular | 0.5 | 30 | 90 | 4 | 78% | |
| Example | 13 | 1.0 | Circular | 1.5 | 135 | 90 | 4 | 90% | |
| Example | 14 | 1.0 | Circular | 2 | 200 | 90 | 4 | 93% | |
| Example | 15 | 1.0 | Circular | 3 | 300 | 90 | 4 | 95% | |
| Example | 16 | 1.0 | Circular | 1 | 60 | 90 | 4 | 82% | |
| Comparative Example | 17 | 1.0 | Circular | 1 | 60 | 90 | 4 | 80% | |
| Example | 18 | 1.0 | Circular | 1 | 60 | 90 | 4 | 84% | |
| Example | 19 | 1.0 | Circular | 1 | 60 | 90 | 4 | 82% | |
| Example | 20 | 1.0 | Circular | 1 | 60 | 90 | 4 | 82% | |
| Example | 21 | 1.0 | Circular | 1 | 60 | 90 | 4 | 82% | |
| Comparative Example | 22 | 1.0 | Circular | 1 | 60 | 90 | 4 | 82% | |
| Example | 23 | 1.0 | Circular | 1 | 60 | 90 | 4 | 82% | |
| Example | 24 | 1.0 | Circular | 1 | 60 | 90 | 4 | 82% | |
| Example | 25 | 1.0 | Circular | 1 | 60 | 90 | 4 | 82% | |
| Example | 26 | 1.0 | Circular | 1 | 60 | 90 | 4 | 82% | |
| Example | 27 | 1.0 | Circular | 1 | 60 | 90 | 4 | 82% | |
| Example | 28 | 1.0 | Circular | 1 | 60 | 90 | 4 | 82% | |
| Example | 29 | 1.0 | Circular | 1 | 60 | 90 | 4 | 82% | |

[Table 3-5]

| Table 3 | | Die section | | Aging treatment | | Dry treatment | | | |
|---|---|---|---|---|---|---|---|---|---|
| | | Die section unevenness | Die section shape | Aging time T (hr) | A x T (RH%*hr) A: RH% T: Aging time | Average ambient temp. (°C) | Drying time at ambient temp. > 50°C (time: hr) | Decrease in dry mass basis moisture content during drying (%) | Comments |
| Example | 30 | 1.0 | Circular | 1 | 60 | 90 | 4 | 82% | Slightly prone to binding during drying but acceptable |
| Example | 31 | 1.0 | Circular | 1 | 60 | 90 | 4 | 82% | Slightly prone to binding during drying |
| Example | 32 | 1.0 | Circular | 1.5 | 135 | 90 | 4 | 92% | |
| Example | 33 | 1.0 | Circular | 0.4 | 24 | 80 | 4 | 75% | |
| Example | 34 | 1.0 | Circular | 1.5 | 135 | 90 | 4 | 92% | |
| Example | 35 | 1.0 | Circular | 0.4 | 24 | 80 | 4 | 75% | |
| Example | 36 | 1.0 | Circular | 1 | 60 | 90 | 0.5 | 48% | |
| Example | 37 | 1.0 | Square | 1 | 60 | 90 | 1.5 | 59% | |
| Example | 38 | 1.0 | Circular | 0.8 | 48 | 90 | 2.5 | 62% | |
| Example | 39 | 1.0 | Square | 1 | 60 | 90 | 8 | 85% | |
| Example | 40 | 1.0 | Circular | 1 | 60 | 90 | 16 | 95% | |
| Example | 41 | 1.0 | Circular | 1 | 60 | 90 | 4 | 82% | |
| Example | 42 | 1.0 | Circular | 1 | 100 | 75 | 4 | 78% | |
| Example | 43 | 1.0 | Circular | 1 | 90 | 75 | 4 | 78% | |
| Example | 44 | 1.0 | Square | 1 | 80 | 75 | 4 | 78% | |
| Example | 45 | 1.0 | Square | 1 | 60 | 75 | 4 | 78% | |
| Example | 46 | 1.0 | Circular | 1 | 60 | 75 | 4 | 78% | |
| Example | 47 | 1.0 | Circular | 1 | 60 | 90 | 4 | 82% | |
| Comparative Example | 48 | 1.0 | Circular | 1 | 60 | 90 | 4 | 82% | |
| Example | 49 | 1.0 | Circular | 1 | 60 | 90 | 4 | 82% | |
| Example | 50 | 1.0 | Circular | 1 | 60 | 90 | 4 | 82% | |
| Comparative Example | 51 | 1.0 | Circular | 1 | 60 | 90 | 4 | 82% | |
| Example | 52 | 1.0 | Circular | 1 | 60 | 90 | 4 | 82% | |
| Example | 53 | 1.0 | Circular | 1 | 60 | 90 | 4 | 82% | |
| Example | 54 | 1.0 | Circular | 1 | 60 | 90 | 4 | 82% | |
| Example | 55 | 1.0 | Circular | 1 | 60 | 90 | 4 | 82% | |
| Example | 56 | 1.0 | Circular | 1 | 60 | 90 | 4 | 82% | |
| Example | 57 | 1.0 | Circular | 0.5 | 30 | 90 | 4 | 82% | |
| Comparative Example | 58 | 1.0 | Circular | 1 | 60 | 90 | 4 | 82% | |

[Table 3-6]

| Table 3 | | Processing conditions | | | | | | | |
|---|---|---|---|---|---|---|---|---|---|
| | | Die section | | Post-treatment section | | | | | |
| | | | | Aging treatment | | Dry treatment | | | |
| | | Die section unevenness | Die section shape | Aging time T (hr) | A x T (RH%*hr) A: RH% T: Aging time | Average ambient temp. (°C) | Drying time at ambient temp. > 50°C (time: hr) | Decrease in dry mass basis moisture content during drying (%) | Comments |
| Example | 59 | 1.0 | Circular | 0.5 | 30 | 90 | 4 | 82% | |
| Example | 60 | 1.0 | Circular | 0.5 | 30 | 90 | 4 | 82% | |
| Example | 61 | 0.3 | Fylfot | 1.3 | 91 | 90 | 4 | 82% | |
| Example | 62 | 0.1 | Fylfot | 1.5 | 120 | 90 | 4 | 82% | |
| Example | 63 | 0.8 | Celtic cross | 1.2 | 78 | 90 | 4 | 82% | |
| Example | 64 | 1.0 | Circular | 0 | 0 | 90 | 4 | 82% | |
| Example | 65 | 1.0 | Circular | 0.1 | 6 | 90 | 4 | 82% | |
| Example | 66 | 1.0 | Circular | 0.3 | 18 | 90 | 4 | 82% | |
| Example | 67 | 1.0 | Circular | 2 | 120 | 90 | 4 | 82% | |
| Example | 68 | 1.0 | Circular | 4 | 240 | 90 | 4 | 82% | |
| Example | 69 | 1.0 | Circular | 0.5 | 30 | 55 | 8 | 67% | |
| Example | 70 | 1.0 | Circular | 0.5 | 30 | 55 | 8 | 67% | |
| Example | 71 | 1.0 | Circular | 1 | 70 | 75 | 4 | 83% | |
| Example | 72 | 1.0 | Circular | 1 | 70 | 75 | 4 | 83% | |
| Example | 73 | 1.0 | Circular | 0.5 | 35 | 85 | 2 | 52% | |
| Example | 74 | 1.0 | Circular | 0.5 | 35 | 85 | 2 | 44% | |
| Example | 75 | 1.0 | Circular | 0.5 | 35 | 85 | 2 | 36% | |
| Example | 76 | 1.0 | Circular | 0.5 | 35 | 85 | 2 | 36% | |
| Example | 77 | 1.0 | Circular | 4 | 320 | 100 | 1 | 98% | |
| Example | 78 | 1.0 | Circular | 4 | 400 | 100 | 1 | 99% | |

[Table 4-1]

| Table 4 | | Characteristics of composition during/after processing | | | Sensory evaluation of post-processing composition | | | |
|---|---|---|---|---|---|---|---|---|
| | | Dry mass basis moisture content of post-drying composition (%) | Degree of gelatinization of starch in post-aging composition (mass %) | Decrease in degree of gelatinization after kneading section (mass %) | Cracks at room temp. storage | Ingredient leakage into boiled water | Overall evaluation | Comments |
| Example | 1 | 10% | 45% | 52% | 5 | 5 | 5 | |
| Example | 2 | 10% | 40% | 57% | 5 | 5 | 5 | |
| Example | 3 | 50% | 40% | 57% | 5 | 5 | 5 | |
| Example | 4 | 25% | 67% | 30% | 5 | 5 | 5 | |
| Comparative Example | 5 | 10% | 91% | 5% | 3 | 1 | 1 | Slightly prone to binding during drying |
| Example | 6 | 23% | 86% | 9% | 4 | 4 | 4 | Slightly prone to binding during drying but acceptable |
| Example | 7 | 21% | 86% | 9% | 4 | 4 | 4 | Slightly prone to binding during drying but acceptable |
| Example | 8 | 20% | 86% | 9% | 4 | 4 | 4 | Slightly prone to binding during drying but acceptable |
| Example | 9 | 25% | 86% | 9% | 4 | 4 | 4 | Slightly prone to binding during drying but acceptable |
| Example | 10 | 10% | 86% | 9% | 4 | 4 | 4 | Slightly prone to binding during drying but acceptable |
| Example | 11 | 10% | 81% | 16% | 5 | 5 | 5 | |
| Example | 12 | 10% | 68% | 26% | 5 | 5 | 5 | |
| Example | 13 | 10% | 35% | 60% | 5 | 5 | 5 | |
| Example | 14 | 10% | 30% | 65% | 5 | 5 | 5 | |
| Example | 15 | 10% | 28% | 67% | 5 | 5 | 4 | |
| Example | 16 | 10% | 46% | 50% | 5 | 5 | 5 | |
| Comparative Example | 17 | 11% | 35% | 10% | 1 | 3 | 1 | |
| Example | 18 | 9% | 43% | 17% | 4 | 4 | 4 | |
| Example | 19 | 10% | 45% | 26% | 5 | 5 | 5 | |
| Example | 20 | 10% | 41% | 45% | 5 | 5 | 5 | |
| Example | 21 | 10% | 42% | 47% | 5 | 5 | 5 | |
| Comparative Example | 22 | 10% | 28% | 10% | 5 | 2 | 2 | |
| Example | 23 | 10% | 32% | 19% | 5 | 4 | 4 | |
| Example | 24 | 10% | 34% | 28% | 5 | 5 | 5 | |
| Example | 25 | 10% | 28% | 17% | 4 | 3 | 3 | |
| Example | 26 | 10% | 42% | 48% | 5 | 5 | 5 | |
| Example | 27 | 10% | 45% | 40% | 5 | 5 | 5 | |
| Example | 28 | 10% | 35% | 43% | 5 | 5 | 5 | |
| Example | 29 | 10% | 45% | 47% | 5 | 5 | 4 | |
| Example | 30 | 10% | 47% | 46% | 5 | 5 | 4 | |
| Example | 31 | 10% | 46% | 46% | 5 | 5 | 3 | |
| Example | 32 | 10% | 41% | 41% | 4 | 5 | 4 | |
| Example | 33 | 10% | 51% | 31% | 4 | 5 | 4 | |
| Example | 34 | 10% | 38% | 60% | 5 | 5 | 5 | |
| Example | 35 | 10% | 48% | 50% | 5 | 5 | 5 | |
| Example | 36 | 30% | 47% | 51% | 5 | 5 | 5 | |
| Example | 37 | 24% | 44% | 52% | 4 | 5 | 4 | |
| Example | 38 | 20% | 54% | 41% | 5 | 5 | 5 | |
| Example | 39 | 9% | 47% | 45% | 5 | 5 | 5 | |
| Example | 40 | 3% | 44% | 51% | 4 | 5 | 4 | |

[Table 4-2]

| Table 4 | | Characteristics of composition during/after processing | | | Sensory evaluation of post-processing composition | | | |
|---|---|---|---|---|---|---|---|---|
| | | Dry mass basis moisture content of post-drying composition (%) | Degree of gelatinization of starch in post-aging composition (mass %) | Decrease in degree of gelatinization after kneading section (mass %) | Cracks at room temp. storage | Ingredient leakage into boiled water | Overall evaluation | Comments |
| Example | 41 | 10% | 45% | 50% | 3 | 5 | 3 | |
| Example | 42 | 12% | 37% | 58% | 5 | 4 | 4 | |
| Example | 43 | 12% | 39% | 56% | 5 | 5 | 5 | |
| Example | 44 | 12% | 41% | 54% | 5 | 5 | 5 | |
| Example | 45 | 12% | 43% | 52% | 5 | 5 | 5 | |
| Example | 46 | 12% | 43% | 52% | 5 | 5 | 5 | |
| Example | 47 | 10% | 48% | 47% | 5 | 5 | 4 | |
| Comparative Example | 48 | 10% | 40% | 57% | 2 | 5 | 2 | |
| Example | 49 | 10% | 43% | 54% | 4 | 5 | 4 | |
| Example | 50 | 10% | 45% | 52% | 4 | 5 | 5 | |
| Comparative Example | 51 | 10% | 45% | 52% | 1 | 3 | 1 | |
| Example | 52 | 10% | 43% | 54% | 5 | 3 | 3 | |
| Example | 53 | 10% | 45% | 52% | 5 | 4 | 4 | |
| Example | 54 | 10% | 44% | 53% | 5 | 5 | 5 | |
| Example | 55 | 10% | 38% | 59% | 5 | 5 | 5 | |
| Example | 56 | 10% | 42% | 55% | 5 | 5 | 5 | |
| Example | 57 | 10% | 55% | 42% | 5 | 5 | 5 | |
| Comparative Example | 58 | 10% | 43% | 54% | 5 | 1 | 1 | |
| Example | 59 | 10% | 61% | 36% | 5 | 3 | 3 | |
| Example | 60 | 10% | 53% | 44% | 5 | 4 | 4 | |
| Example | 61 | 10% | 38% | 56% | 5 | 5 | 5 | |
| Example | 62 | 10% | 33% | 62% | 5 | 5 | 5 | |
| Example | 63 | 10% | 41% | 54% | 5 | 5 | 5 | |
| Example | 64 | 10% | 98% | 0% | 5 | 5 | 4 | Slightly prone to binding during drying |
| Example | 65 | 10% | 87% | 11% | 5 | 5 | 5 | |
| Example | 66 | 10% | 73% | 25% | 5 | 5 | 5 | |
| Example | 67 | 10% | 38% | 60% | 5 | 5 | 5 | |
| Example | 68 | 10% | 32% | 66% | 5 | 5 | 5 | |
| Example | 69 | 10% | 57% | 42% | 5 | 5 | 5 | |
| Example | 70 | 10% | 60% | 39% | 5 | 5 | 5 | |
| Example | 71 | 5% | 70% | 30% | 5 | 5 | 5 | |
| Example | 72 | 5% | 70% | 30% | 5 | 5 | 5 | |
| Example | 73 | 12% | 75% | 25% | 5 | 5 | 5 | |
| Example | 74 | 14% | 78% | 22% | 5 | 5 | 5 | |
| Example | 75 | 16% | 82% | 18% | 5 | 5 | 5 | |
| Example | 76 | 16% | 90% | 10% | 5 | 5 | 5 | |
| Example | 77 | 1% | 93% | 7% | 5 | 5 | 5 | |
| Example | 78 | 1% | 90% | 6% | 5 | 5 | 5 | |

## INDUSTRIAL APPLICABILITY

The present invention is widely applicable in the field of various food products for cooking, and its use is of great value.

**EXPLANATION OF SYMBOLS**

| | |
|---|---|
| 100,102 | Extruder |
| 200,202 | Barrel |
| 300,302 | Screw |
| 400,402 | Feeder |
| 500,502 | Die section |
| 600,602 | Temperature control mechanism |
| 702 | Vent section |
| 802 | Heater |
| 200A,204A,206A,300A,304A,306A | Flight section |
| 200B,206B,300B,306B | Kneader section |
| 204B,304B | Heater section |

**Claims**

1.  A method for producing a starch-containing solid composition for heat cooking using an extruder comprising:

    a screw to be rotated by a motor;
    a barrel surrounding the circumference of the screw;
    a feeder, attached to the base side of the barrel, for injecting a food material; and
    a die section, attached to the tip side of the barrel, for molding and discharging a kneaded food material,
    wherein the screw includes, from the base side to the tip side, at least a flight section and a kneading section, and
    wherein with respect to the total length of the screw, the ratio of the length of the flight section is 50% or more but less than 100%, and the ratio of the length of the kneader section is more than 0% but less than 50%, the method comprising the steps of:

    (i) preparing a composition with

    (1) a dietary fiber content of in terms of wet mass basis 3.0 mass % or more,
    (2) a starch content of in terms of wet mass basis 10.0 mass % or more,
    (3) a protein content of in terms of wet mass basis 3.0 mass % or more,
    (4) a dry mass basis moisture content of 25 mass % or more,
    (5) a degree of gelatinization of starch of 40 mass % or more, and
    (6) a specific surface area per unit volume after ultrasonication of 0. $10m^2$/mL or more;

    (ii) conveying the composition from step (i) by the flight section of the screw; and
    (iii) kneading the composition conveyed by the flight section from step (ii) by the kneader section of the screw at an average temperature of less than 100°C and a pressurized condition of 1.0 MPa or more.

2.  The method according to claim 1, wherein the kneader section is located at a position near the tip side end point of the screw.

3.  The method according to claim 1 or 2, wherein the kneading at step (iii) is carried out under a condition with a specific mechanical energy (SME) value of 300kJ/kg or more.

4.  The method according to any one of claims 1 to 3, further comprising the step of:
    (iv) lowering the degree of gelatinization in the composition after the kneading at step (iii) by 6 mass % or more at the kneader section and beyond.

5.  The method according to claim 4, wherein the lowering of the degree of gelatinization at step (iv) is carried out by treating a composition with a dry mass basis moisture content of 25 mass % or more in an environment with an ambient temperature of 80°C or less and an ambient humidity (RH%) of 60 RH% or more for 0.1 hour or more.

6.  The method according to any one of claims 1 to 5, further comprising the step of:

(v) drying the composition after the kneading at step (iii) until the dry mass basis moisture content decreases by 5% or more before and after the treatment.

7. The method according to any one of claims 1 to 6, wherein the starch contained in the composition from step (i) is derived from an edible plant that have been pre-treated to a maximum temperature reached of 100°C or more under water-containing conditions with a dry mass basis moisture content of 25 mass % or more.

8. The method according to any one of claims 1 to 7, wherein when the composition from step (i) is subjected to [Treatment A] followed by ultrasonication, the resulting particle diameter distribution $d_{90}$ is 450$\mu$m or less.
   [Treatment A] 6 mass % aqueous suspension of the composition is treated with 0.4 volume % of protease and 0.02 mass % of $\alpha$-amylase at 20°C for 3 days.

9. The method according to any one of claims 1 to 8, wherein when the composition from step (i) is subjected to isothermal treatment at 90°C for 15 minutes in 40-fold mass of water and then to [Procedure a] below, and the resulting product is subjected to measurement under [Condition A] below to obtain a molecular weight distribution curve in an interval with molecular weight logarithms of 5.0 or more but less than 8.0 (hereinafter referred to as "MWDC$_{5.0-8.0}$"), the ratio of the area under the curve in an interval with molecular weight logarithms of 5.0 or more but less than 6.5 to the area under the entire curve (hereinafter referred to as "AUC1") is 70% or less.

   [Procedure a] 2.5 mass % aqueous dispersion liquid of the composition is crushed and subjected to proteolytic enzyme treatment, and an ethanol-insoluble and dimethyl sulfoxide-soluble component is obtained.
   [Condition A] The treated product from the [Procedure a] above is dissolved into 1M aqueous solution of sodium hydroxide at a concentration of 0.10 mass % and allowed to stand at 37 °C for 30 minutes, then combined with an equal mass of water and an equal mass of eluent, and subjected to filtration with a 5-$\mu$m filter, and 5mL of the filtrate is subjected to gel filtration chromatography to thereby obtain a molecular weight distribution.

10. The method according to claim 9, wherein in the molecular weight distribution curve (MWDC$_{5.0-8.0}$) of the composition from step (i), the ratio of the area under the curve in an interval with molecular weight logarithms of 6.5 or more but less than 8.0 to the area under the entire curve (hereinafter referred to as "AUC2") is 30% or more.

11. The method according to claim 9 or 10, wherein when the composition from step (i) is subjected to the [Procedure a] above, and the resulting product is subjected to measurement under the [Condition A] above to obtain a molecular weight distribution curve in an interval with molecular weight logarithms of 6.5 or more but less than 9.5 (hereinafter referred to as "MWDC$_{6.5-9.5}$"), the ratio of the area under the curve in an interval with molecular weight logarithms of 6.5 or more but less than 8.0 to the area under the entire curve (hereinafter referred to as "AUC3") is 30% or more.

12. The method according to any one of claims 9 to 11, wherein when the composition from step (i) is subjected to the [Procedure a] above, and the resulting product is subjected to measurement under the [Condition A] above to obtain a molecular weight distribution curve in an interval with molecular weight logarithms of 3.5 or more but less than 6.5 (hereinafter referred to as "MWDC$_{3.5-6.5}$"), the ratio of the area under the curve in an interval with molecular weight logarithms of 3.5 or more but less than 5.0 to the area under the entire curve (hereinafter referred to as "AUC4") is 10% or more.

13. The method according to any one of claims 1 to 12, wherein forced exhaust is carried out at any step prior to extrusion at the die section.

14. The method according to any one of claims 1 to 13, wherein the composition from step (i) satisfies the requirement(s) (a) and/or (b) below.

   (a) When 6 mass % suspension of a crushed product of the composition is observed, the number of starch grain structures observed is 300/mm$^2$ or less.
   (b) When 14 mass % of composition crushed product water slurry is subjected to measurement with a rapid visco-analyzer with elevating the temperature from 50°C to 140°C at a rate of 12.5°C/min, the peak temperature of gelatinization obtained is less than 120°C.

15. The method according to any one of claims 1 to 14, wherein the degree of gelatinization of starch in the composition after the lowering of the degree of gelatinization at step (iv) is 99 mass % or less.

**16.** The method according to any one of claims 1 to 15, wherein the composition comprises an edible plant.

**17.** The method according to claim 16, wherein the ratio of the starch content contained in the edible plant to total starch content in the composition is 30 mass % or more in terms of dry mass basis.

**18.** The method according to claim 16 or 17, wherein the edible plant is pulse and/or cereal.

**19.** The method according to claim 18, wherein the pulse is one or more species of pulse selected from Pisum, Phaseolus, Cajanus, Vigna, Vicia, Cicer, Glycine and Lens species.

**20.** The method according to claim 18, wherein the cereal is one or more species of cereal selected from awa (foxtail millet), hie (Japanese millet), kibi (common millet), sorghum, rye, oat, hatomugi (job's tear), corn, buckwheat, amaranthus, and quinoa.

**21.** The method according to any one of claims 18 to 20, wherein the produced composition contains pulse and/or cereal at a ratio of 10 mass % or more in terms of dry mass basis.

**22.** The method according to any one of claims 1 to 21, wherein the produced composition is a non-swollen product.

**23.** The method according to any one of claims 1 to 22, wherein the degree of unevenness of the flow channel cross-section in the die section is 0.1 or more.

**24.** The method according to any one of claims 1 to 23, further comprising the step of:
(vi) after at least step (iii), crushing the resulting composition to prepare a crushed composition.

**25.** The method according to claim 24, further comprising the step of:
(vii) after step (vi), agglomerating the resulting crushed composition to prepare a crushed composition agglomerate.

**26.** A starch-containing food crushed product for use in preparation of the composition from step (i) of the method according to any one of claims 1 to 25, comprising:

(1) a dietary fiber content of in terms of wet mass basis 3.0 mass % or more;
(2) a starch content of in terms of wet mass basis 10.0 mass % or more;
(3) a protein content of in terms of wet mass basis 3.0 mass % or more;
(4) a dry mass basis moisture content of less than 25 mass %;
(5) a degree of gelatinization of starch of 40 mass % or more; and
(6) a specific surface area per unit volume after ultrasonication of 0. $10m^2$/mL or more.

Figure 1

Direction of extrusion

Figure 2

300

300B

300A

Direction of extrusion

Figure 3

Direction of extrusion

Figure 4

302

306

304

306B  306A  304B  304A

Direction of extrusion

## INTERNATIONAL SEARCH REPORT

| International application No. |
|---|
| **PCT/JP2022/008646** |

**A. CLASSIFICATION OF SUBJECT MATTER**

***A23L 5/00***(2016.01)i; ***A23L 7/109***(2016.01)i
FI: A23L5/00 N; A23L7/109 J; A23L7/109 A

According to International Patent Classification (IPC) or to both national classification and IPC

**B. FIELDS SEARCHED**

Minimum documentation searched (classification system followed by classification symbols)

A23L5/00; A23L7/109

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/FSTA (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2020/166713 A1 (MIZKAN HOLDINGS CO LTD) 20 August 2020 (2020-08-20) claims | 1-26 |
| A | US 5989620 A (UNIVERSITY OF SASKATCHEWAN) 23 November 1999 (1999-11-23) column 1, lines 9-14, column 2, line 56 to column 3, line 10, examples | 1-26 |
| A | WANG, N. et al. Pasta-Like Product from Pea Flour by Twin-Screw Extrusion. JOURNAL OF FOOD SCIENCE. 1999, vol. 64, pp. 671-678 summary, p. 671, right column, paragraph [0002] | 1-26 |
| P, A | WO 2022/030640 A1 (MIZKAN HOLDINGS CO LTD) 10 February 2022 (2022-02-10) claims | 1-26 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 May 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/008646**

| Patent document cited in search report | | | Publication date (day/month/year) | Patent family member(s) | | | Publication date (day/month/year) |
|---|---|---|---|---|---|---|---|
| WO | 2020/166713 | A1 | 20 August 2020 | US | 2021/0169108 | A1 | |
| | | | | claims | | | |
| | | | | EP | 3821719 | A1 | |
| | | | | KR | 10-2021-0003935 | A | |
| | | | | CN | 112351691 | A | |
| | | | | CA | 3110151 | A | |
| | | | | AU | 2020220747 | A | |
| | | | | SG | 11202101707R | A | |
| | | | | BR | 112021003066 | A | |
| | | | | TW | 202045032 | A | |
| | | | | JP | 2021-10381 | A | |
| US | 5989620 | A | 23 November 1999 | CA | 2216295 | A | |
| WO | 2022/030640 | A1 | 10 February 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020166713 A

**Non-patent literature cited in the description**

- Japan Standard Tables for Food Composition. 2015
- About Food Labeling Standards. *Consumer Food Indication,* 30 March 2015, (139
- Pocket Book of Food Additives Labeling. 2011
- Use of a new adhesive film for the preparation of multi-purpose fresh-frozen sections from hard tissues, whole-animals, insects and plants. *Arch. Histol. Cytol.,* 2003, vol. 66 (2), 123-43
- *About Food Labeling Standards,* 30 March 2015
- *CHEMICAL ABSTRACTS,* 67-68-5